# EUROPÄISCHE PATENTSCHRIFT

(11) **EP 1 864 034 B1**
(45) Veröffentlichungstag und Bekanntmachung des Hinweises auf die Patenterteilung: **01.07.2009**
(21) Anmeldenummer: 06707566.3
(22) Anmeldetag: 15.03.2006
(51) Int. Cl.: F16H 3/66

(54) **MEHRSTUFENGETRIEBE**
MULTI-SPEED TRANSMISSION
BOITE DE VITESSE A PLUSIEURS VITESSES

(30) Priorität: 31.03.2005 DE 102005014592
(43) Veröffentlichungstag der Anmeldung: 12.12.2007
(73) Patentinhaber: ZF Friedrichshafen AG, 88038 Friedrichshafen (DE)
(72) Erfinder: DIOSI, Gabor, 88048 Friedrichshafen (DE); HAUPT, Josef, 88069 Tettnang (DE); GUMPOLTSBERGER, Gerhard, 88045 Friedrichshafen (DE); ZIEMER, Peter, 88069 Tettnang (DE); DOEPFERT, Hagen, 88131 Lindau (DE); FIRZLAFF, Uwe, 88690 Uhldingen-Mühlhofen (DE); BREHMER, Martin, 78467 Konstanz (DE); HUTZEL, Christoph, 88682 Salem (DE)
(86) Internationale Anmeldenummer: PCT/EP2006/002379
(87) Internationale Veröffentlichungsnummer: WO 2006/102992

(56) Entgegenhaltungen:
- EP-A- 1 398 537
- DE-A1- 19 949 507
- US-A1- 2004 242 368

## Beschreibung

Die vorliegende Erfindung betrifft ein Mehrstufengetriebe in Planetenbauweise, insbesondere ein Automatgetriebe für ein Kraftfahrzeug, umfassend eine Antriebswelle, eine Abtriebswelle, vier Planetenradsätze, mindestens acht drehbare Wellen und mindestens fünf Schaltelemente, deren selektives Eingreifen verschiedene Übersetzungsverhältnisse zwischen der Antriebswelle und der Abtriebswelle bewirkt, so dass zumindest acht Vorwärtsgänge und zumindest ein Rückwärtsgang realisierbar sind.

Automatgetriebe, insbesondere für Kraftfahrzeuge, umfassen nach dem Stand der Technik Planetenradsätze, die mittels Reibungs- bzw. Schaltelementen, wie etwa Kupplungen und Bremsen geschaltet werden und üblicherweise mit einem einer Schlupfwirkung unterliegenden und wahlweise mit einer Überbrückungskupplung versehenen Anfahrelement, wie etwa einem hydrodynamischen Drehmomentwandler oder einer Strömungskupplung verbunden sind.

Ein derartiges Mehrgang-Automatgetriebe geht beispielsweise aus der DE 102 13 820 A1 hervor. Es umfasst im Wesentlichen eine Antriebswelle und eine Abtriebswelle, die koaxial zueinander angeordnet sind, insgesamt drei Planetenradsätze und sechs Reibschaltelemente. Zur Übertragung der Drehzahl der Antriebswelle auf die Abtriebswelle weist das Getriebe zwei Leistungspfade auf. Zwei der Planetenradsätze bilden einen schaltbaren Hauptradsatz des Getriebes in Form eines Zvrieisteg-Vierwellen-Planetengetriebes, konstruktiv ausgeführt beispielsweise als ein so genannter Ravigneaux-Planetenradsatz oder als ein so genannter Simpson-Planetenradsatz. Das Ausgangselement des Hauptradsatzes ist mit der Abtriebswelle des Getriebes verbunden. Der verbleibende der drei Planetenradsätze ist als einfacher Planetenradsatz ausgeführt und bildet einen nicht schaltbaren Vorschaltradsatz, der mit der Antriebswelle fest verbunden ist und ausgangsseitig eine Drehzahl erzeugt, die neben der Drehzahl der Antriebswelle auf verschiedene Eingangselemente des Hauptradsatzes übertragbar ist. Durch selektives Sperren von jeweils zwei der sechs als Kupplungen und Bremsen ausgeführten Reibschaltelemente sind insgesamt acht Vorwärtsgänge gruppenschaltungsfrei schaltbar, also derart schaltbar, dass bei einem Wechsel von einem Gang in den nachfolgend höheren oder niedrigeren Gang jeweils nur eines der zuvor geschlossenen Schaltelemente geöffnet und ein zuvor offenes Schaltelement geschlossen wird.

Ein axial vergleichsweise kompakt bauendes Mehrstufen-Automatgetriebe ähnlicher Radsatzkonzeption mit einem Vorschaltsatz und einem aus zwei in Art eines Zweisteg-Vierwellen-Planetengetriebes miteinander gekoppelten Planetenradsätzen bestehenden Hauptradsatz ist beispielsweise aus der US 5,429,557 bekannt. In einer besonders gut für den Einbau in ein Fahrzeug mit so genanntem Front-Quer Antrieb geeigneten Ausgestaltung dieses Getriebes sind Antriebs- und Abtriebswelle der Getriebes achsparallel zueinander angeordnet, der Vorschaltsatz in Vorgelegebauweise mit zwei Stimradstufen konstanter Übersetzung mit Overdrive-Charakteristik ausgebildet, und die beiden Planetenradsätze des Hauptradsatz radial ineinandergeschachtelt achsparallel zur Antriebswelle des Getriebes angeordnet. Unter Verwendung von insgesamt fünf Reibschaltelementen sind hierbei allerdings nur sechs Vorwärtsgänge gruppenschaltungsfrei schaltbar.

Des weiteren ist aus der DE 199 49 507 A1 der Anmelderin ein Mehrstufengetriebe bekannt, bei dem an der Antriebswelle zwei nicht schaltbare Vorschaltplanetenradsätze vorgesehen sind, die ausgangsseitig zwei Drehzahlen erzeugen, die neben der Drehzahl der Antriebswelle wahlweise auf verschiedene Eingangselemente eines auf die Abtriebswelle wirkenden, schaltbaren, mehrgliedrigen Hauptradsatzes durch selektives Schließen der verwendeten Schaltelemente derart schaltbar sind, dass zum Umschalten von einem Gang in den jeweils nächstfolgenden höheren oder niedrigeren Gang von den beiden gerade betätigten Schaltelementen jeweils nur ein Schaltelement zu- oder abgeschaltet werden muss. Der Hauptradsatz ist wiederum als Zweisteg-Vierwellen-Planetenradsatz ausgebildet, dessen beide Planetenradsätze über zwei Elemente fest miteinander gekoppelt sind. Unter Verwendung von fünf Schaltelementen sind dabei sieben Vorwärtsgänge gruppenschaltungsfrei schaltbar, unter Verwendung von sechs Schaltelementen sogar neun oder zehn Vorwärtsgänge. Alle vier Planetenradsätze sind koaxial zueinander und koaxial zur Antriebswelle angeordnet.

Im Rahmen der DE 101 15 983 A1 der Anmelderin wird ein Mehrstufengetriebe beschrieben, mit einer Antriebswelle, die mit einem Vorschaltsatz verbunden ist, mit einer Abtriebswelle, die mit einem Nachschaltsatz verbunden ist, und mit maximal sieben Schaltelementen, durch deren wahlweises Schalten mindestens acht Vorwärtsgänge ohne Gruppenschattung schaltbar sind. Der Vorschaltsatz wird aus einem schaltbaren oder nicht schaltbaren Planetenradsatz oder aus maximal zwei nicht schaltbaren, miteinander gekoppelten Planetenradsätzen gebildet. Der Nachschaltsatz ist als Zweisteg-Vierwellen-Getriebe mit zwei schaltbaren Nachschalt-Planetenradsätzen ausgebildet und weist vier freie Wellen auf. Die erste freie Welle dieses Zweisteg-Vierwellen-Getriebes ist mit dem ersten Schaltelement verbunden, die zweite freie Welle mit dem zweiten und dritten Schaltelement, die dritte freie Welle mit dem vierten und fünften Schaltelement und die vierte freie Welle ist mit der Abtriebswelle verbunden. Für ein Mehrstufengetriebe mit insgesamt sechs Schaltelementen wird erfindungsgemäß vorgeschlagen, die dritte freie Welle oder die erste freie Welle des Nachschaltsatzes zusätzlich mit einem sechsten Schaltelement zu verbinden. Für ein Mehrstufengetriebe mit insgesamt sieben Schaltelementen wird erfindungsgemäß vorgeschlagen, die dritte freie Welle zusätzlich mit einem sechsten Schaltelement und die erste freie Welle zusätzlich mit einem siebten Schaltelement zu verbinden. Auch hier sind alle Planetenradsätze des Getriebes koaxial zueinander angeordnet.

Mehrere andere Mehrstufengetriebe sind beispielsweise auch aus der DE 101 15 995 A1 der Anmelderin bekannt, bei denen vier schaltbare, miteinander gekoppelte und koaxial zueinander angeordnete Planetenradsätze und sechs oder sieben reibschlüssige Schaltelemente vorgesehen sind, durch deren selektives Schließen eine Drehzahl einer Antriebswelle des Getriebes derart auf eine Abtriebswelle des Getriebes übertragbar ist, dass neun oder elf Vorwärtsgänge und zumindest ein Rückwärtsgang schaltbar sind. Je nach Getriebeschema sind in jedem Gang zwei oder drei Schaltelemente geschlossen, wobei bei einem Wechsel von einem Gang in den jeweils nächstfolgend höheren oder nächstfolgend niedrigeren Gang zur Vermeidung von Gruppenschaltungen jeweils nur ein geschlossenes Schaltelement geöffnet und ein zuvor nicht geschlossenes Schaltelement zugeschaltet wird.

Der vorliegenden Erfindung liegt die Aufgabe zugrunde, ein Mehrstufengetriebe der eingangs genannten Art mit zumindest acht Vorwärtsgängen und zumindest einem Rückwärtsgang vorzuschlagen, bei dem unter Verwendung von insgesamt vier Planetenradsätzen eine möglichst geringe Anzahl an Schaltelementen benötigt wird. Dabei sollen alle Vorwärtsgänge bei sequentieller Schaltweise gruppenschaltungsfrei schaltbar sein, d.h. bei einem Wechsel von einem Vorwärtsgang in den nachfolgend höheren oder in den nachfolgende niedrigeren Vorwärtsgang soll jeweils nur ein zuvor geschlossenes Schaltelement geöffnet und ein zuvor nicht geöffnetes Schaltelement geschlossen werden. Zudem soll das Getriebe eine große Spreizung bei vergleichsweise harmonischer Gangabstufung aufweisen und in den Hauptfahrgängen einen günstigen Wirkungsgrad - also vergleichsweise geringe Schlepp- und Verzahnungsverluste - aufweisen. Das Getriebe soll insbesondere für die Anwendung mit nicht koaxialem An- und Abtrieb des Getriebes geeignet sein, entsprechend soll die axiale Baulänge des Getriebes möglichst klein sein.

Diese Aufgabe wird erfindungsgemäß durch ein Mehrstufengetriebe mit den Merkmalen des Patentanspruchs 1 gelöst. Weitere vorteilhafte Ausgestaltungen und Weiterbildungen gehen aus den Unteransprüchen hervor.

Demnach wird ein erfindungsgemäßes Mehrstufengetriebe in Planetenbauweise vorgeschlagen, welches eine Antriebswelle, eine Abtriebswelle, vier Planetenradsätze, mindestens acht drehbare Wellen sowie fünf Schaltelemente - zwei Bremsen und drei Kupplungen - aufweist, deren selektives Eingreifen verschiedene Übersetzungsverhältnisse zwischen der Antriebswelle und der Abtriebswelle bewirkt, so dass acht Vorwärtsgänge und ein Rückwärtsgang realisierbar sind.

Hinsichtlich der kinematischen Koppelung der Radsatzelemente untereinander und zu den Wellen des Getriebes wird gemäß der Erfindung folgendes vorgesehen: Ein Steg des vierten Planetenradsatzes und die Antriebswelle sind verdrehfest miteinander verbunden und bilden die erste drehbare Welle des Getriebes. Ein Steg des dritten Planetenradsatzes und die Abtriebswelle sind miteinander verbunden und bilden die zweite drehbare Welle des Getriebes, wobei zwischen diesem Steg des dritten Planetenradsatzes und der Abtriebswelle ein Stirn- oder Kettentrieb und ein Differential kinematisch zwischengeschaltet sein können. Ein Sonnenrad des dritten Planetenradsatzes und ein Sonnenrad des vierten Planetenradsatzes sind verdrehfest miteinander verbunden und bilden die dritte drehbare Welle des Getriebes. Ein Hohlrad des ersten Planetenradsatzes bildet die vierte drehbare Welle des Getriebes. Ein Hohlrad des zweiten Planetenradsatzes und ein Sonnenrad des ersten Planetenradsatzes sind verdrehfest miteinander verbunden und bilden die fünfte drehbare Welle des Getriebes. Ein Steg des ersten Planetenradsatzes und ein Hohlrad des dritten Planetenradsatzes sind verdrehfest miteinander verbunden und bilden die sechste drehbare Welle des Getriebes. Ein Sonnenrad des zweiten Planetenradsatzes und ein Hohlrad des vierten Planetenradsatzes sind verdrehfest miteinander verbunden und bilden die siebte drehbare Welle des Getriebes. Ein Steg des zweiten Planetenradsatzes bildet die achte drehbare Welle des Getriebes.

Alle vier Planetenradsätze sind vorzugsweise als so genannte Minus-Planetenradsätze ausgeführt, deren jeweilige Planetenräder mit Sonnenrad und Hohlrad des jeweiligen Planetenradsatzes kämmen.

In einer bevorzugten Ausgestaltung der Erfindung ist hinsichtlich der räumlichen Anordnung der vier Planetenradsätze im Gehäuse des Getriebes vorgesehen, dass der zweite und vierte Planetenradsatz in axialer Richtung gesehen in einer Ebene radial übereinander angeordnet bzw. radial ineinandergeschachtelt sind. Dabei ist der vierte Planetenradsatz zentrisch innerhalb des zweiten Planetenradsatzes angeordnet, wobei das Hohlrad des (radial inneren) vierten Planetenradsatzes und das Sonnenrad des (radial äußeren) zweiten Planetenradsatzes zu einem Bauteil zusammengefasst sind. Weiterhin ist gemäß der Erfindung vorgesehen, dass diese beiden radial ineinandergeschachtelten Planetenradsätze räumlich gesehen axial zwischen den anderen beiden Planetenradsätzen angeordnet sind.

Entsprechend der erfindungsgemäßen kinematischen Kopplung der Radsatzelemente, Schaltelemente, Antriebswelle und Abtriebswelle ergibt sich eine günstige Gangabstufung erst bei einer speziellen Kombination der Standgetriebeübersetzungen der einzelnen Planetenradsätze. Erst dadurch, dass im vorliegenden Fall die Standübersetzung des zweiten Planetenradsatzes betragsmäßig hinreichend klein und gleichzeitig die Standübersetzung des vierten Planetenradsatzes betragsmäßig hinreichend groß ist, ist die Voraussetzung für die erfindungsgemäße radiale Verschachtelung des zweiten und vierten Planetenradsatzes gegeben: Die Standübersetzung des zweiten Planetenradsatzes im Bereich von minus 1,55 ermöglicht ein Sonnenrad mit vergleichsweise großem Durchmesser, ohne dass die Planetenräder des (radial äußeren) zweiten Planetenradsatzes mit zu hohen Drehzahlen rotieren; die Standübersetzung des vierten Planetenradsatzes im Bereich von minus 2,20 ermöglicht ein Hohlrad mit vergleichsweise kleinem Durchmesser, ohne dass das Sonnenrad und die Planetenräder des (radial inneren) vierten Planetenradsatzes vom Durchmesser her zu klein werden, um die geforderten Drehmomente übertragen zu können. Dadurch, dass das Hohlrad des (radial inneren) vierten Planetenradsatzes direkt mit dem Sonnenrad des (radial äußeren) zweiten Planetenradsatzes verbunden ist, können dieses Hohlrad und dieses Sonnenrad auch zu einem einzigen Bauelement zusammengefasst werden, wodurch sich der radiale Bauraum dieser aus dem zweiten und vierten Planetenradsatz gebildeten Radsatzgruppe weiter reduziert.

Hinsichtlich der kinematischen Anbindung der fünf Schaltelemente an die verschiedenen Elemente des Planetenradsätze und an die Antriebswelle des Getriebes ist vorgesehen, dass das erste Schaltelement im Kraftfluss zwischen der dritten Welle und einem Gehäuse des Getriebes angeordnet ist, dass das zweite Schaltelement im Kraftfluss zwischen der vierten Welle und dem Gehäuse des Getriebes angeordnet ist, und dass das dritte Schaltelement im Kraftfluss zwischen der fünften und der ersten Welle angeordnet ist. Weiterhin ist gemäß der Erfindung das vierte Schaltelement im Kraftfluss entweder zwischen der achten und der zweiten Welle oder aber zwischen der achten und der sechsten Welle angeordnet. Das fünfte Schaltelement ist gemäß der Erfindung zum Verblocken des zweiten Planetenradsatzes vorgesehen und ist dazu im Kraftfluss entweder zwischen der siebten und der fünften Welle oder aber zwischen der siebten und der achten Welle oder aber zwischen der fünften und der achten Welle angeordnet. Durch diese verschiedenen kinematischen Kopplungen der Schaltelemente an die verschiedenen Wellen des Getriebes ergibt sich erfindungsgemäß somit hinsichtlich der kinematischen Bauteilkopplung eine ganze Getriebefamilie.

Der erste Vorwärtsgang ergibt sich durch Schließen des ersten, zweiten und dritten Schaltelementes, der zweite Vorwärtsgang durch Schließen des ersten, zweiten und fünften Schaltelementes, der dritte Vorwärtsgang durch Schließen des zweiten, dritten und fünften Schaltelementes, der vierte Vorwärtsgang durch Schließen des zweiten, vierten und fünften Schaltelementes, der fünfte Vorwärtsgang durch Schließen des zweiten, dritten und vierten Schaltelementes, der sechste Vorwärtsgang durch Schließen des dritten, vierten und fünften Schaltelementes, der siebte Vorwärtsgang durch Schließen des ersten, dritten und vierten Schaltelementes und der achte Vorwärtsgang durch Schließen des ersten, vierten und fünften Schaltelementes. Ein Rückwärtsgang ergibt sich durch Schließen des ersten, zweiten und vierten Schaltelementes.

Durch die Verwendung von nur fünf Schaltelementen in Verbindung mit der erfindungsgemäßen Anordnung und Verschachtelung der vier Planetenradsätze wird ein für ein 8-Gang-Automatgetriebe mit vier einzelnen gangbildenden Planetenradsätzen eine außerordentlich kurze axial Baulänge des Getriebes erzielt. Der Baulängenbedarf der vier Planetenradsätze ist hierbei nicht größer als der Baulängenbedarf für drei axial nebeneinander angeordneten Einzel-Planetenradsätze. Insofern ist das erfindungsgemäße Automatgetriebe besonders gut geeignet für den Einbau in ein Fahrzeug mit quer zur Fahrtrichtung eingebautem Antriebsmotor und achsparallelem An- und Abtrieb.

Durch die erfindungsgemäße Ausgestaltung des Mehrstufengetriebes ergeben sich insbesondere für Personenkraftwagen geeignete Übersetzungen mit großer Gesamtspreizung in harmonischer Gangabstufung, wodurch ein guter Fahrkomfort und eine signifikante Verbrauchsabsenkung erzielt werden.

Darüber hinaus wird mit dem erfindungsgemäßen Mehrstufengetriebe durch eine geringe Anzahl an Schaltelementen; nämlich zwei Bremsen und drei Kupplungen, der Bauaufwand vergleichsweise gering. In vorteilhafter Weise ist es mit dem erfindungsgemäßen Mehrstufengetriebe möglich, ein Anfahren mit einem hydrodynamischen Wandler, einer externen Anfahrkupplung oder auch mit sonstigen geeigneten externen Anfahrelementen durchzuführen. Es ist auch denkbar, einen Anfahrvorgang mit einem im Getriebe integrierten Anfahrelement zu ermöglichen. Vorzugsweise eignet sich hierfür eine der beiden Bremsen, die im ersten und zweiten Vorwärtsgang und im Rückwärtsgang betätigt wird.

Darüber hinaus ergibt sich bei dem erfindungsgemäßen Mehrstufengetriebe ein guter Wirkungsgrad in allen Gängen einerseits infolge geringer Schleppverluste, da in jedem Gang jeweils nur zwei Schaltelemente nicht im Eingriff sind, andererseits auch infolge geringer Verzahnungsverluste in den einfach aufgebauten Einzel-Planetenradsätzen.

Außerdem ist das erfindungsgemäße Mehrstufengetriebe derart konzipiert, dass eine Anpassbarkeit an unterschiedliche Triebstrangausgestaltungen sowohl in Kraftflussrichtung als auch in räumlicher Hinsicht ermöglicht wird. Besonders gut eignet sich das Getriebe für den Einbau in ein Kraftfahrzeug mit quer zur Fahrtrichtung eingebautem Antriebsmotor, also mit achsparalleler Anordnung von Antrieb und Abtrieb.

In Verbindung mit der erfindungsgemäßen räumlichen Anordnung der vier Planetenradsätze relativ zueinander und in Verbindung mit einer nicht koaxialen Anordnung von Antrieb und Abtrieb des Getriebes ist es zweckmäßig, einen im Kraftfluss zwischen dem Steg des dritten Planetenradsatzes und der Abtriebswelle vorgesehene Stirn- oder Kettentrieb räumlich gesehen zumindest teilweise auf der Seite des dritten Planetenradsatzes anzuordnen, die der aus dem zweiten und vierten Planetenradsatz gebildeten Radsatzgruppe gegenüber liegt, und dass das erste Schaltelement räumlich gesehen auf der Seite des Stirn- oder Kettentriebs anzuordnen, die dem dritten Planetenradsatz gegenüber liegt. Weiterhin ist es hierbei zweckmäßig, zumindest das Lamellenpaket des vierten Schaltelementes räumlich gesehen in einem Bereich auf der Seite des dritten Planetenradsatzes anzuordnen, die dem ersten Schaltelement gegenüber liegt, vorzugsweise axial unmittelbar angrenzend an den dritten Planetenradsatz, räumlich gesehen entweder axial zwischen dem dritten und zweiten Planetenradsatz oder radial über dem zweiten Planetenradsatz. Weiterhin ist es zweckmäßig, das zweite Schaltelement räumlich gesehen in einem Bereich nahe dem ersten Planetenradsatz anzuordnen, vorzugsweise in einem Bereich radial über dem ersten Planetenradsatz. Weiterhin ist es hierbei zweckmäßig, das dritte Schaltelement räumlich gesehen ebenfalls in einem Bereich nahe dem ersten Planetenradsatz anzuordnen. Das fünfte Schaltelement kann räumlich gesehen wahlweise in einem Bereich axial zwischen dem ersten und zweiten Planetenradsatz angeordnet sein oder aber auf der Seite des ersten Planetenradsatzes, die dem zweiten Planetenradsatz gegenüber liegt.

Zur Vereinfachung der Montage des erfindungsgemäßen Getriebes bietet sich an, zwei der drei Kupplungen als vormontierbare Baugruppe zusammenzufassen. Hierbei sind die folgenden zwei Ausgestaltungs-Varianten besonders sinnvoll:
■ Zusammenfassung des fünften und dritten Schaltelementes zu einer vormontierbaren Baugruppe, die vorzugsweise deren Servoeinrichtungen zum Betätigen des jeweiligen Lamellenpaketes umfasst, wobei dann beide Servoeinrichtungen an der mit diesen beiden Kupplungen verbundenen fünften Welle des Getriebes axial verschiebbar gelagert sind und beide Servoeinrichtungen vorzugsweise einen eigenen dynamischen Druckausgleich aufweisen; oder
■ Zusammenfassung des fünften und vierten Schaltelementes zu einer vormontierbaren Baugruppe, die vorzugsweise deren Servoeinrichtungen zum Betätigen des jeweiligen Lamellenpaketes umfasst, wobei dann beide Servoeinrichtungen an der mit diesen beiden Kupplungen verbundenen achten Welle des Getriebes axial verschiebbar gelagert sind und beide Servoeinrichtungen vorzugsweise einen eigenen dynamischen Druckausgleich aufweisen, und wobei das fünfte Schaltelement dann entweder die schaltbare Verbindung zwischen der achten und fünften Welle oder aber die schaltbare Verbindung zwischen der achten und siebten Welle des Getriebes bildet.

Im Prinzip sind somit folgende vorteilhafte räumliche Anordnungen der drei Kupplungen relativ zu den Planetenradsätzen möglich:
■ aus dem dritten und fünften Schaltelement gebildete Kupplungs-Baugruppe axial zwischen der aus dem zweiten und vierten Planetenradsatz gebildeten Radsatz-Baugruppe und dem ersten Planetenradsatz, viertes Schaltelement axial zwischen dem dritten Planetenradsatz und der aus dem zweiten und vierten Planetenradsatz gebildeten Radsatz-Baugruppe;
■ aus dem dritten und fünften Schaltelement gebildete Kupplungs-Baugruppe und viertes Schaltelement axial zwischen der aus dem zweiten und vierten Planetenradsatz gebildeten Radsatz-Baugruppe und dem ersten Planetenradsatz,
■ aus dem dritten und fünften Schaltelement gebildete Kupplungs-Baugruppe auf der Seite des ersten Planetenradsatzes, die der aus dem zweiten und vierten Planetenradsatz gebildeten Radsatz-Baugruppe abgewandt ist, viertes Schaltelement axial zwischen dem dritten Planetenradsatz und der aus dem zweiten und vierten Planetenradsatz gebildeten Radsatz-Baugruppe;
■ aus dem dritten und fünften Schaltelement gebildete Kupptungs-Baugruppe auf der Seite des ersten Planetenradsatzes, die der aus dem zweiten und vierten Planetenradsatz gebildeten Radsatz-Baugruppe abgewandt ist, viertes Schaltelement axial zwischen der aus dem zweiten und vierten Planetenradsatz gebildeten Radsatz-Baugruppe und dem ersten Planetenradsatz;
■ aus dem dritten und fünften Schaltelement gebildete Kupplungs-Baugruppe auf der Seite der aus dem zweiten und vierten Planetenradsatz gebildeten Radsatz-Baugruppe, die dem dritten bzw. ersten Planetenradsatz abgewandt ist, viertes Schaltelement auf der Seite der aus dem zweiten und vierten Planetenradsatz gebildeten Radsatz-Baugruppe, die der aus dem dritten und fünften Schaltelement gebildeten Kupplungs-Baugruppe gegenüber liegt, wobei die genannte Kupplungs-Baugruppe und das vierte Schaltelement - vorzugweise unmittelbar an die genannten Rädsatz-Baugruppe angrenzen;
■ aus dem vierten und fünften Schaltelement gebildete Kupplungs-Baugruppe axial zwischen dem dritten Planetenradsatz und der aus dem zweiten und vierten Planetenradsatz gebildeten Radsatz-Baugruppe, drittes Schaltelement axial zwischen der aus dem zweiten und vierten Planetenradsatz gebildeten Radsatz-Baugruppe und dem ersten Planetenradsatz;
■ aus dem vierten und fünften Schaltelement gebildete Kupplungs-Baugruppe axial zwischen dem dritten Planetenradsatz und der aus dem zweien und vierten Planetenradsatz gebildeten Radsatz-Baugruppe, drittes Schaltelement auf der Seite des ersten Planetenradsatzes, die der aus dem zweiten und vierten Planetenradsatz gebildeten Radsatz-Baugruppe abgewandt ist;
■ aus dem vierten und fünften Schaltelement gebildete Kupplungs-Baugruppe und drittes Schaltelement axial zwischen der aus dem zweiten und vierten Planetenradsatz gebildeten Radsatz-Baugruppe und dem ersten Planetenradsatz; oder
■ aus dem vierten und fünften Schaltelement gebildete Kupplungs-Baugruppe axial zwischen der aus dem zweiten und vierten Planetenradsatz gebildeten Radsatz-Baugruppe und dem ersten Planetenradsatz, drittes Schaltelement auf der Seite des ersten Planetenradsatzes, die der aus dem zweiten und vierten Planetenradsatz gebildeten Radsatz-Baugruppe abgewandt ist.

Dabei können die Lamellenpakete der aus dem dritten und fünften bzw. vierten und fünften Schaltelement gebildete Kupplungs-Baugruppe je nach zur Verfügung stehendem Bauraum nebeneinander oder übereinander angeordnet sein, wahlweise radial oberhalb oder axial neben den Planetenradsätzen. Die Servoeinrichtungen des dritten und fünften bzw. vierten und fünften Schaltelementes der Kupplungs-Baugruppe können wahlweise (zumindest weitgehend) axial nebeneinander oder (zumindest weitgehend) radial übereinander angeordnet sein. Die Betätigungsrichtung der Servoeinrichtungen des dritten und fünften bzw. vierten und fünften Schaltelementes der Kupplungs-Baugruppe beim Schließen der jeweiligen Kupplung kann wahlweise axial hin zum Stirn- bzw. Kettentrieb oder axial vom Stirn- bzw. Kettentrieb weg erfolgen. Für das dritte und fünfte bzw. vierte und fünfte Schaltelement der Kupplungs-Baugruppe ist vorzugsweise ein gemeinsamer Lamellenträger vorgesehen, beispielsweise ein für beide Kupplungen der Kupplungs-Baugruppe gemeinsamer Außenlamellenträger oder eine Kombination aus Innen- und Außenlamellenträger für die beiden Kupplungen der Kupplungs-Baugruppe als Teil der fünften bzw. achten Welle des Getriebes.

Die Erfindung wird im Folgenden anhand der Zeichnungen beispielhaft näher erläutert. Gleiche bzw. vergleichbare Bauteile sind dabei auch mit gleichen Bezugszeichen versehen. Es zeigen:
- Figur 1: eine schematische Darstellung eines ersten Ausführungsbei- spiels eines erfindungsgemäßen Mehrstufengetriebes;
- Figur 2: ein beispielhaftes Schaltschema für das Mehrstufengetriebe gemäß Figur 1;
- Figur 3: ein beispielhafte Detail-Konstruktion für das Mehrstufenge- triebe gemäß Figur 1;
- Figur 4: eine beispielhafte erste Bauteilanordnungs-Variante für das Mehrstufengetriebe gemäß Figur 1;
- Figur 5: eine beispielhafte zweite Bauteilanordnungs-Variante für das Mehrstufengetriebe gemäß Figur 1;
- Figur 6: eine beispielhafte dritte Bauteilanordnungs-Variante für das Mehrstufengetriebe gemäß Figur 1;
- Figur 7: eine beispielhafte vierte Bauteilanordnungs-Variante für das Mehrstufengetriebe gemäß Figur 1;
- Figur 8: eine beispielhafte fünfte Bäuteilanordnungs-Variante für das Mehrstufengetriebe gemäß Figur 1;
- Figur 9: eine beispielhafte Detailkonstruktion der Bauteilanordnungs- Variante gemäß Figur 6;
- Figur 10: eine beispielhafte sechste Bauteilanordnungs-Variante für das Mehrstufengetriebe gemäß Figur 1;
- Figur 11: eine beispielhafte siebte Bauteilanordnungs-Variante für das Mehrstufengetriebe gemäß Figur 1;
- Figur 12: eine schematische Darstellung eines zweiten Ausführungs- beispiels eines erfindungsgemäßen Mehrstufengetriebes;
- Figur 13: eine vereinfachte schematische Darstellung des Mehrstufen- getriebes gemäß Figur 12;
- figur 14: eine schematische Darstellung eines dritten Ausführungsbei- spiels eines erfindungsgemäßen Mehrstufengetriebes;
- Figur 15: eine schematische Darstellung eines vierten Ausführungs- beispiels eines erfindungsgemäßen Mehrstufengetriebes;
- Figur 16: eine tabellarische Übersicht sinnvoller Variationen der räum- lichen Anordnung von Getriebeelementen relativ zueinander;
- Figur 17: eine beispielhafte achte Bauteilanordnungs-Variante für das Mehrstufengetriebe gemäß Figur 1;
- Figur 18: eine beispielhafte neunte Bauteilanordnungs-Variante für das Mehrstufengetriebe gemäß Figur 1;
- Figur 19: eine beispielhafte zehnte Bauteifanordnüngs-Variante für das Mehrstufengetriebe gemäß Figur 1;
- Figur 20: eine beispielhafte elfte Bauteilanordnungs-Variante für das Mehrstufengetriebe gemäß Figur 1;
- Figur 21: eine beispielhafte zwölfte Bauteilanordnungs-Variante für das Mehrstufengetriebe gemäß Figur 1;
- Figur 22: eine beispielhafte dreizehnte Bauteilanordnungs-Variante für das Mehrstufengetriebe gemäß Figur 1;
- Figur 23: eine beispielhafte vierzehnte Bauteilanordnungs-Variante für das Mehrstufengetriebe gemäß Figur 1;
- Figur 24: eine beispielhafte fünfzehnte Bauteilanordnungs-Variante für das Mehrstufengetriebe gemäß Figur 1;
- Figur 25: eine beispielhafte erste Bauteilanordnungs-Variante für das Mehrstufengetriebe gemäß Figur 12 bzw. Figur 13;
- Figur 26: eine beispielhafte zweite Baüteilanordnungs-Variante für das Mehrstufengetriebe gemäß Figur 12 bzw. Figur 13;
- Figur 27: eine beispielhafte dritte Bauteilanordnungs-Variante für das Mehrstufengetriebe gemäß Figur 12 bzw. Figur 13; und
- Figur 28: eine beispielhafte vierte Bauteilanordnungs-Variante für das Mehrstufengetriebe gemäß Figur 12 bzw. Figur 13.

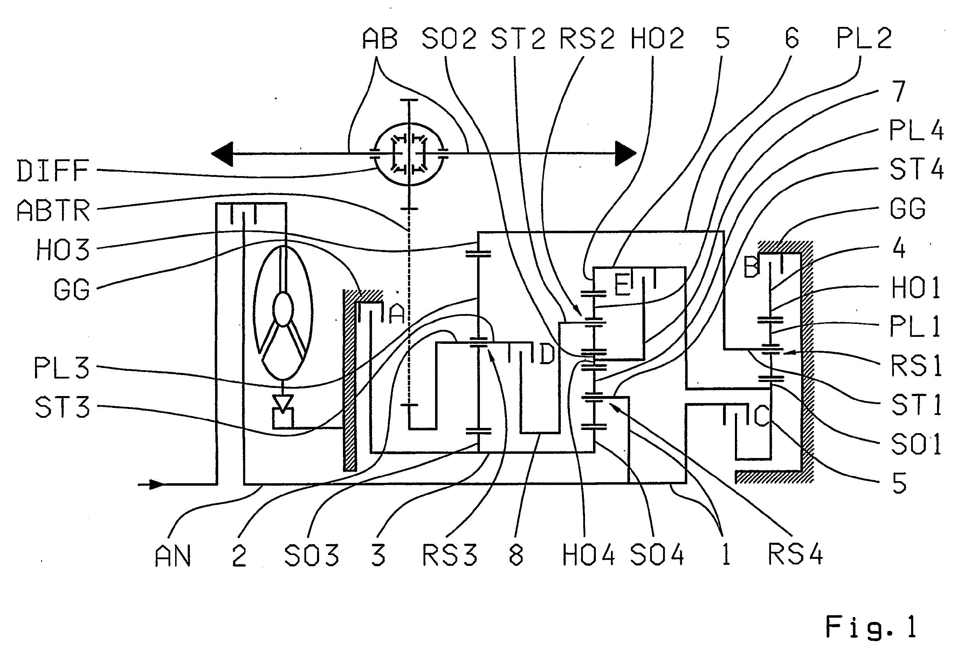

In Figur 1 ist ein erstes Ausführungsbeispiel eines erfindungsgemäßen Mehrstufengetriebes dargestellt. Das Getriebe umfasst eine Antriebswelle AN, und eine Abtriebswelle AB, sowie vier Planetenradsätze RS1, RS2, RS3, RS4 und fünf Schaltelemente A, B, C, D, E, die alle in einem Gehäuse GG des Getriebes angeordnet sind. Alle vier Planetenradsätze RS1, RS2, RS3, RS4 sind als Minus-Planetenradsätze ausgebildet. Ein Minus-Planetenradsatz weist bekanntlich Planetenräder auf, die mit Sonnen- und Hohlrad dieses Planetensatzes kämmen. Die Hohlräder der vier Planetenradsätze RS1, RS2, RS3, RS4 sind mit HO1, H02, HO3 und HO4 bezeichnet, die Sonnenräder mit SO1, S02, SO3 und SO4, die Planetenräder mit PL1, PL2, PL3 und PL4, und die Stege, an denen die genannten Planetenräder rotierbar gelagert sind, mit ST1, ST2, ST3 und ST4. Die Schaltelemente A und B sind als Bremsen ausgebildet, die im dargestellten Ausführungsbeispiel beide als reibschlüssig schaltbare Lamellenbremse ausgeführt sind, selbstverständlich in einer anderen Ausgestaltung auch als reibschlüssig schaltbare Bandbremse oder beispielsweise auch als formschlüssig schaltbare Klauen- oder Konusbremse ausgeführt sein können. Die Schaltelemente C, D und E sind als Kupplungen ausgebildet, die im dargestellten Ausführungsbeispiel alle als reibschlüssig schaltbare Lamellenkupplung ausgeführt sind, selbstverständlich in einer anderen Ausgestaltung beispielsweise auch als formschlüssig schaltbare Klauen- oder-Konuskupplung ausgeführt sein können.

Mit diesen fünf Schaltelementen A bis E ist ein selektives Schalten von acht Vorwärtsgängen und zumindest einem Rückwärtsgang realisierbar. Das erfindungsgemäße Mehrstufengetriebe weist insgesamt zumindest acht drehbare Wellen auf, die mit 1 bis 8 bezeichnet sind.

Hinsichtlich der kinematischen Kopplung der einzelnen Elemente der vier Planetenradsätze RS1, RS2, RS3, RS4 untereinander und zur Antriebs- und Abtriebswelle AN, AB ist bei dem Mehrstufengetriebe gemäß Figur 1 folgendes vorgesehen: Der Steg ST4 des vierten Planetenradsatzes RS4 und die Antriebswelle AN sind verdrehfest miteinander verbunden und bilden die erste Welle 1 des Getriebes. Der Steg ST3 des dritten Planetenradsatzes RS3 und die Abtriebswelle AB sind miteinander verbunden und bilden die zweite Welle 2 des Getriebes, wobei zwischen diesem Steg ST3 und der Abtriebswelle AB eine als Kettentrieb oder als Stimtrieb ausgebildete Abtriebsstufe ABTR und ein Differential DIFF kinematisch zwischengeschaltet sind. Das Sonnenrad SO3 des dritten Planetenradsatzes RS3 und das Sonnenrad S04 des vierten Planetenradsatzes RS4 sind verdrehfest miteinander verbunden und bilden die dritte Welle 3 des Getriebes. Das Hohlrad HO1 des ersten Planetenradsatzes RS1 bildet die vierte Welle 4 des Getriebes. Das Hohlrad H02 des zweiten Planetenradsatzes RS2 und das Sonnenrad SO1 des ersten Planetenradsatzes RS1 sind verdrehfest miteinander verbunden und bilden die fünfte Welle 5 des Getriebes. Der Steg ST1 des ersten Planetenradsatzes RS1 und das Hohlrad H03 des dritten Planetenradsatzes RS3 sind verdrehfest miteinander verbunden und bilden die sechste Welle 6 des Getriebes. Das Sonnenrad S02 des zweiten Planetenradsatzes RS2 und das Hohlrad H04 des vierten Planetenradsatzes RS4 sind verdrehfest miteinander verbunden und bilden die siebte Welle 7 des Getriebes. Der Steg ST2 des zweiten Planetenradsatzes RS2 bildet die achte Welle 8 des Getriebes.

Hinsichtlich der Kopplung der fünf Schaltelemente A bis E an die so beschriebenen Wellen 1 bis 8 des Getriebes ist bei dem Mehrstufengetriebe gemäß Figur 1 folgendes vorgesehen: Das erste Schaltelement A ist im Kraftfluss zwischen der dritten Welle 3 und dem Getriebegehäuse GG angeordnet. Das zweite Schaltelement B ist im Kraftfluss zwischen der vierten Welle 4 und dem Getriebegehäuse GG angeordnet. Das dritte Schaltelement C ist im Kraftfluss zwischen der fünften Welle 5 und der ersten Welle 1 angeordnet. Das vierte Schaltelement D ist im Kraftfluss zwischen der achten Welle 8 und der zweiten Welle 2 angeordnet ist. Das fünfte Schaltelement E schließfach ist im Kraftfluss zwischen der siebten Welle 7 und der fünften Welle 5 angeordnet.

Ist das fünfte Schaltelement E geschlossen, so ist der zweite Planetenradsatzes RS2 in sich verblockt, d.h. Sonnenrad S02 und Hohlrad H02 des zweiten Planetenradsatzes RS2 rotieren mit gleicher Drehzahl. Dem Fachmann ist klar, dass diese Funktion auch mittels einer gegenüber Figur 1 anderen kinematischen Anbindung der Kupplung E an den Planetenradsatz RS2 darstellbar ist; entsprechend kann in einer anderen Ausgestaltung des Getriebes vorgesehen sein, dass die Kupplung E abweichend von Figur 1 im Kraftfluss zwischen Steg ST2 und Hohlrad H02 des zweiten Planetenradsatzes RS2 - also im Kraftfluss zwischen Welle 8 und Welle 5 des Getriebes - oder im Kraftfluss zwischen Steg ST2 und Sonnenrad SO2 der zweiten Planetenradsatzes RS2 - also im Kraftfluss zwischen Welle 8 und Welle 7 des Getriebes - angeordnet ist.

In dem in Figur 1 dargestellten Ausführungsbeispiel ist der dritte Planetenradsatz RS3 auf der dem Antrieb des Getriebes zugewandten Seite des Getriebes und der erste Planetenradsatz RS1 auf der dem Antrieb des Getriebes gegenüberliegenden Seite des Getriebes angeordnet, wobei Antriebswelle AN und Abtriebswelle AB des Getriebes beispielhaft achsparallel zueinander angeordnet sind. Der zweite und vierte Planetenradsatz RS2, RS4 sind in axialer Richtung gesehen in einer Ebene radial übereinander angeordnet bzw. radial ineinandergeschachtelt, derart, dass der vierte Planetenradsatz RS4 zentrisch innerhalb des zweiten Planetenradsatzes, RS2 angeordnet ist. Dabei sind Hohlrad HO4 des radial inneren Planetenradsatzes RS4 und Sonnenrad SO2 des radial äußeren Planetenradsatzes RS2 zu einem gemeinsamen Bauteil zusammengefasst. Die Radsatzgruppe mit den beiden radial ineinandergeschachtelten Planetenradsätze RS2, RS4 ist räumlich gesehen in einem Bereich axial zwischen den anderen beiden Planetenradsätzen RS3, RS1 angeordnet.

Die in Verbindung mit der achsparallelen Anordnung von Antriebs- und Abtriebswelle AN, AB notwendige Abtriebsstufe ABTR (in Bauform eines Kettentrieb oder eines Stimtriebs) ist im dargestellten Beispiel antriebsnah angeordnet, hier beispielhaft räumlich gesehen axial unmittelbar angrenzend an den dritten Planetenradsatz RS3 auf dessen der Radsatzgruppe mit den beiden radial ineinandergeschachtelten Planetenradsätze RS2, RS4 abgewandten Seite. Im dargestellten Ausführungsbeispiel ist diese Abtriebsstufe ABTR zudem räumlich gesehen zumindest teilweise axial zwischen dem genannten Planetenradsatz RS3 und der Bremse A angeordnet, wobei diese Bremse A wiederum im Bereich der antriebsnahen Außenwand des Getriebegehäuses GG angeordnet ist. Als Anfahrelement des Getriebes ist in dem dargestellten Ausführungsbeispiel ein Drehmomentwandler vorgesehen, der im Kraftfluss zwischen der Antriebswelle AN und einem in Figur 1 zur Vereinfachung nicht näher dargestelltem Antriebsmotor des Getriebes angeordnet ist, und der räumlich gesehen axial zwischen der genannten Gehäusewand und dem Antriebsmotor angeordnet ist. Entsprechend wird der antriebsnahe dritte Planetenradsatz RS3 nur von der Antriebswelle AN bzw. Welle 1 des Getriebes in axialer Richtung zentrisch durchgriffen. Da die Welle 3 die Sonnenräder SO3, SO4 des dritten und vierten Planetenradsatzes RS3, RS4 miteinander verbindet und die Antriebswelle AN bzw. Welle 1 auf der dem dritten Planetenradsatz RS3 abgewandten Seite des vierten Planetenradsatzes RS4 mit dessen Steg ST4 verbunden ist, wird auch der vierte Planetenradsatz RS4 von der Antriebswelle AN bzw. Welle 1 des Getriebes in axialer Richtung zentrisch vollständig durchgriffen. Der erste Planetenradsatz RS1 hingegen wird von keiner Welle des Getriebes in axialer Richtung zentrisch vollständig durchgriffen. Selbstverständlich kann in einer anderen Ausgestaltung des Getriebes vorgesehen sein, dass der Antriebsmotor des Getriebes auf der Seite des Getriebes angeordnet ist, an der auch der erste Planetenradsatz RS1 angeordnet ist, wobei in diesem Fall dann die Abtriebsstufe ABTR auf der dem Antrieb gegenüberliegenden Seite des Getriebes angeordnet ist, nur der erste und Planetenradsatz RS1 von der Antriebswelle AN bzw. der Welle 1 in axialer Richtung zentrisch durchgriffen wird und der dritte und vierte Planetenradsatz RS3, RS4 von keiner Welle in axialer Richtung zentrisch durchgriffen werden.

Wie in Figur 1 ersichtlich, ist die Bremse A räumlich gesehen zwar in einem Bereich nahe dem dritten Planetenradsatz RS3 angeordnet, in axialer Richtung gesehen aber zumindest durch ein mit dem Steg ST3 des dritten Planetenradsatzes RS3 verbundenes Stirn- oder Kettenrad der Abtriebsstufe ABTR von diesem Planetenradsatz RS3 getrennt. Entsprechend ist die Welle 3, die abschnittsweise auch als Innenlamellenträger zur Aufnahme von beispielsweise als Stahllamellen ausgeführten innenverzahnten Lamellen des Lamellenpaketes der Bremse A ausgebildet ist, auf der Antriebswelle AN bzw. der Wellen 1 rotierbar gelagert. Selbstverständlich kann das in Figur 1 auf der Welle 3 verdrehbar gelagerte angetriebene Stirn- oder Kettenrad der Abtriebsstufe ABTR abweichend von der Darstellung in Figur 1 auch direkt an einer getriebegehäusefesten Nabe verdrehbar gelagert sein. Der Außenlamellenträger der Bremse A zur Aufnahme von beispielsweise als Belaglamellen ausgeführten außenverzahnten Lamellen des Lamellenpaketes der Bremse A kann in einfacher Weise in das Getriebegehäuse GG bzw. die Gehäusewand integriert sein, selbstverständlich aber auch als separates Bauelement ausgeführt sein, welches dann mit dem Getriebegehäuse GG bzw. der Gehäusewand verdrehfest verbunden ist. Eine zur Vereinfachung in Figur 1 nicht näher dargestellte Servoeinrichtung zum Betätigen des Lamellenpaketes der Bremse A kann in konstruktiv einfacher Weise in den Außenlamellenträger der Bremse A integriert bzw. an dem Außenlamellenträger der Bremse A axial verschiebbar gelagert sein.

In dem in Figur 1 dargestellten Ausführungsbeispiel ist die Bremse B räumlich gesehen nahe dem ersten Planetenradsatz RS1 angeordnet. Dabei ist insbesondere ein Lamellenpaket der Bremse B räumlich gesehen zumindest teilweise radial über dem ersten Planetenradsatz RS1 angeordnet. Ein Abschnitt der Welle 4 ist als Innenlamellenträger zur Aufnahme von beispielsweise als Stahllamellen ausgeführten innenverzahnten Lamellen des Lamellenpaketes der Bremse B ausgebildet. Beispielsweise können Innenlamellenträger der Bremse B und Hohlrad HO1 des ersten Planetenradsatzes RS1 als gemeinsamen Bauteil einstückig ausgeführt sein. Der Außenlamellenträger der Bremse B zur Aufnahme von beispielsweise als Belaglamellen ausgeführten außenverzahnten Lamellen des Lamellenpaketes der Bremse B kann in einfacher Weise in das Getriebegehäuse GG integriert sein, selbstverständlich aber auch als separates Bauelement ausgeführt sein, welches dann mit dem Getriebegehäuse GG verdrehfest verbunden ist. Eine zur Vereinfachung in Figur 1 nicht näher dargestellte Servoeinrichtung zum Betätigen des Lamellenpaketes der Bremse B kann in konstruktiv einfacher Weise in den Außenlamellenträger der Bremse B integriert bzw. an dem Außenlamellenträger der Bremse B axial verschiebbar gelagert sein.

Wie in Figur 1 weiterhin ersichtlich, sind die Kupplungen C und E räumlich gesehen in einem Bereich axial zwischen dem ersten Planetenradsatz RS1 und den beiden radial ineinander verschachtelten Planetenradsätzen RS2, RS4 angeordnet. In dem dargestellten Ausführungsbeispiel ist die Kupplung C axial unmittelbar benachbart zum ersten Planetenradsatz RS1 angeordnet, wohingegen die Kupplung E axial unmittelbar benachbart zum zweien Planetenradsatz RS2 angeordnet ist. In diesem Fall sind die Lamellenpakete dieser beiden Kupplungen C, E axial betrachtet zumindest im Wesentlichen axial nebeneinander auf unterschiedlichem Durchmesser angeordnet. Dabei ist das Lamellenpaket der Kupplung E auf einem vergleichsweise großen Durchmesser angeordnet, in etwa im Bereich des Hohlrades HO2 des (radial äußeren) zweiten Planetenradsatzes RS2. Das Lamellenpaket der Kupplung C ist auf einem vergleichsweise kleinen Durchmesser angeordnet, in etwa im Bereich des Sonnenrades SO1 des ersten Planetenradsatzes RS1.

Im dargestellten Ausführungsbeispiel ist ein Abschnitt der Welle 5 als Außenlamellenträger zur Aufnahme von beispielsweise als Belaglamellen ausgeführten außenverzahnten Lamellen des Lamellenpaketes der Kupplung E ausgebildet. Entsprechend ist ein Abschnitt der Welle 7 als Innenlamellenträger zur Aufnahme von beispielsweise als Stahllamellen ausgeführten innenverzahnten Lamellen des Lamellenpaketes der Kupplung E ausgebildet. Innenlamellenträger der Kupplung E und Sonnenrad S02 des zweiten Planetenradsatzes RS2 können beispielsweise als gemeinsames Bauteil einstückig ausgeführt sein. Ein Abschnitt der Welle. 5 im Bereich des Sonnenrades SO1 des ersten Planetenradsatzes ist an einer getriebegehäusefesten Nabe verdrehbar gelagert. Eine in Figur 1 zur Vereinfachung nicht näher dargestellte Servoeinrichtung zum Betätigen des Lamellenpaketes der Kupplung E kann in konstruktiv einfacher Weise axial verschiebbar am Außenlamellenträger der Kupplung E gelagert sein und die das ihr zugeordnete Lamellenpaket beim Schließen der Kupplung E axial in Richtung Planetenradsatz RS2 betätigen. In diesem Fall rotiert die Servoeeinrichtung dann stets mit Drehzahl der Welle 5. Sinnvollerweise weist die Servoeinrichtung der Kupplung E auch einen dynamischen Druckausgleich auf. Eine Druck- und Schmiermittelzufuhr zur Kupplungen E kann in konstruktiv relativ einfacher Weise über entsprechende Bohrungen bzw. Kanäle von der Antriebswelle AN her erfolgen.

Weiterhin ist im dargestellten Ausführungsbeispiel ein Abschnitt der Welle 1 als Außenlamellenträger zur Aufnahme von beispielsweise als Belaglamellen ausgeführten außenverzahnten Lamellen des Lamellenpaketes der Kupplung C ausgebildet. Entsprechend ist ein Abschnitt der Welle 5 als Innenlamellenträger zur Aufnahme von beispielsweise als Stahllamellen ausgeführten innenverzahnten Lamellen des Lamellenpaketes der Kupplung C ausgebildet. Eine in Figur 1 zur Vereinfachung nicht näher dargestellte Servoeinrichtung zum Betätigen des Lamellenpaketes der Kupplung C kann in konstruktiv einfacher Weise axial verschiebbar am Außenlamellenträger der Kupplung C gelagert sein und die das ihr zugeordnete Lamellenpaket beim Schließen der Kupplung C axial in Richtung Planetenradsatz RS1 betätigen. In diesem Fall rotiert die Servoeeinrichtung dann stets mit Drehzahl der Antriebswelle AN. Sinnvollerweise weist die Servoeinrichtung der Kupplung C auch einen dynamischen Druckausgleich auf. Druck- und Schmiermittelzufuhr zur Kupplung C sind konstruktiv außerordentlich einfach über die getriebegehäusefeste Nabe darstellbar, an der auch das Sonnenrad SO1 des Planetenradsatzes RS1 bzw. die Welle 5 verdrehbar gelagert ist.

Wie in Figur 1 weiterhin ersichtlich, ist die Kupplung D räumlich gesehen axial zwischen dem dritten Planetenradsatz RS3 und den beiden radial ineinander verschachtelten Planetenradsätzen RS2, RS4 angeordnet, dabei unmittelbar angrenzend an den dritten Planetenradsatz RS3. Im dargestellten Ausführungsbeispiel ist ein Abschnitt der Welle 2 als Außenlamellenträger zur Aufnahme von beispielsweise als Belaglamellen ausgeführten außenverzahnten Lamellen des Lamellenpaketes der Kupplung D ausgebildet. Entsprechend ist ein Abschnitt der Welle 8 als Innenlamellenträger zur Aufnahme von beispielsweise als Stahllamellen ausgeführten innenverzahnten Lamellen des Lamellenpaketes der Kupplung D ausgebildet. Steg ST3 des dritten Planetenradsatzes RS3 und Außenlamellenträger der Kupplung D können beispielsweise als gemeinsames Bauteil ausgeführt sein. Der Innenlamellenträger der Kupplung D bzw. die Welle 8 kann in konstruktiv einfacher Weise auf der Welle 3 verdrehbar gelagert sein. Eine in Figur 1 zur Vereinfachung nicht näher dargestellte Servoeinrichtung zum Betätigen des Lamellenpaketes der Kupplung D kann in konstruktiv einfacher Weise axial verschiebbar am Außenlamellenträger der Kupplung D gelagert sein und die das ihr zugeordnete Lamellenpaket beim Schließen der Kupplung D axial in Richtung Planetenradsatz RS2 betätigen. In diesem Fall rotiert die Servoeeinrichtung dann stets mit Drehzahl der Welle 2. Sinnvollerweise weist die Servoeinrichtung der Kupplung D auch einen dynamischen Druckausgleich auf. Druck- und Schmiermittelzufuhr zur Kupplung D sind konstruktiv relativ einfach über die Welle 3 und die getriebegehäusefeste Nabe darstellbar, an der auch die Welle 3 verdrehbar gelagert ist.

Aus der in Figur 1 dargestellten beispielhaften räumlichen Anordnung der drei Kupplungen C, D, E ergibt sich, dass die erste Welle 1 abschnittsweise zentrisch innerhalb der dritten Welle 3 und abschnittsweise zentrisch innerhalb der fünften Welle 5 verläuft, dass die dritte Welle 3 abschnittsweise zentrisch innerhalb der achten Welle 8 und abschnittsweise zentrisch innerhalb der zweiten Welle 2 verläuft, dass die fünfte Welle 5 die Kupplung C in axialer und radialer Richtung übergreift, und dass die sechste Welle 6 die Kupplungen C, E und D sowie den zweiten Planetenradsatz RS2 in axialer und radialer Richtung umgreift.

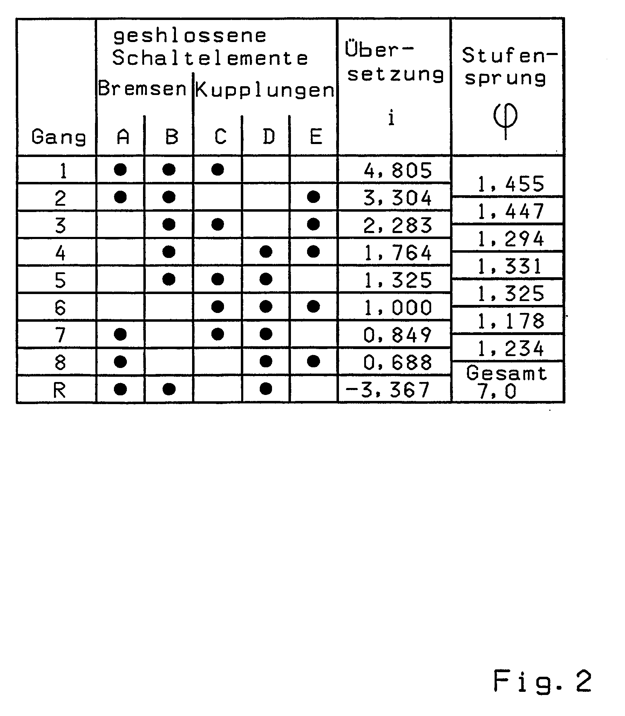

Figur 2 zeigt nun ein beispielhaftes Schaltschema für das in Figur 1 dargestellte erfindungsgemäße Mehrstufengetriebe. In jedem Gang sind drei Schaltelemente geschlossen und zwei Schaltelemente offen. Neben der Schaltlogik können dem Schaltschema auch beispielhafte Werte für die jeweiligen Übersetzungen i der einzelnen Gangstufen und die daraus zu bestimmenden Stufensprünge φ entnommen werden. Die angegebenen Übersetzungen i ergeben sich aus den (typischen) Standübersetzungen der vier Planetenradsätze RS1, RS2, RS3, RS4 von minus 2,70, minus 1,55, minus 3,35 und minus 2,20. Erst dadurch, dass im vorliegenden Fall die Standübersetzung des zweiten Planetenradsatzes RS2 betragsmäßig hinreichend klein und gleichzeitig die Standübersetzung des vierten Planetenradsatzes RS4 betragsmäßig hinreichend groß ist, ist die Voraussetzung für die erfindungsgemäße radiale Verschachtelung des zweiten und vierten Planetenradsatzes gegeben: Die StandÜbersetzung des Planetenradsatzes RS2 im Bereich von minus 1,55 ermöglicht ein Sonnenrad SO2 mit vergleichsweise großem Durchmesser ohne dass die Planetenräder PL2 des Planetenradsatzes RS2 mit zu hohen Drehzahlen rotieren; die Standübersetzung des Planetenradsatzes RS4 im Bereich von minus 2,2 ermöglicht ein Hohlrad HO4 mit vergleichsweise kleinem Durchmesser, ohne dass das Sonnenrad S04 und die Planetenräder PL4 des Planetenradsatzes RS4 vom Durchmesser her zu klein werden, um die geforderten Drehmomente übertragen zu können.

Des weiteren kann dem Schaltschema entnommen werden, dass bei sequentieller Schaltweise Gruppenschaltungen vermieden werden, da zwei in der Schaltlogik benachbarte Gangstufen zwei Schaltelemente gemeinsam benutzen. Der sechste Gang ist vorzugsweise als direkter Gang ausgebildet.

Der erste Vorwärtsgang ergibt sich durch Schließen der Bremsen A und B und der Kupplung C, der zweite Vorwärtsgang durch Schließen der Bremsen A und B und der Kupplung E, der dritte Vorwärtsgang durch Schließen der Bremse B und der Kupplungen C und E, der vierte Vorwärtsgang durch Schließen der Bremse B und der Kupplungen D und E, der fünfte Vorwärtsgang durch Schließen der Bremse B und der Kupplungen C und D, der sechste Vorwärtsgang durch Schließen der Kupplungen C, D und E, der siebte Vorwärtsgang durch Schließen der Bremse A und der Kupplungen C und D, sowie der achte Vorwärtsgang durch Schließen der Bremse A und der Kupplungen D und E. Wie aus dem Schaltschema weiter ersichtlich, ergibt sich der Rückwärtsgang durch Schließen der Bremsen A und B und der Kupplung D.

Gemäß der Erfindung ist ein Anfahren des Kraftfahrzeugs mit einem im Getriebe integrierten Schaltelement möglich. Hierbei ist ein Schaltelement besonders geeignet, das sowohl im ersten Vorwärtsgang als auch im Rückwärtsgang benötigt wird, hier also vorzugsweise die Bremse A oder die Bremse B. In vorteilhafter Weise werden diese beiden Bremsen A, B auch im zweiten Vorwärtsgang benötigt. Wird die Bremse B als im Getriebe integriertes Anfahrelement genutzt, so ist damit sogar ein.Anfahren in den ersten fünf Vorwärtsgängen und dem Rückwärtsgang möglich. Wie aus dem Schaltschema ersichtlich, kann zum Anfahren in Vorwärtsfahrtrichtung auch die Kupplung C und zum Anfahren in Rückwärtsfahrtrichtung die Kupplung D als getriebeintemes Anfahrelement verwendet werden.

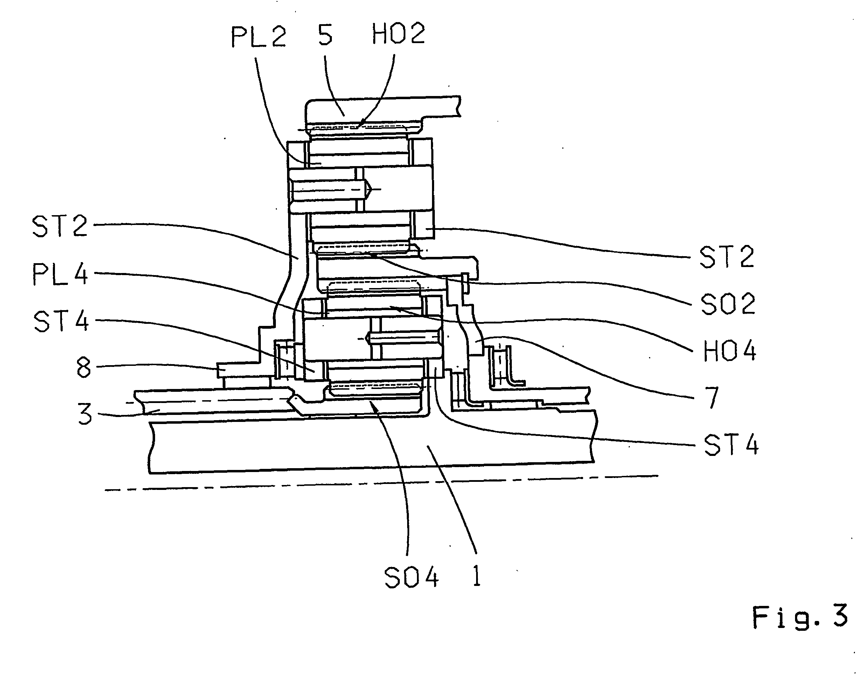

Figur 3 zeigt nun eine beispielhafte Detail-Konstruktion für das in Figur 1 dargestellte erfindungsgemäße Mehrstufengetriebe, betreffend die aus dem zweiten und vierten Planetenradsatz RS2, RS4 gebildeten Radsatzgruppe. Wie zuvor schon beschrieben sind diese beiden Planetenradsätze RS2, RS4 gemäß der Erfingung radial ineinandergeschachtelt, wobei der vierte Planetenradsatz RS4 zumindest im wesentlichen zentrisch innerhalb des zweiten Planetenradsatzes RS2 angeordnet ist, wobei das Sonnenrad SO2 des radial äußeren Planetenradsatzes RS2 mit dem Hohlrad H04 des radial inneren Planetenradsatzes RS4 verbunden ist. In der in Figur 3 dargestellten Detail-Konstruktion sind dieses Sonnenrad SO2 und dieses Hohlrad HO4 einstückig ausgeführt. Hierdurch kann der für die genannte Radsatzgruppe benötigte radiale Bauraum auf ein Minimum reduziert werden.

In einer anderen konstruktiven Ausgestaltung von Sonnenrad SO2 und Hohlrad HO4 kann abweichend zu Figur 3 beispielsweise auch aus akustischen Gründen vorgesehen sein, dass Sonnenrad SO2 und Hohlrad H04 jeweils als separate Bauteile ausgeführt und miteinander verbunden sind, wobei diese Verbindung starr verdrehfest oder auch in definiertem Maß verdrehelastisch ausgeführt sein kann. So können zur akustischen Entkopplung beispielsweise Elastomer-Zwischenlagen radial zwischen Sonnenrad S02 und Hohlrad HO4 angeordnet sein.

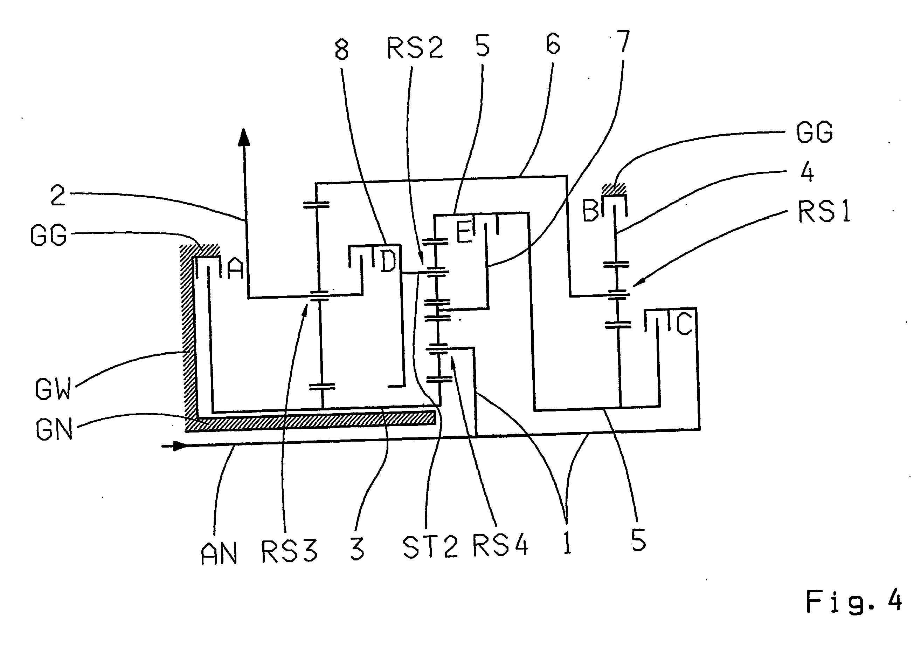

Die räumliche Anordnung der Schaltelemente des in Figur 1 dargestellten Ausführungsbeispiels eines erfindungsgemäßen Mehrstufengetriebes innerhalb des Getriebes kann im Prinzip beliebig sein und wird nur durch die Abmessungen und die äußere Formgebung des Getriebegehäuses GG begrenzt. Entsprechend werden im folgenden anhand der Figuren 4 bis 11 einige Beispiele möglicher Bauteilanordnungen für das Mehrstufengetriebes gemäß Figur 1 erläutert, wobei in diesen Figuren 4 bis 11 jeweils alle kinematischen Kopplungen der Radsatzelemente, Schaltelemente und Wellen untereinander unverändert aus Figur 1 übernommen sind.

Figur 4 zeigt nun eine erste beispielhafte Bauteilanordnungs-Variante für das Mehrstufengetriebe gemäß Figur 1. Die wesentlichen Änderungen gegenüber Figur 1 betreffen die räumliche Anordnung der Kupplung C und die konstruktive Ausgestaltung der Kupplung D. Wie in Figur 4 ersichtlich, ist die Kupplung C räumlich gesehen nunmehr auf der Seite des ersten Planetenradsatz RS1 angeordnet, die der aus den beiden radial ineinandergeschachtelten Planetenradsätzen RS2 und RS4 gebildeten Radsatzgruppe gegenüberliegt. Dabei grenzt die Kupplung C, insbesondere das Lamellenpaket der Kupplung C axial unmittelbar an den ersten Planetenradsatz RS1 an. Im dargestellten Beispiel ist das Lamellenpaket der Kupplung C beispielhaft auf einem vergleichsweise kleinen Durchmesser angeordnet. Selbstverständlich kann die Kupplung C auch auf einem größeren Durchmesser angeordnet sein. Im dargestellten Ausführungsbeispiel ist ein Abschnitt der Welle 1 als Außenlamellenträger der Kupplung C ausgebildet. Entsprechend ist ein Abschnitt der Welle 5 als Innenlamellenträger der Kupplung C ausgebildet. Eine in Figur 4 zur Vereinfachung nicht näher dargestellte Servoeinrichtung zum Betätigen des Lamellenpaketes der Kupplung C kann in konstruktiv einfacher Weise in dem Außenlamellenträger der Kupplung C axial verschiebbar gelagert sein, rotiert dann stets mit Drehzahl der Antriebswelle AN bzw. der Welle 1 und betätigt das ihm zugeordnete Lamellenpaket beim Schließen der Kupplung C axial in Richtung Planetenradsatz RS1. Die Druckmittelzuführung zu einem Druckraum der Servoeinrichtung der Kupplung C und die Schmiermittelzuführung zu einem zur Kompensation des rotatorischen Drucks dieses rotierenden Druckraums vorgesehenen Druckausgleichsraum dieser Servoeinrichtung kann in konstruktiv einfacher Weise über entsprechende Bohrungen bzw. Kanäle von der Antriebswelle AN bzw. der Welle 1 her erfolgen.

Wie in Figur 4 weiterhin ersichtlich, ist im Unterschied zu Figur 1 nunmehr ein Abschnitt der Welle 8 als Außenlamellenträger der Kupplung D ausgebildet. Außenlamellenträger der Kupplung D und Steg ST2 des zweiten Planetenradsatze RS2 können als gemeinsames Bauteil ausgeführt sein. Der Außenlamellenträger der Kupplung D bzw. der Steg ST2 sind hier beispielhaft an der Welle 3 des Getriebes räumlich gesehen im Bereich axial zwischen den Planetenradsätzen RS3 und RS4 verdrehbar gelagert. Eine in Figur 4 zur Vereinfachung nicht näher dargestellte Servoeinrichtung zur Betätigung des Lamellenpaketes der Kupplung D ist zweckmäßigerweise an dem Außenlamellenträger der Kupplung D axial verschiebbar gelagert, rotiert dann stets mit Drehzahl der Welle 8 bzw. mit Drehzahl des Stegs ST2 und betätigt das ihm zugeordnete Lamellenpaket beim Schließen der Kupplung D dann axial in Richtung Planetenradsatz RS3. Die Druckmittelzuführung zu einem Druckraum der Servoeinrichtung der Kupplung D und die Schmiermittelzuführung zu einem zur Kompensation des rotatorischen Drucks dieses rotierenden Druckraums vorgesehenen Druckausgleichsraum dieser Servoeinrichtung kann in konstruktiv einfacher Weise über entsprechende Bohrungen bzw. Kanäle von einer getriebegehäusefesten Nabe und der Welle 3 her erfolgen.

Als weiteres Konstruktionsdetail angedeutet ist in Figur 4 eine Lagerung der Welle 3 des Getriebes direkt an einer getriebegehäusefesten Nabe GN, die sich ausgehend von einer radialen Außenwand GW des Getriebegehäuses GG axial in Richtung des dritten bzw. vierten Planetenradsatzes RS3 bzw. RS4 in den Getriebeinnenraum erstreckt.

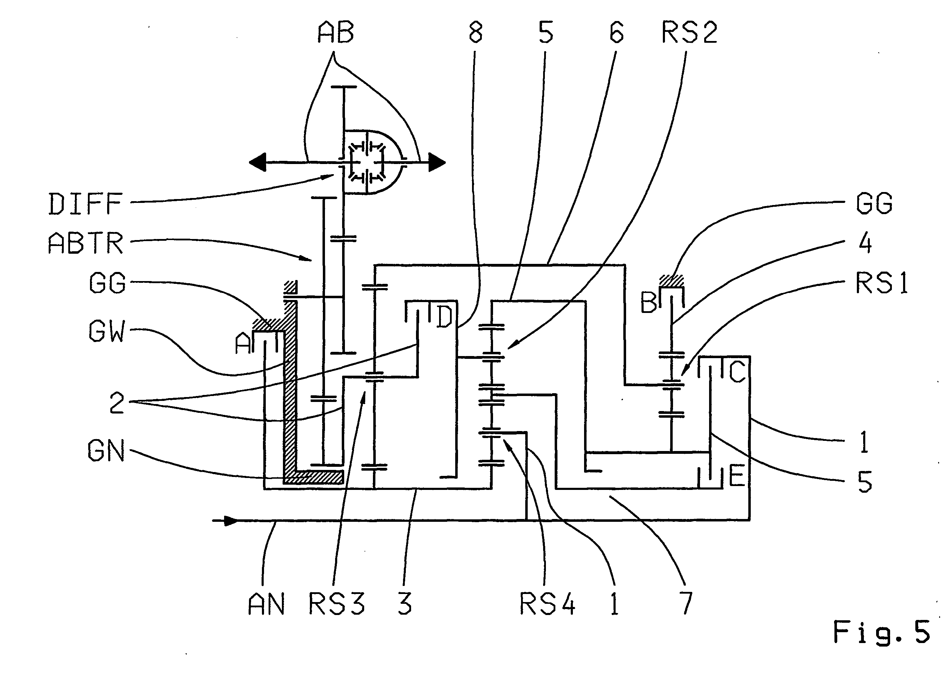

Figur 5 zeigt nun eine zweite beispielhafte Bauteilanordnungs-Variante für das Mehrstufengetriebe gemäß Figur 1, basierend auf der in Figur 4 dargestellten ersten Bauteilanordnurigs-Variante. Der wesentliche Unterschied zu Figur 4 besteht in der räumlichen Anordnung der Kupplung E. Gemäß Figur 5 ist die Kupplung E, welche die schaltbare Verbindung zwischen den Wellen 5 und 7 des Getriebes darstellt, räumlich gesehen nunmehr zumindest teilweise auf der Seite des ersten Planetenradsatzes RS1 angeordnete, die der aus den beiden Planetenradsätzen RS2 und RS4 gebildeten Radsatz Baugruppe abgewandt ist. Hierbei ist das Lamellenpaket der Kupplung E räumlich gestehen zumindest in etwa radial unterhalb des Lamellenpaketes der Kupplung C angeordnet, sodass zur einfachen Montage in konstruktiv einfacher Weise ein für die Kupplungen E und C gemeinsamer Lamellenträger vorgesehen sein kann. In dem in Figur 5 dargestellten Ausführungsbeispiel ist ein Abschnitt der Welle 7 als Innenlamellenträger der Kupplung E - vorzugsweise zur Aufnahme von innenverzahnten Stahllamellen des Lamellenpaketes der Kupplung E - ausgebildet und auf der Welle 1 verdrehbar gelagert. Entsprechend ist ein Abschnitt der Welle 5 als Außenlamellenträger der Kupplung E - vorzugsweise zur Aufnahme von außenverzahnten Belaglamellen des Lamellenpaketes der Kupplung E - ausgebildet und beispielhaft an der Welle 7 verdrehbar gelagert. Eine in Figur 5 zur Vereinfachung nicht näher dargestellte Servoeinrichtung zur Betätigung des Lamellenpaketes der Kupplung E kann an dem Innenlamellenträger der Kupplung E axial verschiebbar gelagert sein und dabei stets mit Drehzahl der Welle 7 rotieren. Die Betätigungsrichtung dieser Servoeinrichtung beim Schließen der Kupplung E kann je nach räumlicher Lage dieser Servoeinrichtung axial zum Planetenradsatz RS4 bzw. zur Abtriebsstufe ABTR hin oder axial vom Planetenradsatz RS4 bzw. von der Abtriebsstufe ABTR weg gerichtet sein.

In einer anderen Ausgestaltung der Baugruppe mit den beiden Kupplungen C und E kann auch vorgesehen sein, dass der für diese beiden Kupplungen C, E gemeinsame Lamellenträger die Servoeinrichtungen beider Kupplungen C, E axial verschiebbar aufnimmt, wobei dieser gemeinsame Lamellenträger abweichend von der Darstellung in Figur 5 dann als Innen- oder Außenlamellenträger vorzugsweise zur Aufnahme von Stahllamellen des Lamellenpaketes der Kupplung C und als Außen- oder Innenlamellenträger vorzugsweise zur Aufnahme von Stahllamellen des Lamellenpaketes der Kupplung E ausgebildet ist. Je nach räumlicher Lage und konstruktiver Ausführung der Servoeinrichtungen der Kupplungen C, E kann deren Betätigungsrichtung gleichgerichtet oder auch entgegengesetzt zueinander sein.

Als weitere Konstruktionsdetails angedeutet sind in Figur 5 eine Lagerung der Welle 3 des Getriebes direkt an der Antriebswelle AN und eine Lagerung des mit der Welle 2 verdrehfest verbundenen angetriebenen Stirnrades der Abtriebsstufe ABTR an einer getriebegehäusefesten Nabe GN, die sich ausgehend von einer radialen Außenwand GW des Getriebegehäuses GG axial in Richtung des dritten bzw. vierten Planetenradsatzes RS3 bzw. RS4 in den Getriebeinnenraum erstreckt.

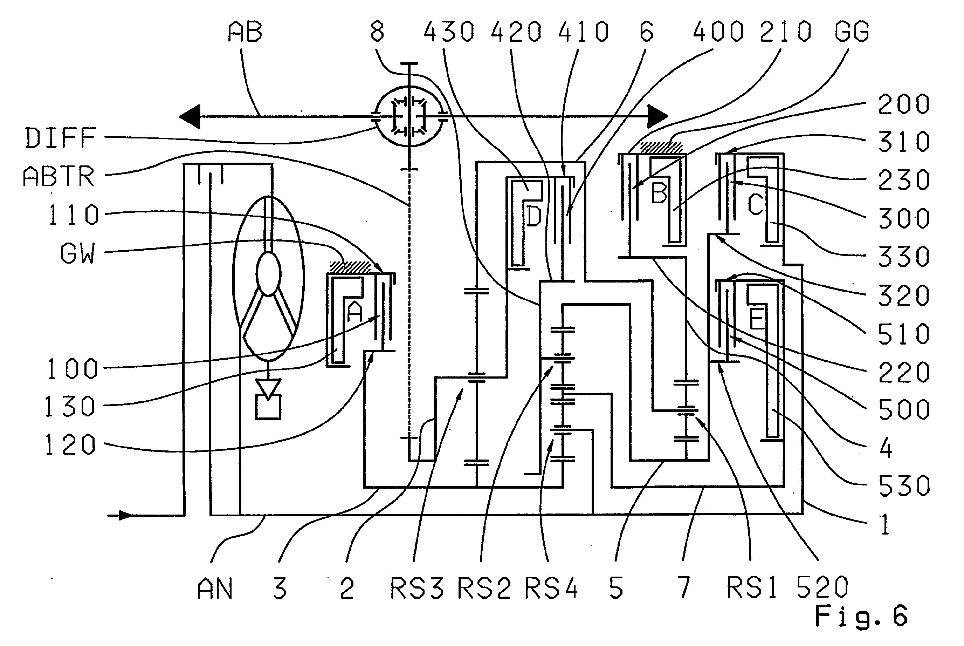

Figur 6 zeigt eine dritte beispielhafte Bauteilanordnungs-Variante für das Mehrstufengetriebe gemäß Figur 1, basierend auf der in Figur 5 dargestellten zweiten Bauteilanordnungs-Variante. Die wesentlichen Unterschiede zu Figur 5 bestehen in der räumlichen Anordnung des Lamellenpaketes der Bremse B, in der konstruktiven Ausbildung der Kupplung D und der räumlichen Anordnung des Lamellenpaketes der Kupplung D, sowie in der konstruktiven Ausbildung der Kupplung E. Außerdem sind zusätzlich Servoeinrichtungen aller fünf Schaltelemente A bis E schematisch eingezeichnet.

Ein Lamellenpaket der Bremse A ist in Figur 6 mit 100 bezeichnet und weist vorzugsweise als Stahllamellen ausgeführten Außenlamellen und vorzugsweise als Belaglamellen ausgeführte Innenlamellen auf. Räumlich gesehen grenzt das Lamellenpaket 100 axial an die Abtriebsstufe ABTR an, die einen Abschnitt der Welle 2 des Getriebes bildet. Ein Außenlamellenträger der Bremse A ist mit 110 bezeichnet und beispielhaft in einer getriebegehäusefesten Gehäusewand GW integriert, kann selbstverständlich aber auch als separates, mit der Gehäusewand GW bzw. dem Getriebegehäuse GG verdrehfest verbundenes Bauteil ausgeführt sein. Ein Innenlamellenträger der Bremse A ist mit 120 bezeichnet und bildet einen Abschnitt der Welle 3 des Getriebes. Die Servoeinrichtung zum Betätigen des Lamellenpaketes 100 der Bremse A ist mit 130 bezeichnet, auf der Seite des Lamellenpaketes 100 angeordnet, die dem dritten Planetenradsatz RS3 abgewandt ist, an der Gehäusewand GW- die hier ja den Außenlamellenträger 110 der Bremse A bildet - axial verschiebbar gelagert und betätigt das ihr zugeordnete Lamellenpaket 100 beim Schließen axial in Richtung Abtriebsstufe ABTR bzw. axial in Richtung Planetenradsatz RS3.

Ein Lamellenpaket der Bremse B ist in Figur 6 mit 200 bezeichnet und weist vorzugsweise als Stahllamellen ausgeführten Außenlamellen und vorzugsweise als Belaglamellen ausgeführte Innenlamellen auf. Räumlich gesehen ist das Lamellenpaket 200 der Bremse B nunmehr in einem Bereich axial zwischen dem ersten und zweiten Planetenradsatz RS1, RS2 angeordnet, auf einem Durchmesser größer dem Außendurchmesser des zweiten Planetenradsatzes RS2. Ein Außenlamellenträger der Bremse B ist mit 210 bezeichnet und beispielhaft in dem Getriebegehäuse GG integriert, kann selbstverständlich aber auch als separates, mit dem Getriebegehäuse GG verdrehfest verbundenes Bauteil ausgeführt sein. Ein Innenlamellenträger der Bremse B ist mit 220 bezeichnet und bildet einen Abschnitt der Welle 4 des Getriebes. Die Servoeinrichtung zum Betätigen des Lamellenpaketes 200 der Bremse B ist mit 230 bezeichnet. Räumlich gesehen, ist diese Servoeinrichtung 230 auf der Seite des Lamellenpaketes 200 angeordnet, die dem zweiten Planetenradsatz RS2 abgewandt ist, teilweise in einem Bereich radial über dem ersten Planetenradsatz. Dabei ist die Servoeeinrichtung 230 am Getriebegehäuse GG - das hier ja den Außenlamellenträger 210 der Bremse B bildet - axial verschiebbar gelagert und betätigt das ihr zugeordnete Lamellenpaket 200 beim Schließen axial in Richtung Abtriebsstufe ABTR bzw. axial in Richtung Planetenradsatz RS2.

Ein Lamellenpaket der Kupplung C ist in Figur 6 mit 300 bezeichnet und weist vorzugsweise als Stahllamellen ausgeführten Außenlamellen und vorzugsweise als Belaglamellen ausgeführte Innenlamellen auf. Räumlich gesehen ist das Lamellenpaket 300 der Kupplung C - ähnlich wie in Figur 5 - auf der Seite des ersten Planetenradsatzes RS1 angeordnet, die der aus den beiden Planetenradsätzen RS2 und RS4 gebildeten Radsatz-Baugruppe abgewandt ist, im Unterschied zu Figur 5 auf einem größeren Durchmesser als der Außendurchmesser des ersten Planetenradsatzes RS1. Ein Außenlamellenträger der Kupplung C ist mit 310 bezeichnet und bildet einen Abschnitt der Welle 1 des Getriebes. Ein Innenlamellenträger der Kupplung C ist mit 320 bezeichnet und bildet einen Abschnitt der Welle 5 des Getriebes. Die Servoeinrichtung zum Betätigen des Lamellenpaketes 300 der Kupplung C ist mit 330 bezeichnet, innerhalb eines Zylinderraums des Außenlamellenträgers 310 auf der Seite des Lamellenpaketes 300 angeordnet, die dem ersten Planetenradsatz RS1 abgewandt ist, am Außenlamellenträger 310 axial verschiebbar gelagert und betätigt das ihr zugeordnete Lamellenpaket 300 beim Schließen axial in Richtung Abtriebsstufe ABTR bzw. axial in Richtung Planetenradsatz RS1.

Ein Lamellenpaket der Kupplung D ist in Figur 6 mit 400 bezeichnet und weist vorzugsweise als Stahllamellen ausgeführten Außenlamellen und vorzugsweise als Belaglamellen ausgeführte Innenlamellen auf. Räumlich gesehen ist das Lamellenpaket 400 der Kupplung D - im Unterschied zu Figur 5 - nunmehr zumindest überwiegend in einem Bereich radial über dem zweiten Planetenradsatzes RS2 angeordnet. Ein Außenlamellenträger der Kupplung D ist mit 410 bezeichnet und bildet einen Abschnitt der Welle 2 des Getriebes. Ein Innenlamellenträger der Kupplung D ist mit 420 bezeichnet und bildet einen Abschnitt der Welle 8 des Getriebes. Die Servoeinrichtung zum Betätigen des Lamellenpaketes 400 der Kupplung D ist mit 430 bezeichnet. Räumlich gesehen ist diese Servoeinrichtung 430 in einem Bereich axial zwischen den Planetenradsätzen RS3 und RS2 angeordnet, innerhalb eines Zylinderraums des Außenlamellenträgers 410, auf der-Seite des Lamellenpaketes 400, die dem dritten Planetenradsatz RS3 zugewandt ist. Dabei ist die Servoeinrichtung 430 am Außenlamellenträger 410 axial verschiebbar gelagert und betätigt das ihr zugeordnete Lamellenpaket 400 beim Schließen axial in zur Abtriebsstufe ABTR bzw. in zum Planetenradsatz RS3 entgegengesetzter Richtung.

Ein Lamellenpaket der Kupplung E ist in Figur 6 mit 500 bezeichnet und weist vorzugsweise als Stahllamellen ausgeführten Außenlamellen und vorzugsweise als Belaglamellen ausgeführte Innenlamellen auf. Räumlich gesehen ist das Lamellenpaket 500 der Kupplung E - ähnlich wie in Figur 5 - zumindest überwiegend radial unter dem Lamellenpaket 300 der Kupplung C angeordnet, im Unterschied zu Figur 5 auf einem Durchmesser etwas größer dem Außendurchmesser des ersten Planetenradsatzes RS1. Im Unterschied zu Figur 5 bildet nunmehr ein Außenlamellenträger 510 der Kupplung E einen Abschnitt der Welle 7 des Getriebes. Entsprechend bildet nunmehr ein Innenlamellenträger 520 der Kupplung E einen Abschnitt der Welle 5 des Getriebes. Die Servoeinrichtung zum Betätigen des Lamellenpaketes 500 der Kupplung E ist mit 530 bezeichnet. Räumlich gesehen ist diese Servoeinrichtung 530 innerhalb eines Zylinderraums des Außenlamellenträgers 510 auf der Seite des Lamellenpaketes 500 angeordnet, die dem ersten Planetenradsatz RS1 abgewandt ist. Dabei ist die Servoeinrichtung 530 am Außenlamellenträger 510 axial verschiebbar gelagert und betätigt das ihr zugeordnete Lamellenpaket 500 beim Schließen axial in Richtung Abtriebsstufe ABTR bzw. in Richtung Planetenradsatz RS1.

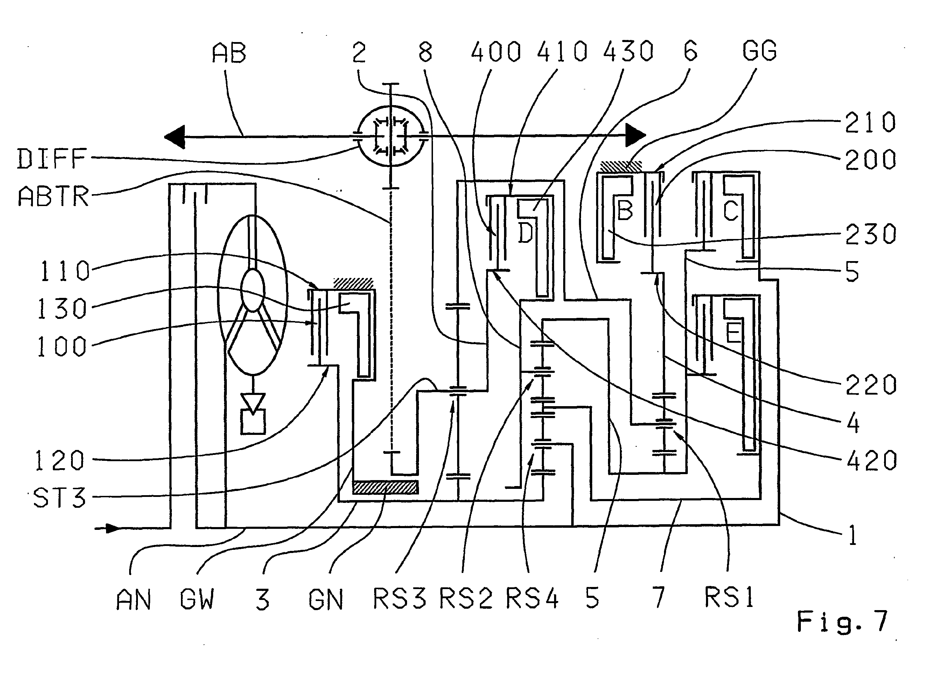

Figur 7 zeigt eine vierte beispielhafte Bauteilanordnungs-Variante für das Mehrstufengetriebe gemäß Figur 1, basierend auf der in Figur 6 dargestellten dritten Bauteilanordnungs-Variante. Die wesentlichen Unterschiede zu Figur 6 bestehen in der räumlichen Anordnung der Servoeinrichtungen 130, 230, 430 der Schaltelemente A, B, C und der Betätigungsrichtung dieser Servoeinrichtungen.130, 230, 430 beim Schließen des jeweils zugeordneten Lamellenpaketes 100, 200, 400.

Wie aus Figur 7 ersichtlich, ist die Servoeinrichtung 130 der Bremse A nunmehr auf der der Abtriebsstufe ABTR bzw. dem dritten Planetenradsatz RS3 zugewandten Seite des ihr zugeordneten Lamellenpaketes 100 der Bremse A angeordnet. Entsprechend ist die getriebegehäusefeste Gehäusewand GW, die gleichzeitig den Außenlamellenträger 110 der Bremse A bildet und an der die Servoeinrichtung 130 axial verschiebbar gelagert ist, gegenüber Figur 6 konstruktiv modifiziert. Beim Schließen der Bremse A betätigt die Servoeinrichtung 130 das Lamellenpaket 100 axial nunmehr in zur Abtriebsstufe ABTR bzw. in zum Planetenradsatz RS3 entgegengesetzter Richtung. Als weiteres konstruktives Detail ist das vom Ausgangselement (Steg ST3) des dritten Planetenradsatzes RS3 angetriebene Stirn- bzw. Kettenrad der Abtriebsstufe ABTR nicht wie in Figur 6 auf der Welle 3 des Getriebes verdrehbar gelagert, sondern nunmehr direkt an der Nabe GN der Gehäusewand GW.

Das Lamellenpaket 200 der Bremse B ist gemäß Figur 7 räumlich gesehen nunmehr in einem Bereich in etwa radial über dem ersten Planetenradsatz RS1 angeordnet, ähnlich wie in Figur 1, Figur 4 und Figur 5. Die Servoeinrichtung 230 der Bremse B ist im Unterschied zu Figur 6 nunmehr auf der Seite des ihr zugeordneten Lamellenpaketes 200 der Bremse B angeordnet, die der Abtriebsstufe ABTR bzw. dem Planetenradsatz RS2 zugewandt ist. Entsprechend betätigt die Servoeinrichtung 230 das Lamellenpaket 200 beim Schließen axial nunmehr in zur Abtriebsstufe ABTR bzw. in zum Planetenradsatz RS3 entgegengesetzter Richtung.

Die in Figur 7 dargestellte konstruktive Ausführung der Kupplung D basiert auf der Ausführung gemäß Figur 5. Das Lamellenpaket 400 der Kupplung D ist gemäß Figur 7 räumlich gesehen unmittelbar benachbart zum dritten Planetenradsatz RS3 angeordnet. Der Außenlamellenträger 410 der Kupplung D bildet einen Abschnitt der Welle 8 des Getriebes und ist auf der Welle 3 verdrehbar gelagert. Der Innenlamellenträger 420 der Kupplung D bildet einen Abschnitt der Welle 2 des Getriebes. Die Servoeinrichtung 430 der Kupplung D ist auf der dem Planetenradsatz RS3 abgewandten Seite des Lamellenpaketes 400 angeordnet, innerhalb eines durch den Außenlamellenträger 410 gebildeten Zylinderraums. Zur Einsparung von axialer Baulänge des Getriebes ist die Servoeinrichtung 430 dabei räumlich gesehen zumindest teilweise radial über dem zweiten Planetenradsatz RS2 angeordnet. Beim Schließen der Kupplung D betätigt die Servoeinrichtung das ihr zugeordnete Lamellenpaket 400 axial in Richtung Abtriebsstufe ABTR bzw. in Richtung Planetenradsatz RS3.

Wie aus Figur 7 weiterhin ersichtlich, ist die Baugruppe mit den beiden Kupplungen C und E unverändert aus Figur 6 übernommen.

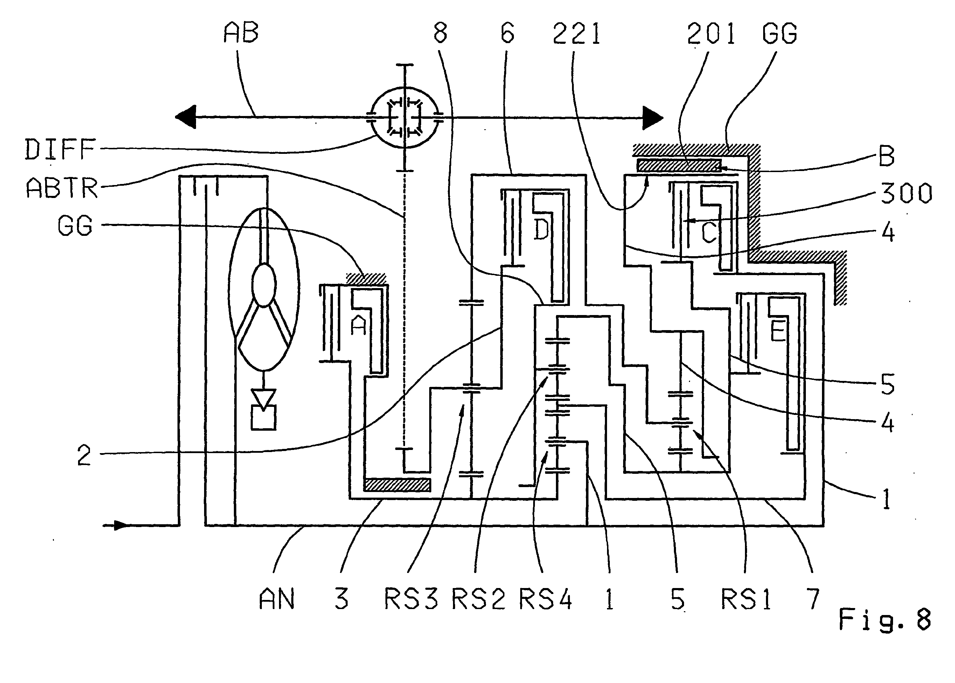

Figur 8 zeigt eine fünfte beispielhafte Bauteilanordnungs-Variante für das Mehrstufengetriebe gemäß Figur 1, basierend auf der in Figur 7 dargestellten vierten Bauteilanordnungs-Variante. Der wesentliche Unterschied zu Figur 7 besteht darin, dass-die Bremse B nicht mehr als Lamellenbremse, sondern nunmehr als Bandbremse ausgeführt ist. Das Bremsband ist mit 201 bezeichnet. Ein Bremsbandzylinder mit der zum Bremsband 201 korrespondierenden Reibfläche ist mit 221 bezeichnet und bildet einen Abschnitt der Welle 4 des Getriebes. Bekanntlich benötigt eine Bandbremse einen gegenüber einer funktionell gleichwertigen Lamellenbremse einen deutlich kleineren radialen Bauraum. Speziell für die Verwendung des erfindungsgemäßen Getriebes in einem Kraftfahrzeug mit Frontantrieb und quer zur Fahrtrichtung eingebautem Antriebsmotor und dem dadurch beschränkten Einbauraum für das Getriebe im Bereich des Fahrzeuglängsträgers ist es günstig, wenn das Getriebe im Bereich seiner antriebsabgewandten Gehäuseseite einen nicht allzu großen Durchmesser aufweist. Im vorliegenden Fall ist dies der Bereich des Getriebegehäuses GG, in dem die Kupplungen C und E angeordnet sind. Die Verwendung eines Bremsbandes für die Bremse B ermöglicht eine axiale Verschiebung der Kupplung C in einen Bereich radial über dem ersten Planetenradsatz RS1, so wie in Figur 8 dargestellt, ohne dass der Gehäusedurchmesser in diesem Bereich zu groß wird. Dabei umgreift ein Abschnitt der Welle 4 bzw. der Bremsbandzylinder 221 das Lamellenpaket 300 der Kupplung C von der antriebszugewandten Seite her, sodass das Bremsband 201 der Bremse B räumlich gesehen radial über dem Lamellenpaket 300 der Kupplung C angeordnet ist.

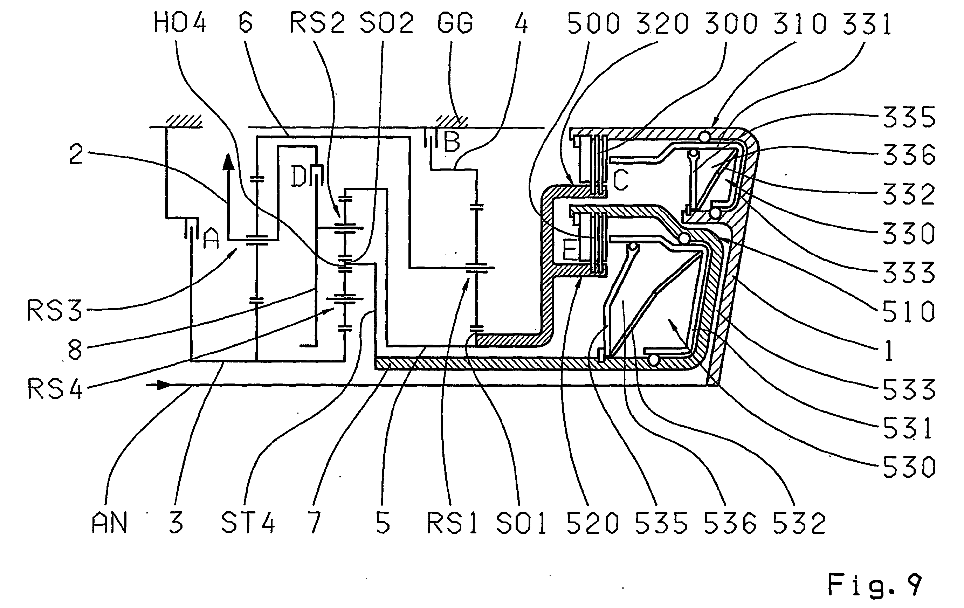

In den folgenden Figuren 9 bis 11 werden nun drei Beispiele für die konstruktive Ausbildung der aus den beiden Kupplungen C und E gebildeten vormontierbaren Kupplungs-Baugruppe näher erläutert, wie sie in den Getriebeschemata gemäß Figur 6 und Figur 7 verwendbar ist.

So zeigt Figur 9 eine beispielhafte Detailkonstruktion der in Figur 6 dargestellten dritten Bauteilanordnungs-Variante, betreffend die aus den beiden Kupplungen C und E gebildeten Kupplungs-Baugruppe. Aus Figur 9 ist leicht ersichtlich, dass für die beiden Kupplungen C und E ein gemeinsamer, beispielhaft einstückig ausgeführter Lamellenträger vorgesehen ist, der einerseits für die (radial äußere) Kupplung C als Innenlamellenträger 320 zur Aufnahme von Belaglamellen des Lamellenpaketes 300 der Kupplung C ausgebildet ist, der andererseits auch für die (radial innere) Kupplung E als Innenlamellenträger 520 zur Aufnahme von Belaglamellen des Lamellenpaketes 500 der Kupplung E ausgebildet ist. Dieser gemeinsame Innenlamellenträger 320/520 grenzt unmittelbar axial an den ersten Planetenradsatz RS1 auf dessen der Radsatz-Baugruppe RS2/RS4 abgewandte Seite an. Dabei ist das Lamellenpaket 300 der Kupplung C räumlich gesehen zumindest im wesentlichen radial über dem Lamellenpaket 500 der Kupplung E angeordnet. Der Außenlamellenträger 310 der (radial äußeren) Kupplung C ist als ein in Richtung Planetenradsatz RS1 hin geöffneter zylinderförmiger Topf ausgebildet, der an seinem lnnendurchmesser Stahllamellen des Lamellenpaketes 300 der Kupplung C aufnimmt, und der als Abschnitt der Welle 1 des Getriebes mit der Antriebswelle AN verdrehfest verbunden ist. Innerhalb des Zylinderraums dieses Außenlamellenträgers 310 sind sowohl die Servoeinrichtung 330 und das ihr zugeordnete Lamellenpaket 300 der Kupplung C als auch im wesentlichen die ganzen Kupplung E angeordnet. Der Außenlamellenträger 510 der (radial inneren) Kupplung E ist als ein in Richtung Planetenradsatz RS1 hin geöffneter zylinderförmiger Topf ausgebildet, der an seinem Innendurchmesser Stahllamellen des Lamellenpaketes 500 der Kupplung E aufnimmt, und der als Abschnitt der Welle 7 des Getriebes auf der der Kupplung E abgewandten Seite des ersten Planetenradsatzes RS1 mit dem Hohlrad H04 des vierten Planetenradsatzes RS4 und dem Sonnenrad SO2 des zweiten Planetenradsatzes RS2 verdrehfest verbunden ist. Innerhalb des Zylinderraums dieses Außenlamellenträgers 510 sind die Servoeinrichtung 530 und das ihr zugeordnete Lamellenpaket 500 der Krupplung E angeordnet. Räumlich gesehen ist die Servoeinrichtung 330 der Kupplung C radial oberhalb des Außenlamellenträgers 510 der (radial inneren) Kupplung E und dabei radial oberhalb der Servoeinrichtung 530 der Kupplung E angeordnet.

Wie in Figur 9 weiter ersichtlich, umfasst die Servoeinrichtung 330 der Kupplung C einen Kolben 331, ein Kolben-Rückstellelement 332, einen Druckraum 333, eine Stauscheibe 335 und einen Druckausgleichsraum 336. Der Kolben 331 ist am Außenlamellenträger 310 der Kupplung C axial verschiebbar gelagert und bildet zusammen mit dem Außenlamellenträger 310 den Druckraum 333, der über eine hier zur Vereinfachung nicht dargestellte Druckmittelzuführung mit Druckmittel beaufschlagbar ist. Auf der dem Druckraum 333 gegenüberliegenden Seite des Kolbens 331, also auf der dem Planetenradsatz RS1 zugewandten Seite des Kolbens 331, ist der Druckausgleichsraum 336 angeordnet, der durch den Kolben 331 und die axial am Außenlamellenträger 310 festgesetzte Stauscheibe 335 gebildet wird und zum Ausgleich des rotatorischen Drucks der stets mit Drehzahl der Antriebswelle AN rotierenden Druckraums 333 drucklos mit Schmiermittel befüllbar ist. Die entsprechende Schmiermittelzuführung ist in Figur 9 zur Vereinfachung nicht dargestellt. Axial zwischen Kolben 331 und Stauscheibe 335 ist das Rückstellelement 332 eingespannt, welches hier beispielhaft als Tellerfeder ausgeführt ist. Wird der Druckraum 333 der Servoeinrichtung 330 mit Druckmittel befüllt, so betätigt der Kolben 331 das ihm zugeordnete Lamellenpaket 300 gegen die Kraft des Rückstellelementes 332 axial in Richtung Getriebe-Antrieb bzw. axial in Richtung Planetenradsatz RS1.

Die Servoeinrichtung 530 der Kupplung E umfasst einen Kolben 531, ein Kolben-Rückstellelement 532, einen Druckraum 533, eine Stauscheibe 535 und einen Druckausgleichsraum 536. Der Kolben 531 ist am Außenlamellenträger 510 der Kupplung E axial verschiebbar gelagert und bildet zusammen mit dem Außenlamellenträger 510 den Druckraum 533, der über eine hier zur Vereinfachung nicht dargestellte Druckmittelzuführung mit Druckmittel beaufschlagbar ist. Auf der dem Druckraum 533 gegenüberliegenden Seite des Kolbens 531, also auf der dem Planetenradsatz RS1 zugewandten Seite des Kolbens 531, ist der Druckausgleichsraum 536 angeordnet, der durch den Kolben 531 und die axial am Außenlamellenträger 510 festgesetzte Stauscheibe 535 gebildet wird und zum Ausgleich des rotatorischen Drucks der stets mit Drehzahl der Welle 7 rotierenden Druckraums 533 drucklos mit Schmiermittel befüllbar ist. Die entsprechende Schmiermittelzuführung ist in Figur 9 zur Vereinfachung nicht dargestellt. Axial zwischen Kolben 531 und Stauscheibe 535 ist das Rückstellelement 532 eingespannt, welches hier beispielhaft als Tellerfeder ausgeführt ist. Wird der Druckraum 533 der Servoeinrichtung 530 mit Druckmittel befüllt, so betätigt der Kolben 531 das ihm zugeordnete Lamellenpaket 500 gegen die Kraft des Rückstellelementes 532 axial in Richtung Getriebe-Antrieb bzw. axial in Richtung Planetenradsatz RS1.

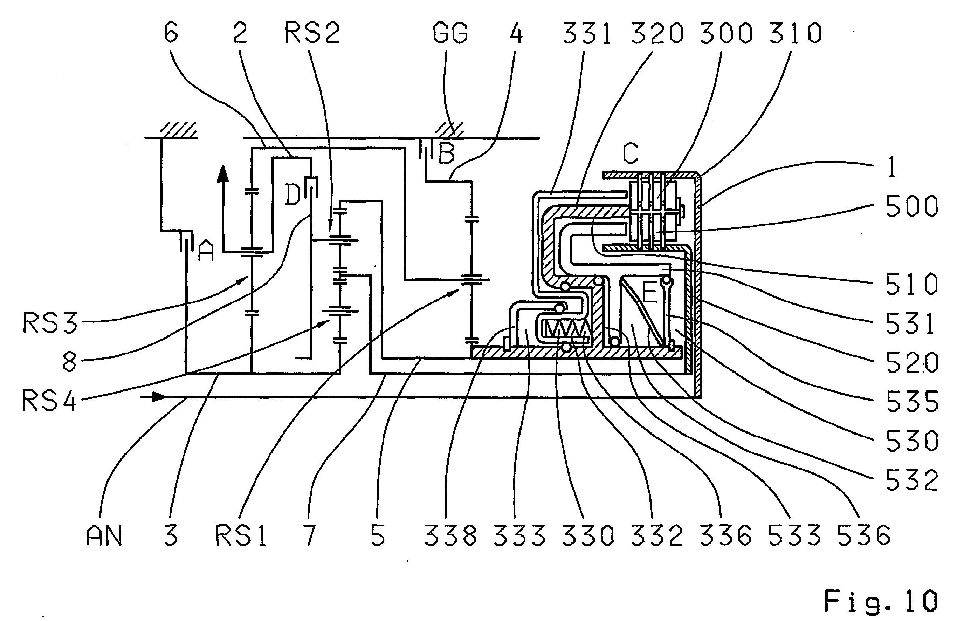

Figur 10 zeigt eine sechste beispielhafte Bauteilanordnungs-Variante für das Mehrstufengetriebe gemäß Figur 1, ebenfalls basierend auf der in Figur 6 dargestellten dritten Bauteilanordnungs-Variante. Die beiden Kupplungen C und E bilden ähnlich wie in Figur 6 und Figur 9 eine vormontierbare Kupplungs-Baugruppe, die im Getriebegehäuse GG räumlich gesehen auf der der Radsatzgruppe RS2/RS4 abgewandten Seite des ersten Planetenradsatzes RS1 angeordnet ist, und bei der das Lamellenpaket 500 der Kupplung E im wesentlichen radial unter dem Lamellenpaket 300 der Kupplung C angeordnet ist. Der wesentliche Unterschied zu Figur 6 und zu Figur 9 besteht darin, dass die Servoeinrichtungen 330, 530 der beiden Kupplungen C, E nunmehr im wesentlichen axial nebeneinander angeordnet sind, wobei die Servoeinrichtung 330 der Kupplung C näher am Planetenradsatz RS1 angeordnet ist als die Servoeinrichtung 530 der Kupplung E.

Hierzu ist für die beiden Kupplungen C und E ein gemeinsamer, beispielhaft einstückig ausgeführter Lamellenträger vorgesehen ist, der einerseits für die (radial äußere) Kupplung C als Innenlamellenträger 320 zur Aufnahme von Stahllamellen des Lamellenpaketes 300 der Kupplung C ausgebildet ist, der andererseits auch für die (radial innere) Kupplung E als Außenlamellenträger 510 zur Aufnahme von Stahllamellen des Lamellenpaketes 500 der Kupplung E ausgebildet ist. Dabei ist der Abschnitt des gemeinsamen Lamellenträgers 320/510, an dem die beiden Lamellenpakete 300 und 500 angeordnet sind, als ein zylindrischer Topf ausgebildet, der in zum Planetenradsatz RS1 entgegengesetzter Richtung hin geöffnet ist. Der Außenlamellenträger 310 der (radial äußeren) Kupplung C ist als ein in Richtung Planetenradsatz RS1 hin geöffneter zylinderförmiger Topf ausgebildet, der an seinem Innendurchmesser Belaglamellen des Lamellenpaketes 300 der Kupplung C aufnimmt, und der als Abschnitt der Welle 1 des Getriebes mit der Antriebswelle AN verdrehfest verbunden ist. Der Innenlamellenträger 520 der (radial inneren) Kupplung E ist als ein in Richtung Planetenradsatz RS1 hin geöffneter zylinderförmiger Topf ausgebildet, der an seinem Außendurchmesser Belaglamellen des Lamellenpaketes 500 der Kupplung E aufnimmt, und der als Abschnitt der Welle 7 des Getriebes auf der der Kupplung E abgewandten Seite des Planetenradsatzes RS1 mit dem Hohlrad des Planetenradsatzes RS4 und dem Sonnenrad des Planetenradsatzes RS2 verdrehfest verbunden ist.

Die Servoeinrichtung 530 und das ihr zugeordnete Lamellenpaket 500 der Kupplung E sind innerhalb des Zylinderraums angeordnet, der durch den Außenlamellenträger 510 bzw. den gemeinsamen Lamellenträger 320/510 gebildet wird. Dabei ist die Servoeinrichtung 530 räumlich gesehen im wesentlichen radial über einem Nabenabschnitt des gemeinsamen Lamellenträgers 320/510 angeordnet, der sich ausgehend von dessen Topfboden axial in zum Planetenradsatz RS1 entgegengesetzter Richtung erstreckt. Die Servoeinrichtung 530 umfasst einen Kolben 531, ein Kolben-Rückstellelement 532, einen Druckraum 533, eine Stauscheibe 535 und einen Druckausgleichsraum 536. Der Kolben 531 ist an dem gemeinsamen Lamellenträger 320/510 druckmitteldicht axial verschiebbar gelagert und bildet zusammen mit dem gemeinsamen Lamellenträger 320/510 den Druckraum 533, der über eine hier zur Vereinfachung nicht dargestellte Druckmittelzuführung mit Druckmittel beaufschlagbar ist. Auf der dem Druckraum 533 gegenüberliegenden Seite des Kolbens 531, also auf der dem Planetenradsatz RS1 abgewandten Seite des Kolbens 531, ist der Druckausgleichsraum 536 angeordnet, der durch den Kolben 531 und die axial an der Nabe des gemeinsamen Lamellenträgers 320/510 festgesetzte Stauscheibe 535 gebildet wird und zum Ausgleich des rotatorischen Drucks der stets mit Drehzahl der Welle 5 rotierenden Druckraums 533 drucklos mit Schmiermittel befüllbar ist. Die entsprechende Schmiermittelzuführung ist in Figur 10 zur Vereinfachung nicht dargestellt. Axial zwischen Kolben 531 und Stauscheibe 535 ist das Rückstellelement 532 eingespannt, welches hier beispielhaft als Tellerfeder ausgeführt ist. Wird der Druckraum 533 der Servoeinrichtung 530 mit Druckmittel befüllt, so betätigt der Kolben 531 das ihm zugeordnete Lamellenpaket 500 der Kupplung E gegen die Kraft des Rückstellelementes 532 axial in zum Planetenradsatz RS1 entgegengesetzter Richtung.

Die Servoeinrichtung 330 der Kupplung C ist räumlich gesehen im wesentlichen radial über einem Nabenabschnitt des gemeinsamen Lamellenträgers 320/510 angeordnet, der sich ausgehend von dessen Topfboden axial in Richtung Planetenradsatz RS1 erstreckt. Dabei umfasst die Servoeinrichtung 330 einen Kolben 331, ein Kolben-Rückstellelement 332, eine Stützscheibe 338, einen Druckraum 333 und einen Druckausgleichsraum 336. Die Stützscheibe 338 ist als ein zylindrischer Topf ausgebildet, der in zum Planetenradsatz RS1 entgegengesetzter Richtung hin geöffnet ist und auf der dem Planetenradsatz RS1 zugewandten Seite des Topfbodens des gemeinsamen Lamellenträgers 320/510 angeordnet ist. Dabei ist die Stützscheibe 338 an ihrem Innendurchmesser an der dem Planetenradsatz RS1 zugewandten Nabe des gemeinsamen Lamellenträgers 320/510 druckmitteldicht axial festgesetzt. Der Kolben 331 ist sowohl an dem gemeinsamen Lamellenträger 320/510 als auch an der Stützscheibe 338 druckmitteldicht axial verschiebbar gelagert und bildet zusammen mit der Stützscheibe 338 den Druckraum 333, der über eine hier zur Vereinfachung nicht dargestellte Druckmittelzuführung mit Druckmittel beaufschlagbar ist. Geometrisch gesehen weist der Kolben 331 eine meanderförmige Struktur auf, die an die dem Planetenradsatz RS1 zugewandten Nabe des gemeinsamen Lamellenträgers 320/510, an die Stützscheibe 338, an den Topfboden des gemeinsamen Lamellenträgers 320/510 und an den zylindrischen Außendurchmesser des gemeinsamen Lamellenträgers 320/510 angepaßt ist und dabei Teile der Außenkontur des gemeinsamen Lamellenträgers 320/510 in radialer und axialer Richtung übergreift. Auf der dem Druckraum 333 gegenüberliegenden Seite des Kolbens 331, also auf der dem Planetenradsatz RS1 abgewandten Seite des Kolbens 331, ist der Druckausgleichsraum 336 angeordnet, der durch den Kolben 331 und den gemeinsamen Lamellenträger 320/510 gebildet wird und zum Ausgleich des rotatorischen Drucks der stets mit Drehzahl der Welle 5 rotierenden Druckraums 333 drucklos mit Schmiermittel befüllbar ist. Die entsprechende Schmiermittelzuführung ist in Figur 10 zur Vereinfachung nicht dargestellt. Der Druckausgleichsraum 332 der Kupplung C ist also nur durch eine Mantelfläche des für die Kupplungen C, E gemeinsamen Lamellenträgers 320/510 von dem Druckraum 533 der Kupplung E getrennt. Axial zwischen dem Kolben 331 der Kupplung C und dem für die Kupplungen C, E gemeinsamen Lamellenträger 320/510 ist das Rückstellelement 332 eingespannt, welches hier beispielhaft als Spiralfederpaket ausgeführt ist, umfassend mehrere am Umfang des Kolbens 331 verteilt angeordnete und kraftseitig parallelgeschaltete Spiralfedern. Wird der Druckraum 333 der Servoeinrichtung 330 mit Druckmittel befüllt, so betätigt der Kolben 331 das ihm zugeordnete Lamellenpaket 300 der Kupplung C gegen die Kraft des Rückstellelementes 332 axial in zum Planetenradsatz RS1 entgegengesetzter Richtung.

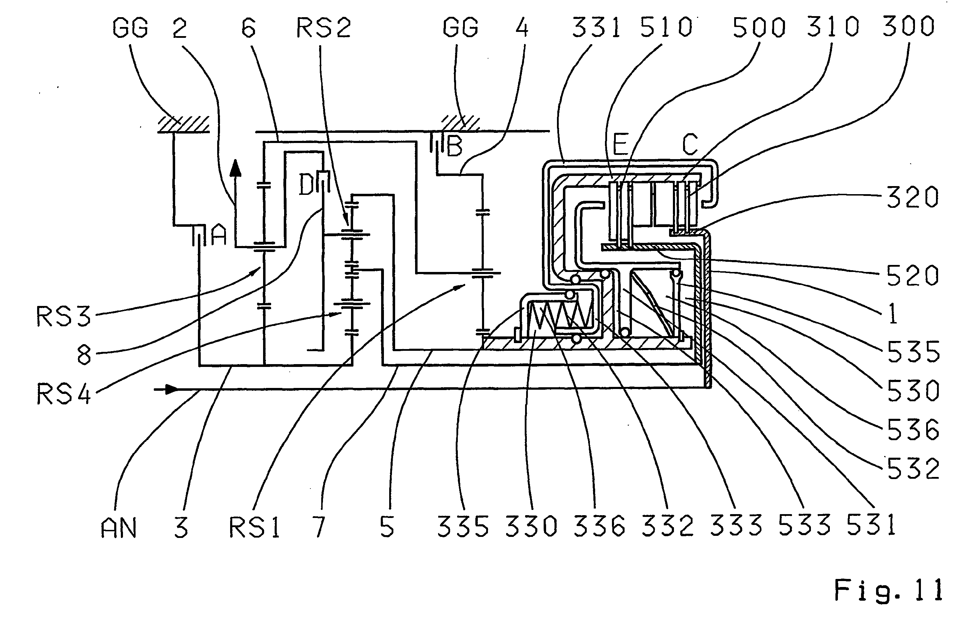

Figur 11 schließlich zeigt eine siebte beispielhafte Bauteilanordnungs-Variante für das Mehrstufengetriebe gemäß Figur 1, basierend auf der in Figur 10 dargestellten sechsten Bauteilanordnungs-Variante. Die beiden Kupplungen C und E bilden ähnlich wie in den Figuren 6, 9 und 10 eine vormontierbare Kupplungs-Baugruppe, die im Getriebegehäuse GG räumlich gesehen auf der der Radsatzgruppe RS2/RS4 abgewandten Seite des ersten Planetenradsatzes RS angeordnet ist. Der wesentliche Unterschied zu Figur 6 und zu Figur 9 besteht darin, dass die Servoeinrichtungen 330, 530 der beiden Kupplungen C, E nunmehr im wesentlichen axial nebeneinander angeordnet sind, wobei die Servoeinrichtung 330 der Kupplung C im wesentlichen näher am Planetenradsatz RS1 angeordnet ist als die Servoeinrichtung 530 der Kupplung E. Der wesentliche Unterschied zu Figur 10 besteht darin, dass die Lamellenpakete 300, 500 der beiden Kupplungen C, E nunmehr axial nebeneinander angeordnet sind, wobei das Lamellenpaket 500 der Kupplung E näher am Planetenradsatz RS1 angeordnet ist als das Lamellenpaket 300 der Kupplung C.

Hierzu ist für die beiden Kupplungen C und E ein gemeinsamer, beispielhaft einstückig ausgeführter Außenlamellenträger vorgesehen ist, der am Innendurchmesser des Abschnitts 510 die Stahllamellen des Lamellenpaketes 500 der Kupplung E und am Innendurchmesser des Abschnitts 310 die Stahllamellen des Lamellenpaketes 300 der Kupplung C aufnimmt. Vorzugsweise weisen beide Lamellenpakete 300, 500 den gleichen Durchmesser auf, vorzugsweise werden für beide Lamellenpakete 300, 500 Gleichteile eingesetzt. Dabei ist der gemeinsame Außenlamellenträger 310/510 im wesentlichen als ein zylindrischer Topf ausgebildet, der in zum Planetenradsatz RS1 entgegengesetzter Richtung hin geöffnet ist, wobei sich eine radial auf der Welle 7 des Getriebes gelagerte Nabe des gemeinsamen Außenlamellenträgers 310/510 ausgehend von dessen Topfboden in beide Richtungen erstreckt. Der Innenlamellenträger 320 der Kupplung C ist als ein in Richtung Planetenradsatz RS1 hin geöffneter zylinderförmiger Topf ausgebildet, der an seinem Außendurchmesser Belaglamellen des Lamellenpaketes 300 der Kupplung C aufnimmt, und der als Abschnitt der Welle 1 des Getriebes mit der Antriebswelle AN verdrehfest verbunden ist. Der Innenlamellenträger 520 der Kupplung E ist als ein in Richtung Planetenradsatz RS1 hin geöffneter zylinderförmiger Topf ausgebildet, der an seinem Außendurchmesser Belaglamellen des Lamellenpaketes 500 der Kupplung E aufnimmt, und der als Abschnitt der Welle 7 des Getriebes auf der der Kupplung E abgewandten Seite des Planetenradsatzes RS1 mit dem Hohlrad des Planetenradsatzes RS4 und dem Sonnenrad des Planetenradsatzes RS2 verdrehfest verbunden ist.

Die Servoeinrichtung 530 der Kupplung E wurde im wesentlichen aus Figur 10 übernommen und ist räumlich gesehen vollständig innerhalb des durch den gemeinsamen Außenlamellenträger 310/510 gebildeten Zylinderraum angeordnet ist, im wesentlichen radial über dem Nabenabschnitt des gemeinsamen Außenlamellenträgers 310/510, der sich ausgehend von dessen Topfboden axial in zum Planetenradsatz RS1 entgegengesetzter Richtung erstreckt. Dabei umfasst die Servoeinrichtung einen Kolben 531, ein Kolben-Rückstellelement 532, einen Druckraum 533, eine Stauscheibe 535 und einen Druckausgleichsraum 536. Der Kolben 531 ist an dem gemeinsamen Außenlamellenträger 310/510 druckmitteldicht axial verschiebbar gelagert und bildet zusammen mit dem gemeinsamen Außenlamellenträger 310/510 den Druckraum 533, der über eine hier zur Vereinfachung nicht dargestellte Druckmittelzuführung mit Druckmittel beaufschlagbar ist. Auf der dem Druckraum 533 gegenüberliegenden Seite des Kolbens 531, also auf der dem Planetenradsatz RS1 abgewandten Seite des Kolbens 531, ist der Druckausgleichsraum 536 angeordnet, der durch den Kolben 531 und die axial an der Nabe des gemeinsamen Außenlamellenträgers 310/510 festgesetzte Stauscheibe 535 gebildet wird und zum Ausgleich des rotatorischen Drucks der stets mit Drehzahl der Welle 5 rotierenden Druckraums 533 drucklos mit Schmiermittel befüllbar ist. Die entsprechende Schmiermittelzuführung ist in Figur 11 zur Vereinfachung nicht dargestellt. Axial zwischen Kolben 531 und Stauscheibe 535 ist das hier beispielhaft als Tellerfeder ausgebildete Rückstellelement 532 eingespannt. Wird der Druckraum 533 der Servoeinrichtung 530 mit Druckmittel befüllt, so betätigt der Kolben 531 das ihm zugeordnete Lamellenpaket 500 der Kupplung E gegen die Kraft des Rückstelleiementes 532 "drückend" axial in zum Planetenradsatz RS1 entgegengesetzter Richtung.

Die Servoeinrichtung 330 der Kupplung C ist ähnlich aufgebaut wie in Figur 10, nunmehr jedoch angepasst an die gegenüber Figur 10 geänderten räumlichen Anordnung des ihr zugeordneten Lamellenpaketes 300 relativ zu dem Lamellenpaket 500 der Kupplung E. Wie in Figur 11 ersichtlich, ist die Servoeinrichtung 330 der Kupplung C räumlich gesehen teilweise radial über dem Nabenabschnitt des gemeinsamen Außenlamellenträgers 310/510 angeordnet, der sich ausgehend von dessen Topfboden axial in Richtung Planetenradsatz RS1 erstreckt. Dabei umfasst die Servoeinrichtung 330 einen Kolben 331, ein Kolben-Rückstellelement 332, einen Druckraum 333, eine Stauscheibe 335 und einen Druckausgleichsraum 336. Der Kolben 331 ist an dem gemeinsamen Außenlamellenträger 310/510 druckmitteldicht axial verschiebbar gelagert und bildet zusammen mit dem Außentamettenträger 310/510 den Druckraum 333, der über eine hier zur Vereinfachung nicht dargestellte Druckmittelzuführung mit Druckmittel beaufschlagbar ist. Auf der dem Druckraum 333 gegenüberliegenden Seite des Kolbens 331, also auf der dem Planetenradsatz RS1 zugewandten Seite des Kolbens 331, ist der Druckausgleichsraum 336 angeordnet, der durch den Kolben 331 und die an der radsatzseitigen Nabe des gemeinsamen Außenlamellenträgers 310/510 axial festgesetzten Stauscheibe 335 gebildet wird. Zum Ausgleich des rotatorischen Drucks der stets mit Drehzahl der Welle 5 rotierenden Druckraums 333 ist der Druckausgleichsraum 336 über eine zur Vereinfachung hier nicht dargestellte Schmiermittelzuführung drucklos mit Schmiermittel befüllbar. Die Druckräume 333, 533 beider Kupplungen C, E sind also unmittelbar axial benachbart zueinander angeordnet und werden nur durch eine Mantelfläche des für die Kupplungen C, E gemeinsamen Außenlamellenträgers 310/510 voneinander getrennt. Geometrisch gesehen weist der Kolben 331 der Kupplung C eine meanderförmige Struktur auf, die an die Stauscheibe 335 und an die Außenkontur des Außenlamellenträgers 310/510 angepaßt ist und dabei den Außenlamellenträger 310/510 in radialer und axialer Richtung außen umgreift und von der Seite des ihm zugeordneten Lamellenpaketes 300 auf dessen Außenlamellen wirkt, die dem Druckraum 333 abgewandt ist. Axial zwischen Kolben 331 und Stauscheibe 335 ist das Rückstellelement 332 eingespannt, welches hier beispielhaft als Spiralfederpaket ausgeführt ist, umfassend mehrere am Umfang des Kolbens 331 verteilt angeordnete und kraftseitig parallelgeschaltete Spiralfedern. Wird der Druckraum 333 der Servoeinrichtung 330 mit Druckmittel befüllt, so betätigt der Kolben 331 das ihm zugeordnete Lamellenpaket 300 der Kupplung C gegen die Kraft des Rückstellelementes 332 "ziehend" axial in Richtung Planetenradsatz RS1. Im Unterschied zu Figur 10 sind die Betätigungsrichtungen der Servoeinrichtungen 330, 530 der beiden Kupplungen C, E gemäß Figur 11 also unterschiedlich.

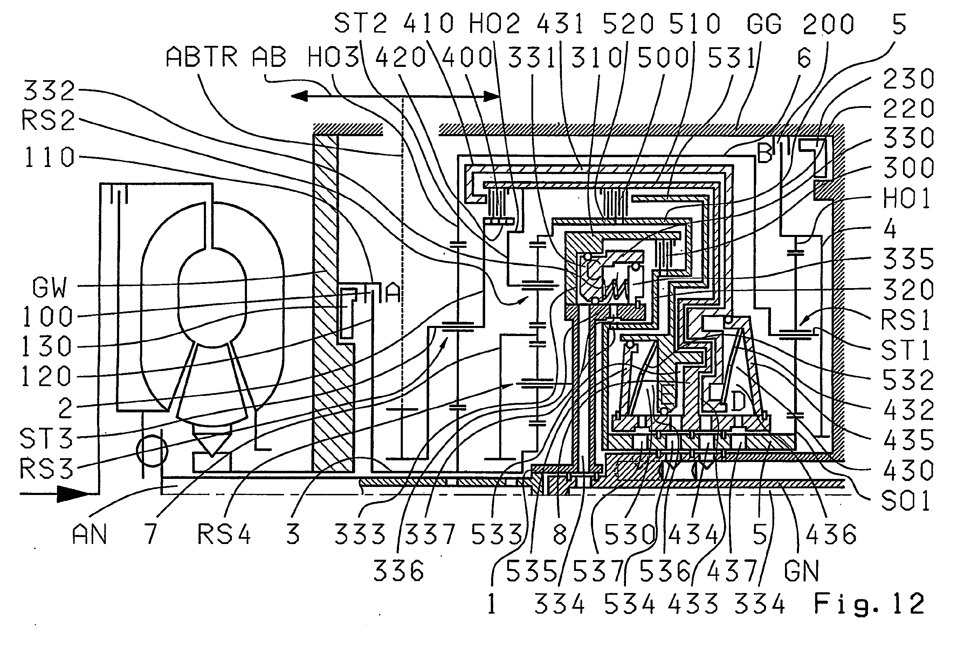

Anhand Figur 12 wird im folgenden nun ein zweites Ausführungsbeispiel eines erfindungsgemäßen Mehrstufengetriebes beschrieben. Dabei basiert dieses zweite Ausführungsbeispiel auf dem Radsatzkonzept des anhand Figur 1 ausführlich beschriebenen ersten Ausführungsbeispiels eines erfindungsgemäßen Mehrstufengetriebes. Die kinematische Kopplungen der Radsatzelemente, Schaltelemente und Wellen untereinander ist gegenüber Figur 1 in nur einem Detail modifiziert: Im Unterschied zu Figur 1, bei der die Kupplung E im Kraftfluss zwischen den Wellen 5 und 7 des Getriebes angeordnet ist, ist die Kupplung E in Figur 12 nunmehr im Kraftfluss zwischen den Wellen 5 und 8 des Getriebes angeordnet. Wie bereits erwähnt, ist der zweite Planetenradsatz RS2 durch Schließen der Kupplung E in sich verblockbar, sodass er bei geschlossener Kupplung E als Block rotiert. In Figur 12 wird diese Funktion also durch ein reibschlüssiges Verbinden von Hohlrad HO2 und Steg ST2 des zweiten Planetenradsatzes RS2 erreicht.

Wie in Figur 12 ersichtlich, ist der dritte Planetenradsatz RS3 auf der antriebsnahen Seite des Getriebes angeordnet. Auf der dem Antrieb des Getriebes zugewandten Seite des dritten Planetenradsatzes RS3 schließt sich die als Stirn- oder Kettentrieb ausgebildete Abtriebsstufe ABTR, die im Kraftfluss zwischen dem Steg ST3 des dritten Planetenradsatzes RS3 und der Abtriebswelle AB angeordnet ist, axial an diesen Planetenradsatz RS3 an. Die Bremse A schließt sich räumlich gesehen, auf der dem Antrieb des Getriebes zugewandten Seite der Abtriebsstufe ABTR an das mit dem Steg ST3 verbundene Stirn- bzw. Kettenrad dieser Abtriebsstufe ABTR an. Ein mit dem Innenlamellenträger 120 der Bremse A verbundener Abschnitt der Welle 3 durchgreift also die Abtriebsstufe ABTR zentrisch. Entsprechend ist das mit dem Steg ST3 verbundene Stirn- bzw. Kettenrad der Abtriebsstufe ABTR auf der Welle 3 verdrehbar gelagert. Die Welle 3 wiederum ist beispielhaft auf der Antriebswelle AN verdrehbar gelagert. Der Außenlamellenträger 110 der Bremse A ist beispielhaft in die mit dem Getriebegehäuse GG verdrehfest verbundene Gehäusewand GW integriert. Die Servoeinrichtung 130 der Bremse A zur Betätigung des ihr zugeordneten Lamellenpaketes 100 ist in Figur 12 zur Vereinfachung nur schematisch dargestellt. Räumlich gesehen ist diese Servoeinrichtung 130 auf der dem Getriebe-Antrieb zugewandten Seite des Lamellenpaketes 100 der Bremse A angeordnet und an der Gehäusewand GW axial verschiebbar gelagert und betätigt das ihr zugeordnete Lamellenpaket 100 beim Schließen axial in zum Getriebe-Antrieb entgegengesetzter Richtung bzw. axial in Richtung Planetenradsatz RS3.

Die Bremse B ist auf der dem Antrieb des Getriebes bzw. auf der der Bremse A gegenüberliegenden Seite des Getriebes angeordnet, unmittelbar im Bereich der Außenwand des Getriebegehäuses GG. Dabei ist das Lamellenpaket 200 der Bremse B räumlich gesehen im Bereich des Innendurchmessers des Getriebegehäuses GG nahe der dem Getriebe-Antrieb gegenüberliegenden radialen Außenwand des Getriebegehäuses GG angeordnet. Der Außenlamellenträger 210 der Bremse B ist beispielhaft in dem Getriebegehäuse GG integriert. Die in Figur 12 zur Vereinfachung nur schematisch dargestellte Servoeinrichtung 230 der Bremse B zum Betätigen des ihr zugeordneten Lamellenpaketes 200 der Bremse B ist auf der dem Getriebe-Antrieb abgewandten Seite des Lamellenpaketes 200 angeordnet und am Getriebegehäuse GG bzw. der genannten Gehäuseaußenwand axial verschiebbar gelagert und betätigt das Lamellenpaket 200 beim Schließen axial in Richtung Getriebe-Antrieb. Der mit dem Hohlrads HO1 des ersten Planetenradsatzes RS1 verbundene Innenlamellenträger 220 der Bremse B bildet einen Abschnitt der Welle 4 des Getriebes und erstreckt sich entlang der genannten antriebsabgewandten Außenwand des Getriebegehäuses GG ausgehend von dem Lamellenpaket 200 radial nach innen bis zu einer getriebegehäusefesten Nabe GN, an der er auch verdrehbar gelagert ist. Auf der dem Antrieb des Getriebes zugewandten Seite des Innenlamellenträgers 220 der Bremse B schließt sich der erste Planetenradsatz RS1 axial an diesen Innenlamellenträger 220 an, derart, dass das Lamellenpaket 200 der Bremse B räumlich gesehen zumindest teilweise in einem Bereich radial über dem ersten Planetenradsatz RS1 angeordnet ist.

Wie in Figur 12 weiter ersichtlich, schließt sich auf der dem Antrieb des Getriebes abgewandten Seite des (antriebsnahen) dritten Planetenradsatzes RS3 die aus den beiden radial ineinanderverschachtelten Planetenradsätze RS2 und RS4 gebildete Radsatz-Baugruppe axial an den Planetenradsatz RS3 an. Dabei ist die Welle 7 des Getriebes in einem Bereich axial zwischen den Planetenradsätzen RS3 und RS4 an der Welle 3 des Getriebes verdrehbar gelagert. Räumlich gesehen in einem Bereich axial zwischen dem (radial äußeren) Planetenradsatz RS2 der Radsatz-Baugruppe und dem Planetenradsatz RS3, aber auch radial oberhalb der beiden Planetenradsätze RS2, RS3 ist das Lamellenpaket 400 der Kupplung D angeordnet. Der Innenlamellenträger 420 der Kupplung D bildet einen Abschnitt der Welle 2 des Getriebes und ist auf der der Abtriebsstufe ABTR abgewandten Seite des dritten Planetenradsatzes RS3 mit dessen Steg ST3 verdrehfest verbunden. Das antriebsabgewandte Stegblech dieses Stegs ST3 und der Innenlamellenträger 420 können als gemeinsames Bauteil einstückig ausgeführt sein.

Auf der dem Antrieb des Getriebes abgewandten Seite der Radsatz-Baugruppe RS2/RS4 schließt sich die Kupplung C unmittelbar axial an diese Radsatz-Baugruppe an. Dabei bildet der Außenlamellenträger 310 der Kupplung C einen Abschnitt der Welle 1 des Getriebes, ist also mit der Antriebswelle AN verdrehfest verbunden, und bildet einen in zum Getriebe-Antrieb entgegengesetzter Richtung hin geöffneten Zylinderraum zur Aufnahme von Servoeinrichtung 330 und Lamellenpaket 300 der Kupplung C. Räumlich gesehen sind Servoeinrichtung 330 und Lamellenpaket 300 und Planetenradsatz RS2 in etwa auf gleichem Durchmesser angeordnet. Die Servoeinrichtung 330 umfasst einen Kolben 331, ein Kolben-Rückstellelement 332, einen Druckraum 333, eine Stauscheibe 335 und einen Druckausgleichsraum 336. Der Kolben 331 ist am Außenlamellenträger 310 axial verschiebbar gelagert und bildet zusammen mit dem Außenlamellenträger 310 den Druckraum 333, der über eine Druckmittelzuführung 334 mit Druckmittel beaufschlagbar ist. Auf der dem Druckraum 333 gegenüberliegenden Seite des Kolbens 331, also auf der dem Planetenradsatz RS2 abgewandten Seite des Kolbens 331, ist der Druckausgleichsraum 336 angeordnet, der durch den Kolben 331 und die axial am Außenlamellenträger 310 festgesetzte Stauscheibe 335 gebildet wird und zum Ausgleich des rotatorischen Drucks der stets mit Drehzahl der Antriebswelle AN rotierenden Druckraums 333 drucklos mit Schmiermittel befüllbar ist. Die entsprechende Schmiermittelzuführung ist mit 337 bezeichnet. Axial zwischen Kolben 331 und Stauscheibe 335 ist das Rückstellelement 332 eingespannt, welches hier beispielhaft als Spiralfederpaket ausgeführt ist, umfassend mehrere am Umfang des Kolbens 331 verteilt angeordnete und kraftseitig parallelgeschaltete Spiralfedern. Wird der Druckraum 333 der Servoeinrichtung 330 mit Druckmittel befüllt, so betätigt der Kolben 331 das ihm zugeordnete Lamellenpaket 300 gegen die Kraft des Rückstelletementes 332 axial in zum Getriebe-Antrieb bzw. zweiten Planetenradsatz RS2 entgegengesetzter Richtung. Der Innenlamellenträger 320 der Kupplung C bildet einen Abschnitt der Welle 5. Dabei weist die Welle 5 einen mit dem Innenlamellenträger 320 der Kupplung C fest verbundenen Nabenabschnitt auf, der sich ausgehend vom Innendurchmesser des Innenlamellenmträgers 320 axiale in zum Planetenradsatz RS2 bzw. RS4 entgegengesefizter Richtung erstreckt, an der getriebegehäusefesten Nabe GN verdrehbar gelagert ist und auf ihrer dem Planetenradsatz RS4 abgewandten Seite mit dem Sonnenrad SO1 des ersten Planetenradsatzes RS1 verdrehfest verbunden ist. Diese Nabe GN erstreckt sich ausgehend von der dem Antrieb gegenüberliegenden radialen Außenwand des Getriebegehäuses GG axial in Richtung Planetenradsatz RS4 und durchgreift dabei den ersten Planetenradsatz RS1 und den genannten Nabenabschnitt der Welle 5 in axialer Richtung zentrisch vollständig.

Räumlich gesehen radial über der Kupplung C ist das Lamellenpaket 500 der Kupplung E angeordnet. Hierzu übergreift der mit dem Hohlrad HO2 des zweiten Planetenradsatzes RS2 verdrehfest verbundene Innenlamellenträger 520 der Kupplung E die Kupplung C in axialer Richtung vollständig und ist auf der dem Planetenradsatz RS2 abgewandten Seite des Lamellenpaketes 300 der Kupplung C mit dem Innenlamellenträger 320 der Kupplung C verbunden. Auch der Innenlamellenträger 520 der Kupplung E bildet einen Abschnitt der Welle 5 des Getriebes. In dem in Figur 12 dargestellten Ausführungsbeispiel sind Innenlamellenträger 520 der Kupplung E und Innenlamellenträger 320 der Kupplung C in fertigungstechnisch günstiger Weise als gemeinsames Bauteil einstückig ausgeführt.

Wie in Figur 12 weiter ersichtlich, bilden die beiden Kupplungen D und E eine in fertigungstechnisch günstiger Weise vormontierbare Kupplungsbaugruppe, die räumlich gesehen im wesentlichen in einem Bereich axial zwischen der Radsatz-Baugruppe RS2/RS4 und dem (antriebsfemen) ersten Planetenradsatz RS1 angeordnet ist. Dabei ist für beide Kupplungen D, E ein gemeinsamer Lamellenträger vorgesehen, der als Welle 8 der Getriebes einerseits die über Kupplung D schaltbare Verbindung zwischen der Welle 2 des Getriebes und dem Steg ST2 des zweiten Planetenradsatzes RS2 bildet, andererseits auch die über Kupplung E schaltbare Verbindung zwischen der Welle 5 des Getriebes und dem genannten Steg ST2. In dem in Figur 12 dargestellten Ausführungsbeispiel ist dieser gemeinsame Lamellenträger als Außenlamellenträger 410 für die Kupplung D und als Außenlamellenträger 510 für die Kupplung E ausgebildet und auf dem Nabenabschnitt der Welle 5 verdrehbar gelagert. Dabei nimmt der gemeinsame Lamellenträger 410/510 sowohl die Lamellenpakete 400, 500 als auch die Servoeinrichtungen 430, 530 der beiden Kupplungen D, E auf, wobei die Lamellenpakete 400, 500 der beiden Kupplungen D, E und die Servoeinrichtung 530 der Kupplung E innerhalb eines Zylinderraums angeordnet sind, der durch den gemeinsamen Lamellenträger 410/510 gebildet wird. Räumlich gesehen in einem Bereich axial zwischen den beiden Lamellenpaketen 400, 500 ist der Steg ST2 des zweiten Planetenradsatzes RS2 in ein entsprechendes Mitnahmeprofil am gemeinsamen Lamellenträger 410/510 formschlüssig eingehängt.

Aufgrund dieser kinematischen Kopplung kann es in einer anderen Ausgestaltung der Kupplungs-Baugruppe mit den beiden Kupplungen D, E vorgesehen sein, dass der Außenlamellenträger 410 der Kupplung D und der Steg ST2 des zweiten Planetenradsatzes RS2 fest miteinander verbunden oder als gemeinsames Bauteil einstückig ausgeführt sind, welches dann bei der Montage über ein geeignetes Mitnahmeprofil mit dem Außenlamellenträger 510 der Kupplung E (lösbar) verbunden wird. In diesem Fall nimmt der Außenlamellenträger 510 der Kupplung E neben dem Lamellenpaket 500 und der Servoeeinrichtung 530 der Kupplung E auch die Servoeinrichtung 430 der Kupplung D auf.

Zurückkommend zu Figur 12, werden nachfolgend die Servoeinrichtungen 430, 530 der beiden Kupplungen D, E näher erläutert. Entsprechend der räumlichen Lage des Lamellenpaketes 500 der Kupplung E radial über der Kupplung C ist die dem Lamellenpaket 500 zugeordnete Servoeinrichtung 530 räumlich gesehen unmittelbar benachbart zur Kupplung C angeordnet, dabei unmittelbar angrenzend an den gemeinsamen Innenlamellenträger 320/520 der Kupplungen C, E bzw. unmittelbar angrenzend an die Welle 5 des Getriebes, weitgehend auf der Seite der der Radsatz-Baugruppe RS2/RS4 abgewandten Seite der Kupplung C. Wie bereits angedeutet, bildet der Außenlamellenträger 510 der Kupplung E in diesem Bereich einen in Richtung Radsatz-Baugruppe RS2/RS4 bzw. in Richtung Getriebe-Antrieb offenen Zylinderraum, innerhalb dessen die Servoeinrichtung 530 der Kupplung E angeordnet ist. Dabei umfasst die Servoeinrichtung 530 einen Kolben 531, ein Kolben-Rückstellelement 532, einen Druckraum 533, eine Stauscheibe 535 und einen Druckausgleichsraum 536. Der Kolben 531 ist am Außenlamellenträger 510 axial verschiebbar gelagert und bildet zusammen mit dem Außenlamellenträger 510 den Druckraum 533, der über eine Druckmittelzuführung 534 mit Druckmittel beaufschlagbar ist. Auf der dem Druckraum 533 gegenüberliegenden Seite des Kolbens 531, also auf der dem Planetenradsatz RS4 zugewandten Seite des Kolbens 531, ist der Druckausgleichsraum 536 angeordnet, der durch den Kolben 531 und die axial am Außenlamellenträger 510 festgesetzte Stauscheibe 535 gebildet wird und zum Ausgleich des rotatorischen Drucks der stets mit Drehzahl der Welle 8 rotierenden Druckraums 533 drucklos mit Schmiermittel befüllbar ist. Die entsprechende Schmiermittelzuführung ist mit 537 bezeichnet. Axial zwischen Kolben 531 und Stauscheibe 535 ist das hier beispielhaft als Tellerfeder ausgeführte Rückstellelement 532 eingespannt. Wird der Druckraum 533 der Servoeinrichtung 530 mit Druckmittel befüllt, so betätigt der Kolben 531 das ihm zugeordnete Lamellenpaket 500 gegen die Kraft des Rückstellelementes 532 axial in Richtung Getriebe-Antrieb bzw. axial in Richtung Planetenradsatz RS2. Der Kolben 531 der Servoeinrichtung 510 der Kupplung E umgreift also den gemeinsamen Innenlamellenträger 320/520 der Kupplungen C, E abschnittsweise.

Die dem Lamellenpaket 400 der Kupplung D zugeordnete Servoeinrichtung 430 ist räumlich gesehen weitgehend auf der Seite des Außenlamellenträgers 510 der Kupplung E angeordnet, die der Radsatz-Baugruppe RS2/RS4 abgewandt bzw. dem ersten Planetenradsatz RS1 zugewandt ist, dabei unmittelbar angrenzend an den Außenlamellenträger 510 der Kupplung E bzw. unmittelbar angrenzend an die Welle 8 des Getriebes. Dabei umfasst die Senroeinrichtung 430 einen Kolben 431, ein Kolben-Rückstellelement 432, einen Druckraum 433, eine Stauscheibe 435 und einen Druckausgleichsraum 436. Der Kolben 431 ist am Außenlamellenträger 510 der Kupplung E axial verschiebbar gelagert und bildet zusammen mit diesem Außenlamellenträger 510 den Druckraum 433, der über eine Druckmittelzuführung 434 mit Druckmittel beaufschlagbar ist. Dabei sind die Druckräume 433 und 533 der Kupplungen D und unmittelbar axial benachbart zueinander angeordnet und nur durch eine Mantelfläche des Außenlamellenträgers 510 voneinander getrennt. Auf der dem Druckraum 433 der Kupplung D gegenüberliegenden Seite des Kolbens 431, also auf der dem Planetenradsatz RS1 zugewandten Seite des Kolbens 431, ist der Druckausgleichsraum 436 angeordnet, der durch den Kolben 431 und die axial am Außenlamellenträger 510 festgesetzte Stauscheibe 435 gebildet wird und zum Ausgleich des rotatorischen Drucks der stets mit Drehzahl der Welle 8 rotierenden Druckraums 433 drucklos mit Schmiermittel befüllbar ist. Die entsprechende Schmiermittelzuführung ist mit 437 bezeichnet. Axial zwischen Kolben 431 und Stauscheibe 435 ist das hier beispielhaft als Tellerfeder ausgeführte Rückstellelement 432 eingespannt. Wird der Druckraum 433 der Servoeinrichtung 430 mit Druckmittel befüllt, so betätigt der Kolben 431 das ihm zugeordnete Lamellenpaket 400 der Kupplung D gegen die Kraft des Rückstellelementes 432 "ziehend" axial in Richtung Planetenradsatz RS1 bzw. axial in zum Getriebe-Antrieb entgegengesetzter Richtung. Entsprechend der räumlichen Lage des Lamellenpaketes 400 der Kupplung D in einem Bereich axial zwischen den Planetenradsätzen RS3 und RS2 weist der Kolben 431 der Servoeinrichtung 430 ein auf das Lamellenpaket 400 wirkendes Betätigungselement auf, welches die Außenlamellenträger 510, 410 beider Kupplungen E, D in axialer und radialer Richtung außen umgreift und von der Seite her auf das Lamellenpaket 400 wirkt, die dem Druckraum 433 dieser Servoeinrichtung 430 gegenüberliegt. Zweckmäßigerweise ist der Kolben 431 mit seinem auf das Lamellenpaket 400 wirkenden Betätigungselement dabei an die Außenkontur der Außenlamellenträger 510/410 angepasst.

Wie in Figur 12 ersichtlich, ist die Welle 5 des Getriebes, die ja die Verbindung zwischen dem Hohlrad HO2 des zweiten Planetenradsatzes RS2 und dem Sonnenrad SO1 des ersten Planetenradsatzes RS1 bildet, also bis auf ihren Verbindungsbereich zum Sonnenrad SO1 also fast vollständig - innerhalb des Zylinderraums angeordnet, der durch die Welle 8 bzw. den gemeinsamen Außenlamellenträger der Kupplungen D, E gebildet wird. Die Welle 6 des Getriebes, die ja die Verbindung zwischen dem Hohlrad HO3 des dritten Planetenradsatzes RS3 und dem Steg ST1 des ersten Planetenradsatzes RS1 bildet, übergreift also alle drei Kupplungen C, C, E und den Planetenradsatz RS2 in axialer Richtung radial vollständig.

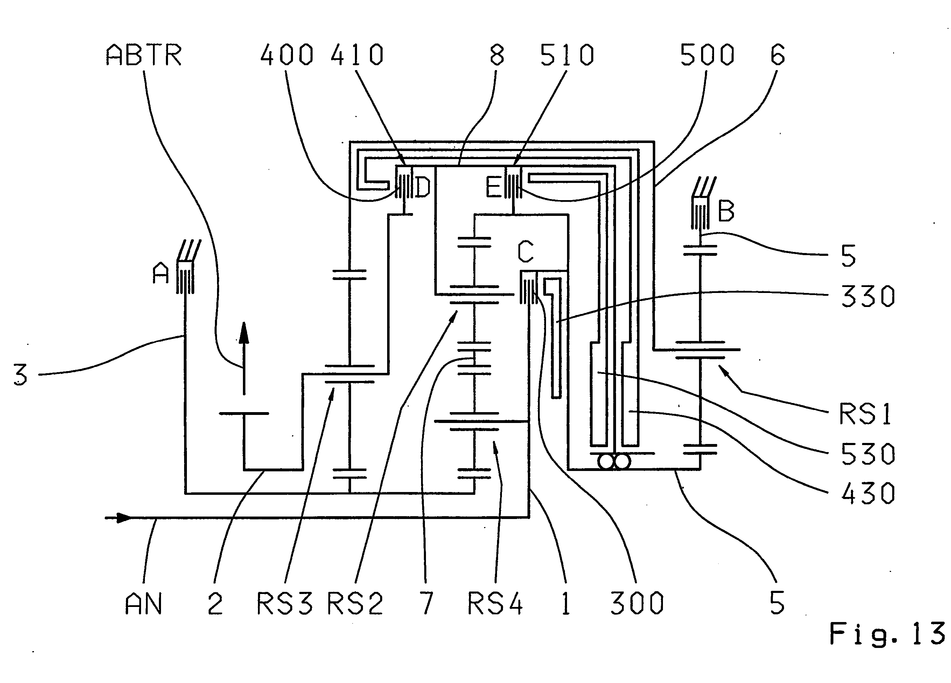

Zum besseren Verständnis der kinematischen Kopplung dieses zweiten Ausführungsbaispiels eines erfindungsgemäßen Mehrstufengetriebes zeigt Figur 13 eine vereinfachte schematische Darstellung dieses Mehrstufengetriebes gemäß Figur 12.

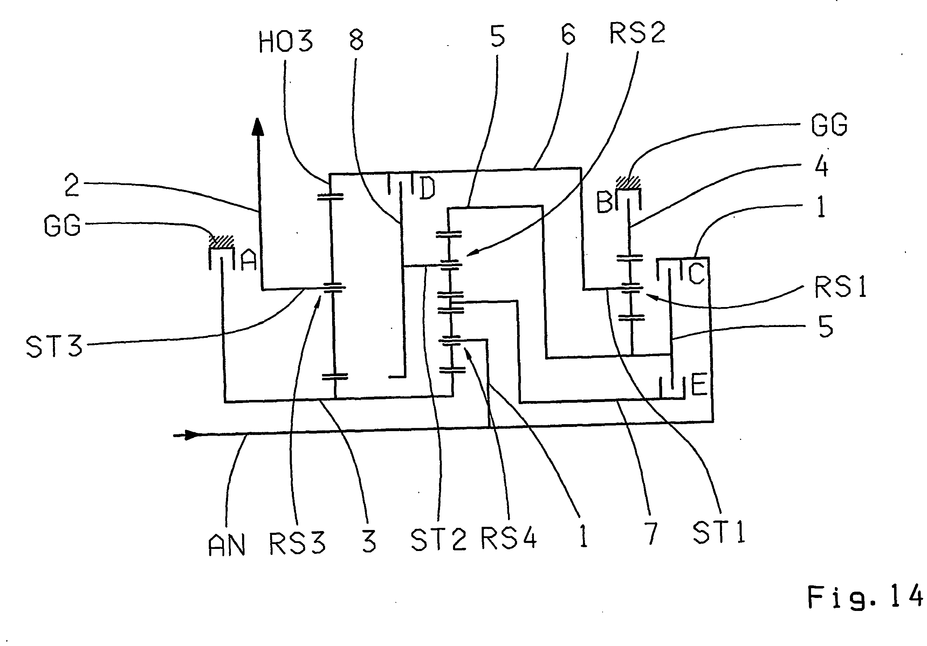

In Figur 14 schließlich ist ein drittes Ausführungsbeispiel eines erfindungsgemäßen Mehrstufengetriebes dargestellt, basierend auf dem Radsatzkonzept und der räumlichen Bauteilanordnung des anhand Figur 5 zuvor erläuterten Ausführungsbeispiels eines erfindungsgemäßen Mehrstufengetriebes. Der einzige Unterschied zu Figur 5 betrifft die kinematische Anbindung des Kupplung D an die Radsatzelemente bzw. Getriebewellen. Im Unterschied zu Figur 5 ist die Kupplung D nunmehr im Kraftfluss zwischen der Welle 6 und der Welle 8 des Getriebes angeordnet. Gemäß Figur 13 ist also nunmehr der ständig mit dem Hohlrad HO3 des dritten Planetenradsatzes RS3 verbundene Steg ST1 des ersten Planetenrädsatzes RS1 mittels der Kupplung D mit dem Steg ST2 des zweiten Planetenradsatzes RS2 verbindbar. Gemäß Figur 13 ist also nunmehr die Welle 2 bzw. der Steg ST3 des dritten Planetenradsatzes RS3 mit keinem anderen Radsatzelement verbindbar. Die in Figur 2 für das Radsatzschema gemäß Figur 1 dargestellte Schaltlogik kann auch für das Mehrstufengetriebe gemäß Figur 14 übernommen werden. Es sei jedoch darauf hingewiesen, das sich durch die modifizierte kinematische Anbindung der Kupplung D gemäß Figur 14 gegenüber dem Radsatzschema gemäß Figur 1 andere Übersetzungen ergeben als in Figur 2 dargestellt.

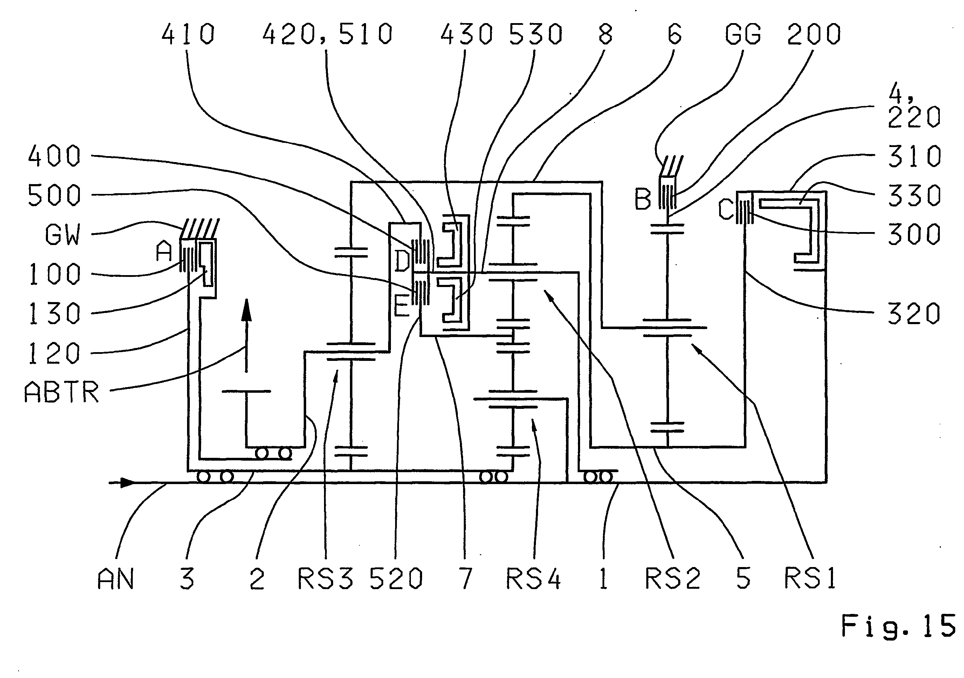

In Figur 15 schließlich ist ein viertes Ausführungsbeispiel eines erfindungsgemäßen Mehrstufengetriebes dargestellt, basierend auf dem anhand Figur 1 ausführlich erläuterten Radsatzkonzept mit vier Planetenradsätzen RS1 bis RS4, acht Wellen 1 bis 8, die verschiedenen Radsatzelementen zugeordnet sind, sowie fünf Schaltelementen A bis E zur kinematischen Kopplung der Radsatzelemente miteinander und mit Antriebs- und Abtriebswelle Ausgehend von der Überlegung, dass das fünfte Schaltelement E nur zum Blockieren des zweiten Planetenradsatzes RS2 vorgesehen ist, unterscheidet sich das Radsatzschema des Mehrstufengetriebe gemäß Figur 15 von dem zuvor in Figur 1 dargestellten ersten Ausführungsbeispiel eines erfindungsgemäßen Mehrstufengetriebes lediglich durch die kinematische Anbindung dieses fünften Schaltelementes E. Im Unterschied zu Figur 1, bei der die geschlossene Kupplung E den zweiten Planetenradsatzes RS2 durch Verbinden von Hohlrad und Sonnenrad dieses Planetenradsatzes RS2 (Verbinden der Wellen 5 und 7) blockiert, ist gemäß Figur 15 nunmehr vorgesehen, dass das fünfte Schaltelement E im Kraftfluss zwischen der siebten Welle 7 und der achten Welle 8 angeordnet ist. Wie in Figur 1 ist auch in Figur 15 die Welle 7 durch das ständig mit dem Sonnenrad des zweiten Planetenradsatzes RS2 verbundene Hohlrad des vierten Planetenradsatzes RS4 definiert und die Welle 8 durch den ständig mit dem Sonnenrad des ersten Planetenradsatzes RS1 verbundenen Steg des zweiten Planetenradsatzes RS2 definiert. Ist die Kupplung E geschlossen, so ist der zweite Planetenradsatz RS2 verblockt.

Wie in Figur 1, so ist auch in Figur 15 vorgesehen, dass das vierte Schaltelement D im Kraftfluss zwischen der zweiten Welle 2 und der achten Welle 8 angeordnet ist. Wie in Figur 1 ist auch in Figur 15 die Welle 2 durch den ständig mit dem Abrieb ABTR des Getriebes verbundenen Steg des dritten Planetenradsatzes RS3 definiert. Diese kinematische Ankopplung der beiden Kupplungen D und E an die Planetenradsätze ermöglicht eine fertigungstechnisch günstige Konstruktion dieser beiden Kupplungen D, E als eine Baugruppe, die räumlich gesehen unmittelbar axial zwischen den dritten Planetenradsatz RS3 und der aus dem zweiten und vierten Planetenradsatz RS2, RS4 gebildeten Radsatz-Baugruppe angeordnet sein kann, wie in Figur 15 beispielhaft dargestellt. Vorzugsweise ist dann die Kupplung D in radialer Richtung gesehen über der Kupplung E angeordnet, also auf einem größeren Durchmesser als die Kupplung E. Wie in Figur 15 beispielhaft gezeigt, kann diese Kupplungs-Baugruppe einen für beide Kupplungen D, E gemeinsamen Lamellenträger aufweisen, der beispielsweise als ein Innenlamellenträger 420 zur Aufnahme von beispielsweise als innenverzahnte Stahllamellen ausgeführten Innenlamellen des Lamellenpaketes 400 der Kupplung D und als Außenlamellenträger 510 zur Aufnahme von beispielsweise als außenverzahnte Stahllamellen ausgeführten Außenlamellen des Lamellenpaketes 500 der Kupplung E ausgebildet ist und gleichzeitig auch die ständig mit Drehzahl der Welle 8 rotierenden Servoeinrichtungen 430, 530 dieser beiden Kupplungen B, E zur Betätigung des jeweiligen Lamellenpaketes 400 bzw. 500 axial verschiebbar aufnimmt.

Wie in Figur 15 weiterhin beispielhaft dargestellt, kann das zweite Schaltelement B - hier beispielsweise als Lamellenbremse mit dem Lamellenpaket 200 ausgeführt - in einfacher Weise in einem Bereich radial über dem ersten Planetenradsatz RS1 angeordnet sein, welcher sich axial an die aus dem zweiten Und vierten Planetenradsatz RS2, RS4 gebildete Radsatz-Baugruppe auf deren der Kupplungs-Baugruppe D/E gegenüber liegenden Seite anschließt. Die dem Lamellenpaket 200 zugeordnet Servoeeinrichtung ist in Figur 15 zur Vereinfachung nicht näher eingezeichnet und kann im Prinzip auf beiden Seiten dieses Lamellenpaketes 200 angeordnet sein, beispielsweise in dem Getriebegehäuse integriert. Das dritte Schaltelement C mit seinem Lamellenpaket 300 und seiner diesem Lamellenpaket 300 zugeordneten, ständig mit Drehzahl der Antriebswelle AN rotierende Servoeinrichtung 330 schließt sich beispielhaft axial an den ersten Planetenradsatz RS1 auf dessen der Radsatz-Baugruppe RS2/RS4 abgewandten Seite an. Das erste Schaltelement A - hier beispielsweise als Lamellenbremse mit dem Lamellenpaket 100 ausgeführt - ist beispielhaft auf der Seite des dritten Planetenradsatzes RS3 angeordnet, die der Radsatz-Baugruppe RS2/RS4 gegenüber liegt, wobei axial zwischen Bremse A und Planetenradsatz RS3 der Abtrieb ABTR des Getriebes an den Steg des Planetenradsatzes RS3 angekoppelt ist. Die Servoeinrichtung 130 der Bremse A zur Betätigung deren Lamellenpaketes 200 ist beispielhaft auf der dem Planetenradsatz RS3 zugewandten Seite dieses Lamellenpaketes angeordnet, integriert in eine getriebegehäusefeste Gehäusewand GW, an der auch zumindest ein mit dem Steg des Planetenradsatzes RS3 ständig verbundenes Stirnrad oder Kettenrad des Abtriebs ABTR gelagert ist. Selbstverständlich kann die Servoeinrichtung 130 aber auch auf der anderen Seite des Lamellepaketes 200 angeordnet sein.

Hinsichtlich der räumlichen Verschachtelung der einzelnen Wellen des Getriebes stellt sich das Getriebe gemäß Figur 15 vergleichbar zu den Getrieben gemäß Figur 1 und 4 wie folgt dar: Die erste Welle 1 verläuft abschnittsweise zentrisch innerhalb der dritten Welle 3 und abschnittsweise zentrische innerhalb der fünften Welle 5, die dritte Welle 3 verläuft abschnittsweise zentrisch innerhalb der achten Welle 8 und abschnittsweise zentrisch innerhalb der zweiten Welle 2, die fünfte Welle 5 verläuft zentrisch innerhalb der sechsten Welle 6. Dabei umgreift die sechste Welle 6 das vierte und fünfte Schaltelement D, E sowie den zweiten Planetenradsatz RS12 in axialer und radialer Richtung zumindest teilweise.

Selbstverständlich sind die in den Figuren 4 bis 11 beschriebenen Bauteilanordnungs-Varianten nicht auf die Anwendung des Radsatzkonzeptes gemäß Figur 1 beschränkt. Der Fachmann wird diese Varianten bei Bedarf auch ohne erfinderisches Hinzutun sinngemäß auf die anderen erfindungsgemäßen Radsatzkonzepte, wie sie beispielsweise in den Figuren 12, 13, 14 und 15 dargestellt sind, übertragen.

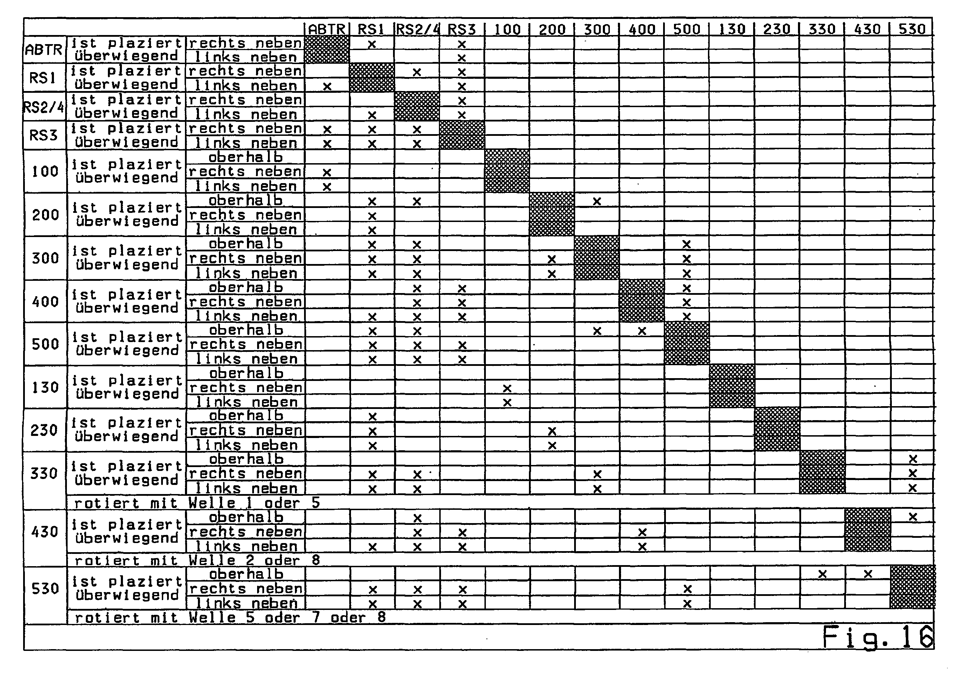

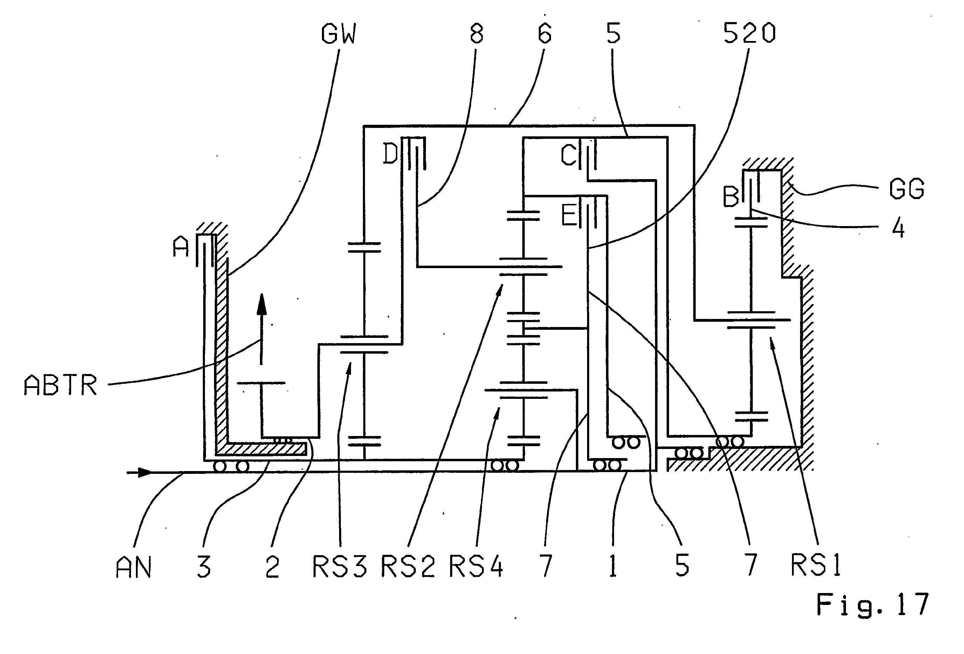

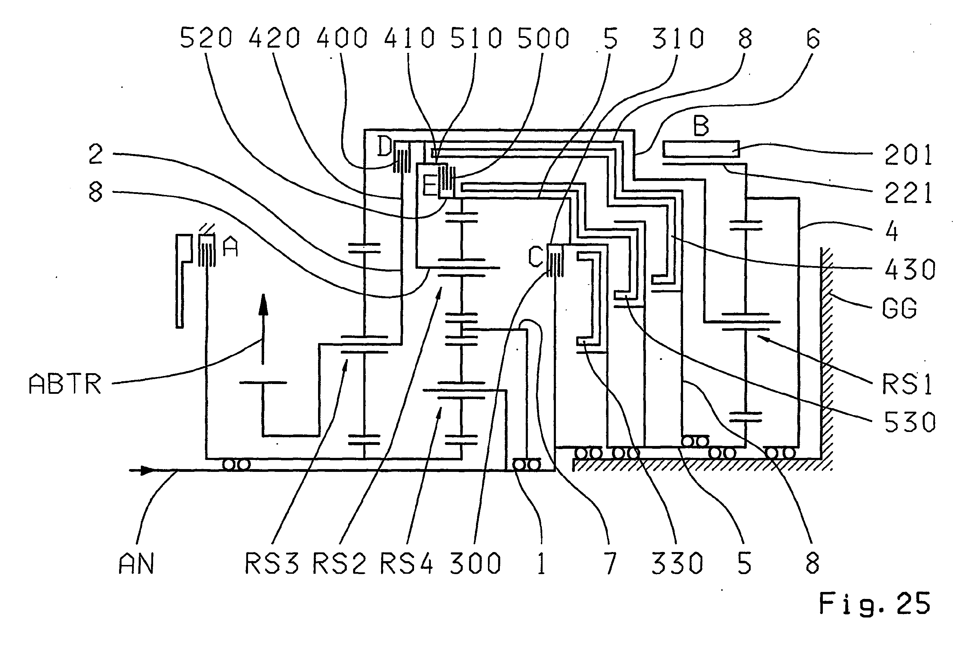

So zeigt Figur 16 eine beispielhafte tabellarische Übersicht sinnvoller Variationen der räumlichen Anordnung von Getriebeelementen relativ zueinander, unter Verwendung der bereits bekannten Nomenklatur für die Abtriebsstufe, die Planetenradsätze, die Lamellenpakete der Schaltelemente und die Servoeinrichtungen der Schaltelemente. Entsprechend sollen nun im Folgenden anhand der Figuren 17 bis 24 acht weitere konstruktiv sinnvolle Bauteilanordnungs-Varianten für das Mehrstufengetriebe gemäß Figur 1 kurz erläutert werden, sowie anhand der Figuren 25 bis 28 vier weitere konstruktiv sinnvolle Bauteilanordnungs-Varianten für das Mehrstufengetriebe gemäß Figur 12 bzw. Figur 13, jeweils unter Verwendung der bereits bekannten Nomenklatur für die Getriebebauteile.

Figur 17 zeigt eine beispielhafte achte Bauteilanordnungs-Variante für das Mehrstufengetriebe gemäß Figur 1, basierend auf der Anordnung gemäß Figur 1. Als wesentlicher Unterschied zu Figur 1 ist die Kupplung C räumlich gesehen nunmehr in einem Bereich radial über der Kupplung E angeordnet, wodurch sich der Bauraum innerhalb des Getriebegehäuses GG im Bereich zwischen der radial vergleichsweise groß bauenden Radsatz-Baugruppe RS2/RS4 und dem Einzel-Radsatz RS1 gut ausnutzen lässt. Die Welle 7, also Sonnenrad des radial äußeren Planetenradsatzes RS2 und Hohlrad des radial inneren Planetenradsatzes RS4 der Radsatz-Baugruppe RS2/RS4 ist auch als Innenlamellenträger 520 für die Kupplung E ausgebildet und in konstruktiv einfacher Weise an der Welle 1 bzw. der Antriebswelle AN verdrehbar gelagert.

Hinsichtlich der räumlichen Verschachtelung der einzelnen Wellen des Getriebes stellt sich das Getriebe gemäß Figur 17 ähnlich dar wie das Getriebe gemäß der Figuren 15, mit vier zusätzlichen Details: Die erste Welle 1 verläuft abschnittsweise zentrisch innerhalb der dritten Welle 3 und abschnittsweise zentrisch innerhalb der fünften Welle 5 und abschnittsweise zentrisch innerhalb der siebten Welle 7, die dritte Welle 3 verläuft abschnittsweise zentrisch innerhalb der achten Welle 8 und abschnittsweise zentrisch innerhalb der zweiten Welle 2, die siebte Welle 7 verläuft abschnittsweise zentrisch innerhalb der fünften Welle 5, die fünfte Welle 5 verläuft zentrisch innerhalb der sechsten Welle 6. Dabei umgreift die sechste Welle 6 das dritte, vierte und fünfte Schaltelement C, D, E sowie den zweiten Planetenradsatz RS2 in axialer und radialer Richtung zumindest teilweise. Weiterhin umgreift ein Abschnitt der ersten Welle 1 das fünfte Schaltelement E in axialer und radialer Richtung zumindest teilweise.

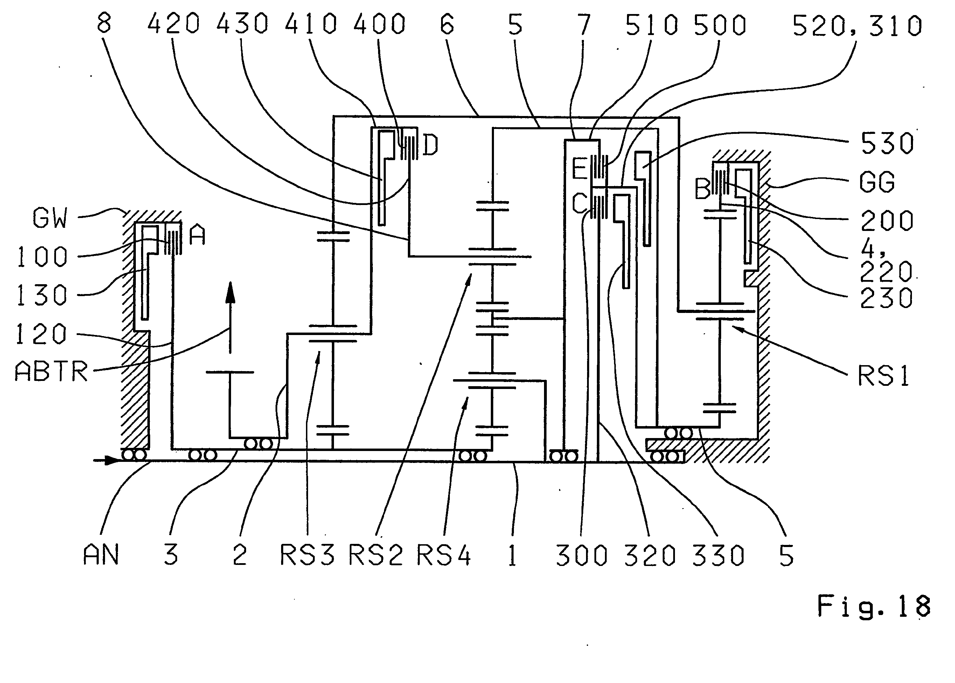

Figur 18 zeigt eine beispielhafte neunte Bauteilanordnungs-Variante für das Mehrstufengetriebe gemäß Figur 1, wiederum basierend auf der BauteilAnordnung gemäß Figur 1. Besonders hingewiesen soll auf die in Figur 18 dargestellte konstruktive Ausbildung einer Kupplungs-Baugruppe mit den beiden Kupplungen C und E, wobei das Lamellenpaket 500 der Kupplung E räumlich gesehen zumindest weitgehend radial über dem Lamellenpaket 300 der Kupplung C angeordnet ist und ein für beide Kupplungen C, E gemeinsamer Lamellenträger vorgesehen ist, der beispielhaft für die radial innere Kupplung C als Außenlamellenträger 310 und für die radial äußere Kupplung E als Innenlamellenträger 520 ausgebildet ist. Weiterhin besonders hingewiesen soll auf die in Figur 18 dargestellte räumliche Anordnung aller Servoeinrichtungen 130, 230, 330, 430 und 530 der fünf Schaltelemente A, B, C, D und E. Die Lagerung der Welle 7 an der Welle 1 bzw. der Antriebswelle AN ist vergleichbar günstig wie bei dem Getriebe gemäß Figur 17, ungeachtet dessen, dass in Figur 18 der Außenlamellenträger 510 der Kupplung E einen Abschnitt dieser Welle 7 bildet.

Bis auf das Detail, dass die erste Welle 1 des Getriebes das fünfte Schaltelement E in axialer und radialer Richtung nicht umgreift, ist die räumliche Verschachtelung der einzelnen Wellen des Getriebes gemäß Figur 18, identisch zu der Wellen-Verschachtelung des Getriebes gemäß Figur 17.

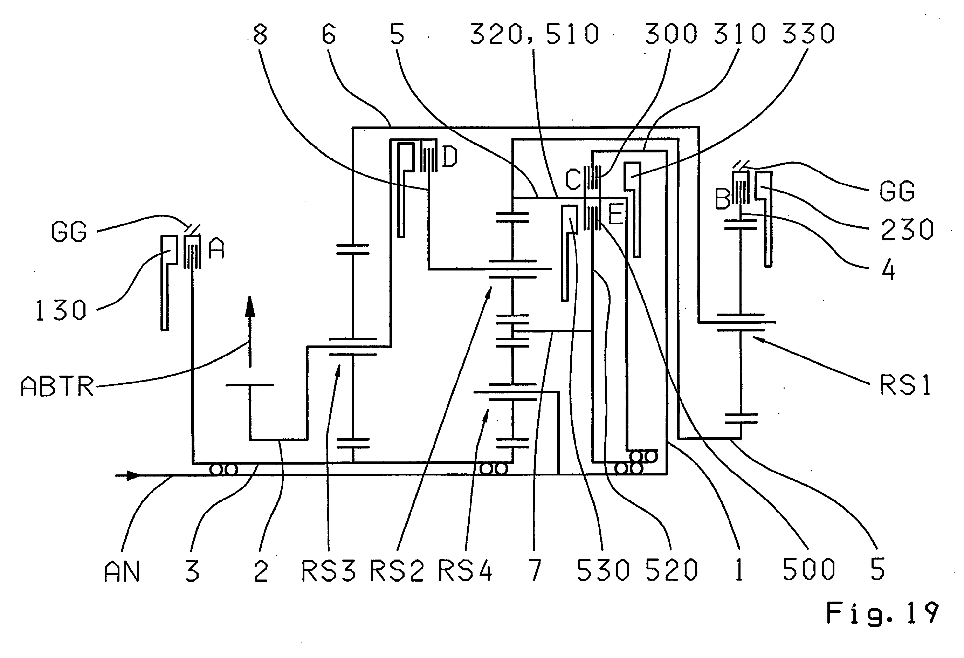

Figur 19 zeigt eine beispielhafte zehnte Bauteilanordnungs-Variante für das Mehrstufengetriebe gemäß Figur 1, wiederum basierend auf der BauteilAnordnung gemäß Figur 1. Besonders hingewiesen soll auf die in Figur 19 dargestellte konstruktive Ausbildung einer Kupplungs-Baugruppe mit den beiden Kupplungen C und E, wobei das Lamellenpaket 300 der Kupplung C räumlich gesehen zumindest weitgehend radial über dem Lamellenpaket 500 der Kupplung E angeordnet ist und ein für beide Kupplungen C, E gemeinsamer Lamellenträger vorgesehen ist, der beispielhaft für die radial innere Kupplung E als Außenlamellenträger 510 und für die radial äußere Kupplung C als Innenlamellenträger 320 ausgebildet ist. Je nachdem, ob die Servoeinrichtung 330 der Kupplung C axial verschiebbar an dem gemeinsamen Lamellenträger C/E gelagert ist oder axial verschiebbar im Zylinderraum des Außenlamellenträgers 310 gelagert ist, rotiert die Servoeinrichtung 330 stets mit Drehzahl der Welle 5 oder stets mit Drehzahl der Antriebswelle AN bzw. der Welle 1. Die Integration der Servoeinrichtung in den Außenlamellenträgers 310 ermöglicht eine konstruktiv besonders einfache Zuführung von Druck- um Schmiermittel zu dieser Servoeinrichtung 330. Die dargestellte Anordnung der Servoeinrichtung 530 der Kupplung E auf der Seite des ihr zugeordneten Lamellenpaketes 500, die der Radsatz-Baugruppe RS2/RS4 zugewandt ist, ist als beispielhaft anzusehen; es ist ohne weiteres auch möglich, diese Servoeinrichtung 530 auf der anderen Seite des Lamellenpaktes 500 anzuordnen, ohne dass hierdurch Einbußen in der Zuführung von Druck- um Schmiermittel zu dieser Servoeinrichtung 530 akzeptiert werden müssen.

Die räumliche Verschachtelung der einzelnen Wellen des Getriebes gemäß Figur 19 ist vergleichbar zu der Wellen-Verschachtelung des Getriebes gemäß Figur 17.

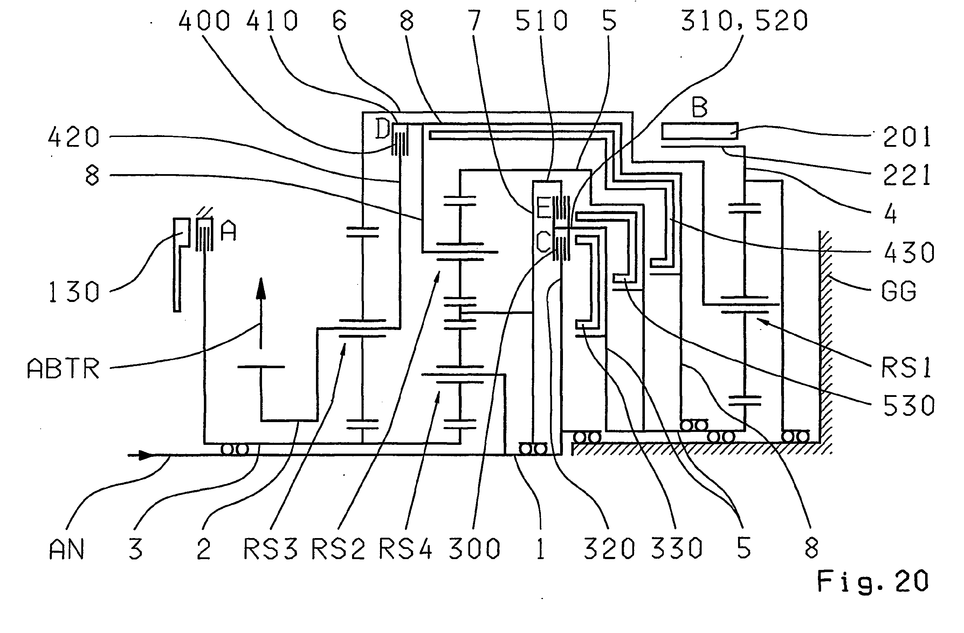

Figur 20 zeigt eine beispielhafte elfte Bauteilanordnungs-Variante für das Mehrstufengetriebe gemäß Figur 1. Besonders hingewiesen soll hierbei auf die Ausführung der Bremse B nunmehr beispielhaft als Bremsband 201, auf die Ausgestaltung der Kupplungs-Baugruppe C/E ähnlich der Figur 18, sowie auf die konstruktive Ausbildung der Kupplung D ähnlich Figur 12 bzw. Figur 13. Während das Lamellenpaket 400 der Kupplung D räumlich gesehen axial zwischen dem Einzel-Radsatz RS3 und der Radsatz-Baugruppe RS2/RS4 angeordnet ist, ist die diesem Lamellenpaket 400 zugeordnete Servoeinrichtung 430 der Kupplung D zumindest überwiegend - d.h. zumindest mit ihrem Druck- und Druckausgleichsraum - in einem Bereich zwischen der Radsatz-Baugruppe RS2/RS4 und dem Einzel-Radsatz RS1 nahe diesem Radsatz RS1 angeordnet ist. Hierbei ist die Servoeinrichtung 430 axial verschiebbar in dem Außenlamellenträger 410 gelagert, welcher einen Abschnitt der Welle 8 bildet und sowohl die Radsatz-Baugruppe RS2/RS4 als auch die die zuvor genannte Kupplungs-Baugruppe C/E in axialer Richtung vollständig übergreift und in einem Bereich nahe dem Sonnenrad des ersten Planetenradsatzes RS1 auf einem Abschnitt der Welle 5 bzw. am Sonnenrad des ersten Planetenradsatzes RS1 verdrehbar gelagert ist. Auf das Lamellenpaket 400 wirkende Betätigungsfinger des Kolbens dieser Servoeinrichtung 430 übergreift die Radsatz-Baugruppe RS2/RS4 und die Kupplungs-Baugruppe C/E in axialer Richtung vollständig und durchgreift nahe an dem Lamellenpaket 400 ein Stegblech des zweiten Planetenradsatzes RS2, welches als Abschnitt der Welle 8 mit dem Außenlamellenträger 410 der Kupplung D verdrehfest verbunden ist. Für diesen Durchgriff weist das genannte Stegblech des zweiten Planetenradsatzes RS2 in axialer Öffnungen bzw. Durchbrüche auf, korrespondierend zu den genannten Betätigungsfingern des Kolbens der Servoeinrichtung 430 der Kupplung D.

Die Konstruktion der Bremse B als Bandbremse umfasst ein Bremsband 201, einen als Welle 4 mit dem Hohlrad des ersten Planetenradsatz RS1 verbundenen Bremsbandzylinder 221 sowie eine hier nicht näher dargestellte Servoeinrichtung zum Betätigen dieses Bremsbandes 201. In axialer Richtung gesehen erstreckt sich das Bremsband 201 ausgehend vom Hohlrad des Planetenradsatzes RS1 in Richtung der Radsatz-Baugruppe RS2/RS4, wodurch sich eine vergleichsweise kurze axiale Baulänge des Getriebes ergibt.

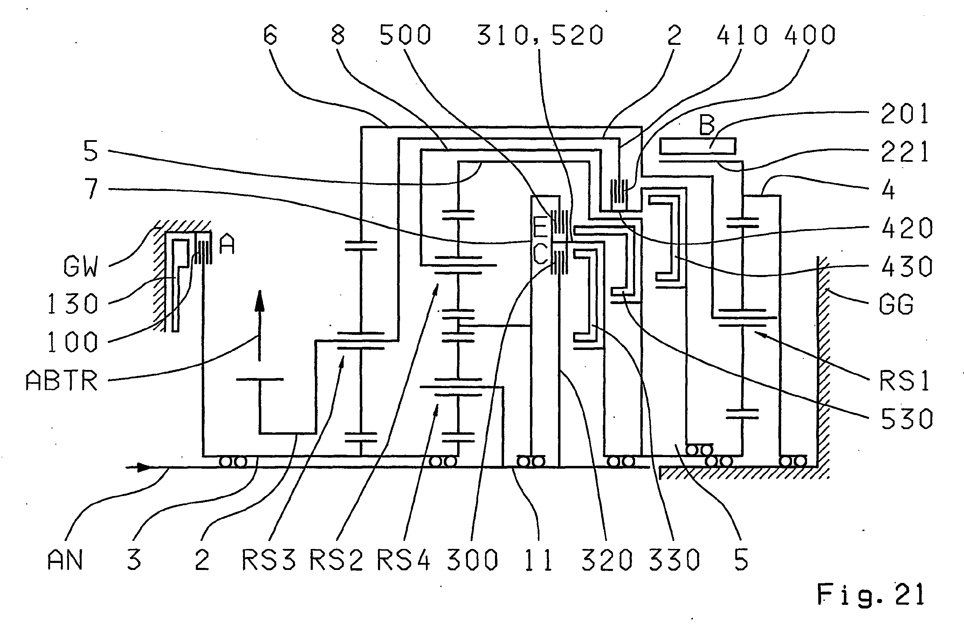

Hinsichtlich der räumlichen Verschachtelung der einzelnen Wellen des Getriebes stellt sich das Getriebe gemäß Figur 21 - ähnlich wie das Getriebe gemäß der Figuren 12 und 13 - wie folgt dar: Die erste Welle 1 verläuft abschnittsweise zentrisch innerhalb der dritten Welle 3 und abschnittsweise zentrisch innerhalb der fünften Welle 5, die dritte Welle 3 verläuft abschnittsweise zentrisch innerhalb der achten Welle 8 und abschnittsweise zentrisch innerhalb der zweiten Welle 2, die fünfte Welle 5 verläuft abschnittsweise zentrisch innerhalb der achten Welle 8, die achte Welle 8 verläuft zentrisch innerhalb des sechsten Welle 6. Dabei umgreift die sechste Welle 6 das vierte Schaltelement D und den zweiten Planetenradsatz RS2 in axialer und radialer Richtung zumindest teilweise.

Figur 21 zeigt eine beispielhafte zwölfte Bauteilanordnungs-Variante für das Mehrstufengetriebe gemäß Figur 1, basierend auf der zuvor beschriebenen Bauteilanordnungs-Variante gemäß Figur 20. Im Unterschied zu Figur 20 ist das Lamellenpaket 400 der Kupplung D nunmehr in einem Bereich axial zwischen der Radsatz-Baugruppe RS2/RS4 und dem Einzel-Radsatz RS1 angeordnet, konkret in einem Bereich axial zwischen dem Lamellenpaket 500 der Kupplung E und dem Planetenradsatz RS1. Räumlich gesehen ist das Lamellenpaket 400 dabei in etwa radial über der Servoeinrichtung 530 der Kupplung E angeordnet. Der Innenlamellenträger 420 der Kupplung D bildet einen Abschnitt der Welle 8 und ist entsprechend ständig mit dem Steg des zweiten Planetenradsatzes RS2 verbunden. Der Außenlamellenträger 410 der Kupplung D bildet einen Abschnitt der Welle 2 und ist entsprechend ständig mit dem Steg des zweiten Planetenradsatzes RS3 und der Abtriebsstufe ABTR verbunden. Die Servoeinrichtung 430 der Kupplung D ist auf der Seite des ihr zugeordneten Lamellenpaketes 400 der Kupplung D angeordnet, die dem ersten Planetenradsatz RS1 zugewandt ist. Dabei ist diese Servoeinrichtung 430 in einem Zylinder axial verschiebbar angeordnet, der räumlich gesehen axial zwischen der Kupplungs-Baugruppe C/E und dem ersten Planetenradsatz RS1 angeordnet ist, axial an den ersten Planetenradsatz RS1 angrenzt und im Bereich des Sonnenrades dieses Planetenradsatzes RS1 auf einem Abschnitt der Welle 5 bzw. an dem Sonnenrad dieses Planetenradsatzes RS1 verdrehbar gelagert ist. Der genannte Zylinder ist auf der dem ersten Planetenradsatz RS1 zugewandten Seite des Lamellenpaketes 400 mit dem Innenlamellenträger 420 verdrehfest verbunden, beispielsweise mittels einer geeigneten Mitnahmeverzahnung, die einerseits an dem dem Lamellenpaket 400 zugewandten Ende des genannten Zylinders angeordnet ist und andererseits am Außendurchmesser eines Innenlamellenträger-Abschnitts, welcher sich ausgehend vom Innendurchmesser des Lamellenpaketes 400 radial nach außen erstreckt. Zur Betätigung des Lamellenpaketes 400 weist die Servoeinrichtung 430 einen Kolben mit Betätigungsfingem axialer Erstreckung auf, welche genannten radial gerichteten Abschnitt des innenlamellenträgers 420 in axialer Richtung durchgreifen. Entsprechend weißt der genannte radial gerichtete Abschnitt des Innenlamellenträgers 420 in axialer Richtung Öffnungen bzw. Durchbrüche auf, korrespondierend zu den Betätigungsfingem des Kolbens der Servoeinrichtung 430.

Hinsichtlich der räumlichen Verschachtelung der einzelnen Wellen des Getriebes stellt sich das Getriebe gemäß Figur 21 wie folgt dar: Die erste Welle 1 verläuft abschnittsweise zentrisch innerhalb der dritten Welle 3 und abschnittsweise zentrisch innerhalb der siebten Welle 7, die dritte Welle 3 verläuft abschnittsweise zentrisch innerhalb der achten Welle 8 und abschnittsweise zentrisch innerhalb der zweiten Welle 2, die siebte Welle 7 verläuft abschnittsweise zentrisch innerhalb der fünften Welle 5, die fünfte Welle 5 verläuft abschnittsweise zentrisch innerhalb der achten Welle 8, die achte Welle 8 verläuft zentrisch innerhalb der zweiten Welle 2, die zweite Welle 2 verläuft abschnittsweise zentrisch innerhalb der sechsten Welle 6. Dabei umgreift die sechste Welle 6 das dritte, vierte und fünfte Schaltelement C, D, E sowie und den zweiten Planetenradsatz RS2 in axialer und radialer Richtung zumindest teilweise.

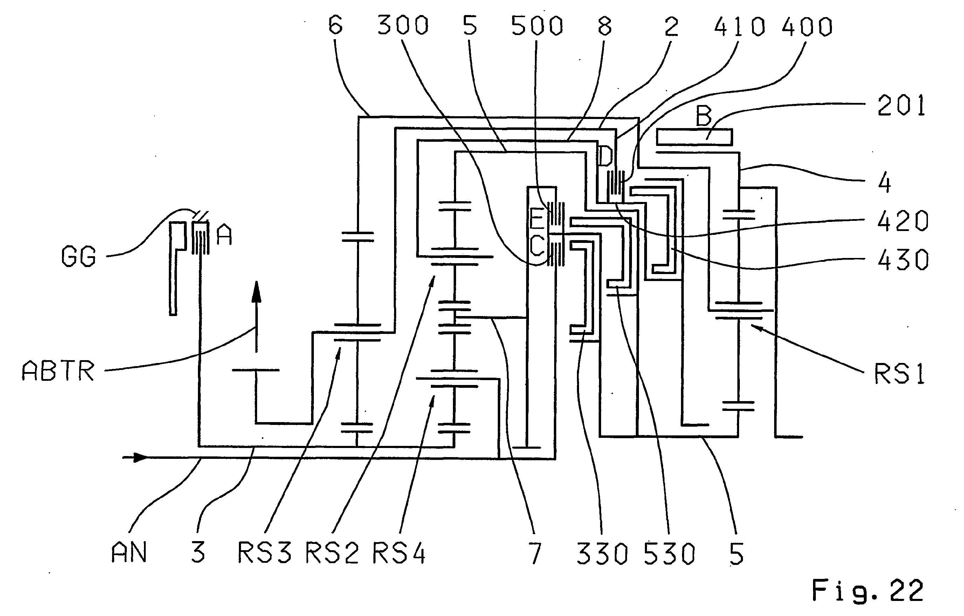

Figur 22 zeigt eine beispielhafte dreizehnte Bauteilanordnungs-Variante für das Mehrstufengetriebe gemäß Figur 1, basierend auf der zuvor beschriebenen Bauteilanordnungs-Variante gemäß Figur 21. Der Unterschied zu Figur 21 betrifft lediglich die Lagerung des Servoeinrichtung 430 der Kupplung D. Zur Vereinfachung der Montage ist der Innenlamellenträger 420 nunmehr als Zylinder ausgebildet, der sich ausgehend von dem Lamellenpaket 400 der Kupplung D axiale in Richtung des ersten Planetenradsatzes RS1 erstreckt und im Bereich des Sonnenrades dieses Planetenradsatzes RS1 auf einem Abschnitt der Welle 5 bzw. an dem Sonnenrad dieses Planetenradsatzes RS1 verdrehbar gelagert ist. Dabei ist die Servoeinrichtung 430 auf der dem ersten Planetenradsatz RS1 zugewandten Seite des Lamellenpaketes 400 angeordnet, räumlich gesehen radial oberhalb der Mantelfläche des zylinderförmigen Innenlamellenträger 420, aber dennoch an diesem Innenlamellenträger 420 axial verschiebbar gelagert. Hinsichtlich der räumlichen Verschachtelung der einzelnen Wellen des Getriebes ist das Getriebe gemäß Figur 22 ähnlich dem in Figur 21 dargestellten Getriebe.

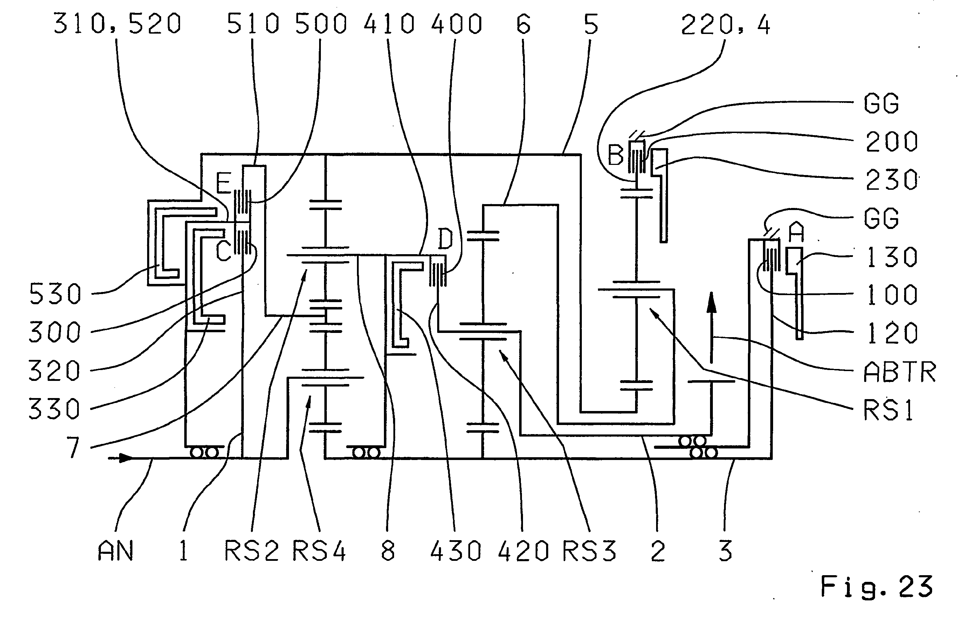

Figur 23 zeigt eine beispielhafte vierzehnte Bauteilanordnungs-Variante für das Mehrstufengetriebe gemäß Figur 1. Als wesentliches Detail sei auf die gegenüber Figur 1 geänderte Reihenfolge der Planetenradsätze in axialer Richtung hingewiesen, wobei der zweite und vierte Planetenradsatz RS2, RS4 unverändert eine Radsatz-Baugruppe bilden, bei der der zweite Planetenradsatz RS2 radial über dem vierten Planetenradsatz RS4 angeordnet ist, mit einer ständigen Verbindung zwischen dem Sonnenrad des radial äußeren Planeten radsatzes RS2 und dem Hohlrad der radial inneren Planetenradsatzes RS4. Der Steg des zweiten (radial äußeren) Planetenradsafizes RS2 ist in konstruktiv einfacher Weise an der Welle 3 verdrehbar gelagert.

Durch diese besondere Reihenfolge der Radsätze in axialer Richtung ergibt sich in Verbindung mit der kinematischen Kopplung der Radsätze und Schaltelemente die Möglichkeit, das dritte und fünfte Schaltelement C, E zu einer vormontierbaren Baugruppe zusammenzufassen, die auf der Seite der Radsatz-Baugruppe RS2/RS4 angeordnet ist, die dem dritten Planetenradsatz RS3 abgewandt ist bzw. gegenüber liegt, hier beispielhaft auf der dem Antrieb des Getriebes zugewandten Seite der Radsatz-Baugruppe RS2/RS4. Das vierte Schaltelement D ist axial zwischen der Radsatz-Baugruppe RS2/RS4 und dem dritten Planetenradsatz RS3 angeordnet, dabei axial unmittelbar angrenzend an diese Planetenradsätze RS2, RS4 und RS3. Das zweite Schaltelement B ist beispielhaft in einem Bereich radial über dem ersten Planetenradsatz RS1 angeordnet. Das erste Schaltelement A ist beispielhaft auf der dem dritten Planetensatz RS3 abgewandten Seite des ersten Planetenradsatzes RS1 angeordnet, wobei axial zwischen dem ersten Planetenradsatz RS1 und der Bremse A ein mit dem Steg des dritten Planetenradsatzes RS3 ständig verbundenes Stirn- oder Kettenrad der Abtriebsstufe ABTR angeordnet ist

Hinsichtlich der räumlichen Verschachtelung der einzelnen Wellen des Getriebes stellt sich das Getriebe gemäß Figur 23 wie folgt dar: Die erste Welle 1 verläuft abschnittsweise zentrisch innerhalb der fünften Welle 5 und abschnittsweise zentrisch innerhalb der siebten Welle 7, die siebte Welle 7 verläuft zentrisch innerhalb der fünften Welle 5, die achte Welle 8 verläuft zentrisch innerhalb der fünften Welle 5, die dritte Welle 3 verläuft abschnittsweise zentrisch innerhalb der achten Welle 8 und abschnittsweise zentrisch innerhalb der zweiten Welle 2, die zweite Welle 2 verläuft abschnittsweise zentrisch innerhalb der fünften Welle 5 und abschnittsweise zentrisch innerhalb der sechsten Welle 6, und die sechste Welle 6 verläuft zentrisch innerhalb der fünften Welle (5). Dabei umgreift die fünfte Welle 5 das dritte, vierte und fünfte Schaltelement C, D, E sowie den zweiten Planetenradsatz RS2 und den dritten Planetenradsatz RS3 in axialer und radialer Richtung zumindest teilweise

In vorteilhafter Weise umfasst die genannte Kupplurigs-Baugruppe C/E einen für beide Kupplungen C, E gemeinsamen Lamellenträger, die Lamellenpakete 300, 500 beider Kupplungen C, E und die Servoeinrichtungen 330, 530 beider Kupplungen C, E zum Betätigen des jeweiligen Lamellenpaketes 300 bzw. 500. Der genannte gemeinsame Lamellenträger bildet einen Abschnitt der Welle 5, ist also ständig mit dem Hohlrad des zweiten Planetenradsatzes RS2 und dem Sonnenrad des ersten Planetenradsatzes RS1 verdrehfest verbunden. Konstruktiv beispielhaft ist der genannte gemeinsame Lamellenträger in Figur 23 für die Kupplung C als Außenlamellenträger 310 und für die Kupplung E als Innenlamellenträger 520 ausgebildet, nimmt die beiden Servoeinrichtungen 330, 530 axial verschiebbar auf und ist an der Antriebswelle AN bzw. an der Welle 1 verdrehbar lagert.

Für den Fachmann ist leicht ersichtlich, dass der Antrieb des Getriebes auch auf der Seite des Getriebes angeordnet sein kann, an der die Bremse A angeordnet ist, wobei dann die Welle 3 als Hohlwelle ausgebildet ist, welche die Welle 1 bzw. die Antriebswelle AN radial umschließt. Dem Fachmann ist auch ersichtlich, dass die Bauteilanordnung gemäß Figur 23 eine konstruktiv besonders einfache Druck- und Schmiermittelzufuhr zu allen fünf Schaltelementen A bis E ermöglicht.

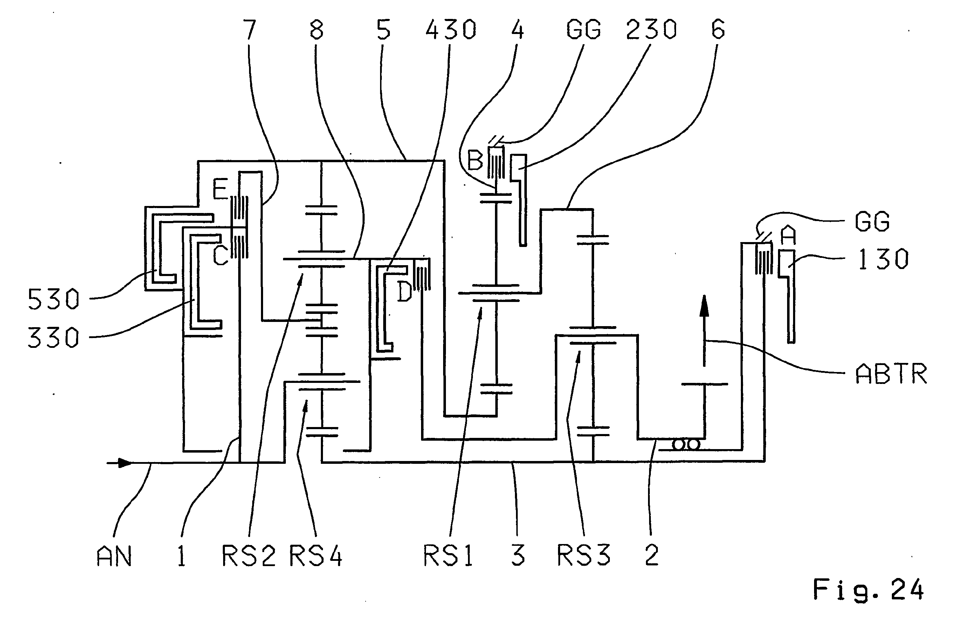

Figur 24 zeigt eine beispielhafte fünfzehnte Bauteilanordnungs-Variante für das Mehrstufengetriebe gemäß Figur 1, basierend auf dem zuvor in Figur 23 näher erläuterten Getriebe. Der wesentliche Unterschied zu Figur 23 betrifft die geänderte Reihenfolge der Planetenradsätze in axialer Richtung, wodurch sich insbesondere auch die relative räumliche Lage der Kupplung D in Bezug zum den beiden Einzel-Radsätzen RS1, RS3 ändert. Wie in Figur 24 ersichtlich, sind die vier Planetenradsätze nunmehr axial in folgender Reihenfolge angeordnet: Radsatz-Baugruppe RS2/RS4 - erster Planetenradsatz RS1 - dritter Planetenradsatz RS3. Ähnlich wie in Figur 23 ist der Steg des zweiten (radial äußeren) Planetenradsatzes RS2 in konstruktiv einfacher Weise an der Welle 3 verdrehbar gelagert.

Vergleichbar zu Figur 23, bilden die Kupplungen C und E eine vormontierbare Baugruppe, die auf der Seite der Radsatz-Baugruppe RS2/RS4 angeordnet ist, die den anderen Radsätzen RS3, RS1 abgewandt ist und dem Antrieb des Getriebes zugewandt ist. Die Kupplung D ist nunmehr axial zwischen der Radsatz-Baugruppe RS2/RS4 und dem ersten Planetenradsatz RS1 angeordnet, dabei axial unmittelbar angrenzend an diese Planetenradsätze RS2/RS4 und RS1. Das zweite Schaltelement B ist wie in Figur 23 in einem Bereich radial über dem ersten Planetenradsatz RS1 angeordnet. Das erste Schaltelement A ist nunmehr auf der dem ersten Planetensatz RS1 abgewandten Seite des dritten Planetenradsatzes RS3 angeordnet, wobei axial zwischen dem dritten Planetenradsatz RS3 und der Bremse A ein mit dem Steg des dritten Planetenradsatzes RS3 ständig verbundenes Stirn- oder Kettenrad der Abtriebsstufe ABTR angeordnet ist. Die beiden Einzel-Radsätze RS1 und RS3 sind nunmehr also axial unmittelbar nebeneinander angeordnet. Als Vorteil gegenüber Figur 23 ist anzusehen, dass das Sonnenrad des ersten Planetenradsatzes RS1 gemäß Figur 24 nur von zwei Wellen in axialer Richtung durchgriffen wird.

Hinsichtlich der räumlichen Verschachtelung der einzelnen Wellen des Getriebes stellt sich das Getriebe gemäß Figur 24 wie folgt dar: Die erste Welle 1 verläuft abschnittsweise zentrisch innerhalb der fünften welle 5 und abschnittsweise zentrisch innerhalb der siebten Welle 7, die siebte Welle 7 verläuft zentrisch innerhalb der fünften Welle 5, die achte Welle 8 verläuft zentrisch innerhalb der fünften Welle 5, die dritte Welle 3 verläuft abschnittsweise zentrisch innerhalb der achten Welle 8 und abschnittsweise zentrisch innerhalb der zweiten Welle 2, die zweite Welle 2 verläuft abschnittsweise zentrisch innerhalb der fünften Welle 5 und abschnittsweise zentrisch innerhalb der sechsten Welle 6, ein Abschnitt der fünften Welle 5 verläuft zentrisch innerhalb der sechsten Welle 6, wobei die fünfte Welle 5 das dritte, vierte und fünfte Schaltelement C, D, E sowie den zweiten Planetenradsatz RS2 in axialer und radialer Richtung zumindest teilweise umgreift.

Für den Fachmann ist leicht ersichtlich, dass - wie auch in Figur 23 - der Antrieb auch auf der anderen Seite des Getriebes, also nahe der Bremse A angeordnet sein kann, wobei dann die Welle 3 als Hohlwelle ausgebildet ist, welche die Welle 1 bzw. die Antriebswelle AN radial umschließt. Die Druck- und Schmiermittelzufuhr zu allen fünf Schaltelementen A bis E ist bei den Getriebe gemäß Figur 24 und Figur 23 vergleichbar günstig.

Abschließend soll nun anhand der Figuren 25 bis 28 noch vier weitere konstruktiv sinnvolle Bauteilanordnungs-Varianten für das Mehrstufengetriebe gemäß Figur 12 bzw. Figur 13, kurz erläutert werden. jeweils unter Verwendung der bereits bekannten Nomenklatur für die Getriebebauteile.

Figur 25 zeigt nun eine beispielhafte erste Bauteilanordnungs-Variante für das Mehrstufengetriebe gemäß Figur 12 bzw. 13. Ausgehend von der räumlichen Anordnung der Radsätze und Schaltelemente gemäß Figur 20 und ausgehend von der Überlegung, dass die Kupplung E nur zum Blockieren des zweiten Planetenradsatzes RS2 vorgesehen ist, wurde das in Figur 20 dargestellte Getriebe hinsichtlich der kinematischen Ankoppelung der Kupplung E in der Art modifiziert, dass die Kupplung E im Kraftfluss nunmehr zwischen der Welle 5 und der Welle 8 angeordnet ist, im Kraftfluss also zwischen Hohlrad und Steg des zweiten Planetenradsatzes RS2.

Um diese kinematische Ankoppelung der Kupplung E an den Planetenradsatz RS auf Basis der Bauteilanordnung gemäß Figur 20 realisieren zu können, ist gemäß Figur 25 nunmehr vorgesehen, dass die Kupplung E räumlich gesehen nicht mehr vollständig in einem Bereich axial zwischen der Radsatz-Baugruppe RS2/RS4 und dem ersten Planetenradsatz RS1 angeordnet ist. Während die Servoeinrichtung 530 der Kupplung E fast vollständig axial zwischen der Radsatz-Baugruppe RS2/RS4 und dem ersten Planetenradsatz RS1 angeordnet ist, ist das Lamellenpaket 500 der Kupplung E nunmehr zumindest überwiegend auf der dem ersten Planetenradsatz RS1 abgewandten Seite des zweiten Planetenradsatzes RS2 angeordnet, auf einen vergleichsweise großen Durchmesser im Bereich des Hohlrades des Planetenradsatzes RS2 nahe dem Lamellenpaket 400 der Kupplung D. Dabei ist der Innenlamellenträger 520 der Kupplung E verdrehfest mit dem Hohlrad des zweiten Planetenradsatzes RS2 verbunden und bildet somit einen Abschnitt der Welle 5. Selbstverständlich kann der Fachmann die axiale Lage dieses Lamellenpakete 500 bei Bedarf verschieben. Die räumliche Lage der Kupplung C, die sich axial unmittelbar an die Radsatz-Baugruppe RS2/RS4 an deren dem Planetenradsatz RS1 zugewandten Seite anschließt, wurde unverändert aus Figur 20 übernommen, ebenso die Lage des in Figur 25 nicht näher dargestellter Druckraums der Servoeinrichtung 530 der Kupplung E, der sich axial an die Kupplung C auf deren dem Planetenradsatz RS1 zugewandten Seite anschließt. Der einen Abschnitt der Welle 5 bildende Außenlamellenträger 310 der Kupplung C ist nunmehr direkt mit dem Hohlrad des zweiten Planetenradsatzes RS2 verbunden. Die Servoeinrichtung 530 der Kupplung E weist einen Kolben auf, der diesen Außenlamellenträger 310 der Kupplung C, den sich zwischen dem Lamellenpaket 300 der Kupplung C und dem Hohlrad der zweiten Planetenradsatz RS2 befindlichen Abschnitt der Welle 5 sowie das Hohlrad des zweiten Planetenradsatz RS2 in axialer Richtung übergreift, sodass die Betätigungsrichtung der Servoeinrichtung 530 beim Schließen der Kupplung E (wie in Figur 20) zum Planetenradsatz RS3 zeigt, das Lamellenpaket 500 also "drückend" geschlossen wird. Der Außenlamellenträger 510 der Kupplung E bildet einen Abschnitt der Welle 8 und ist auf der Seite des Lamellenpaketes 500 mit dem Steg des zweiten Planetenradsatzes RS2 verbunden, die dem dritten Planetenradsatz RS3 zugewandt ist, worauf später noch genauer eingegangen wird.

Das Sonnenrad des zweiten Planetenradsatzes RS2 und das Hohlrad des vierten Planetenradsatzes RS4 sind als Welle 7 des Getriebes miteinander verbunden und an der Antriebswelle AN bzw. der Welle 1 verdrehbar gelagert.

Wie in Figur 25 weiterhin ersichtlich, ist das Lamellenpaket 400 der Kupplung D axial zwischen dem Lamellenpaket 500 der Kupplung E und dem dritten Planetenradsatz RS3 angeordnet, auf einem etwas größeren Durchmesser als das Lamellenpaket 500. Wie in Figur 20, ist dabei der Innenlamellenträger 420 der Kupplung D als ein Abschnitt der Welle 2 mit dem Steg dieses dritten Planetenradsatzes RS3 verbunden. Wie in Figur 20, bildet der Außenlamellenträger 410 der Kupplung D einen Abschnitt der Welle 8 und ist als in Richtung Planetenradsatz RS3 hin geöffneter Zylinder ausgebildet, der sich ausgehend von dem Lamellenpaket 400 axial bis kurz vor den ersten Planetenradsatz RS1 erstreckt, wo er im Bereich des Sonnenrades dieses ersten Planetenradsatzes RS1 an der Welle 5 bzw. an dem genannten Sonnenrad des ersten Planetenradsatzes RS1 verdrehbar gelagert ist. Der zylinderförmige Außenlamellenträger 410 übergreift in seinem axialen Verlauf also das Lamellenpaket 500, den Planetenradsatz RS2 und die Servoeinrichtung 530 (und die von der Servoeinrichtung 530 radial umschlossene Kupplung C) vollständig. Wie in Figur 20, ist die Servoeinrichtung 430 der Kupplung D innerhalb des zylinderförmigen Außenlamellenträgers 410 axial verschiebbar angeordnet, wobei ein nicht näher dargestellter Druckraum dieser Servoeinrichtung 430 räumlich gesehen axial zwischen dem (ebenfalls nicht näher dargestellten) Druckraum der Servoeinrichtung 530 der Kupplung E und dem ersten Planetenradsatz RS1 angeordnet ist. Dabei umschließt ein auf das Lamellenpaket 400 wirkender Kolben dieser Servoeinrichtung 430 den Kolben der Servoeinrichtung 530 in axialer Richtung vollständig und in radialer Richtung zumindest teilweise. Beim Schließen der Kupplung D wird deren Lamellenpaket 400 also "drückend" betätigt.

Zur verdrehfesten Verbindung des Außenlamellenträgers 420 der Kupplung D zum Steg des zweiten Planetenradsatzes RS2 und zum Außenlamellenträger 510 der Kupplung. Eist vorgesehen, dass sich das dem Planetenradsatz RS2 zugewandte Stegblech des Planetenradsatzes RS2 bzw. der mit diesem Stegblech verbundene Außenlamellenträger 510 der Kupplung E radial bis zu dem zylindrischen Außenlamellenträger 410 der Kupplung D erstreckt und auf der dem Planetenradsatz RS3 angewandten Seite des Lamellenpaketes 400 der Kupplung D mit dem zylindrischen Außenlamellenträger 410 verdrehfest verbunden ist. Entsprechend weist dieser radiale Abschnitt des genannten Stegblechs bzw. des Außenlamellenträgers 510 axial gerichtete Öffnungen auf, durch die der Kolben der Servoeinrichtung 430 der Kupplung D axial hindurchgreifen kann, um auf das Lamellenpaket 400 zu wirken.

Hinsichtlich der räumlichen Verschachtelung der einzelnen Wellen des Getriebes stellt sich das Getriebe gemäß Figur 25 wie folgt dar: Die erste Welle 1 verläuft abschnittsweise zentrisch innerhalb der dritten Welle 3 und abschnittsweise zentrisch innerhalb der siebten Welle 7, die dritte Welle 3 verläuft abschnittsweise zentrisch innerhalb der achten Welle 8 und abschnittsweise zentrisch innerhalb der zweiten Welle 2, die siebte Welle 7 verläuft abschnittsweise zentrisch innerhalb der fünften Welle 5, die fünfte Welle 5 verläuft abschnittsweise zentrisch innerhalb der achten Welle 8, die achte Welle 8 verläuft zentrisch innerhalb der sechsten Welle 6, wobei die sechste Welle 6 das vierte Schaltelement D und den zweiten Planetenradsatz RS2 in axialer und radialer Richtung zumindest teilweise umgreift.

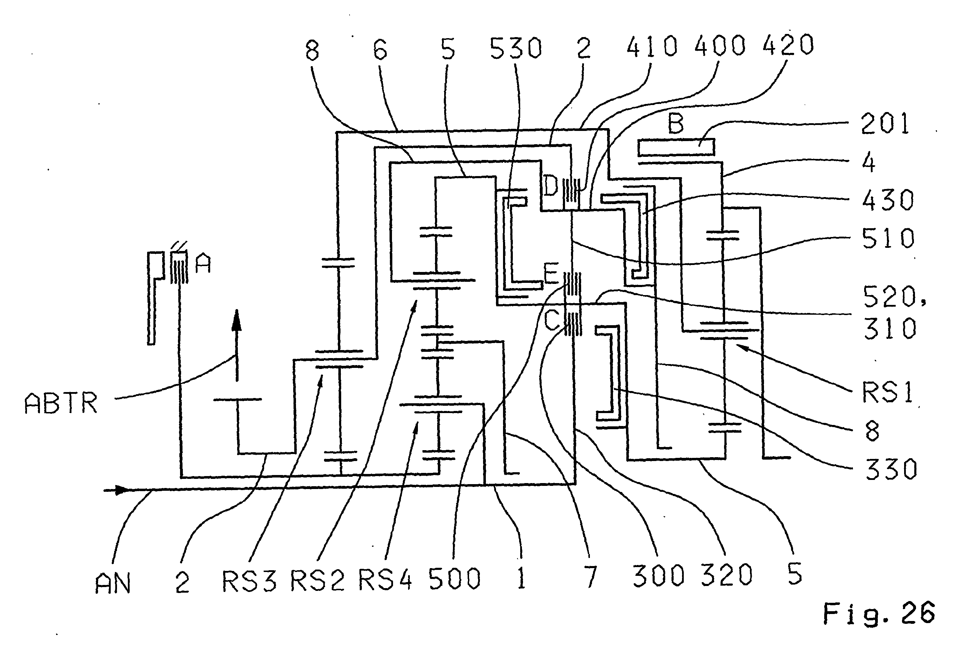

Figur 26 zeigt eine beispielhafte zweite Bauteilanordnungs-Variante für das Mehrstufengetriebe gemäß Figur 12 bzw. 13. Ausgehend von der räumlichen Anordnung der Radsätze und Schaltelemente gemäß Figur 22 und ausgehend von der Überlegung, dass die Kupplung E nur zum Blockieren des zweiten Planetenradsatzes RS2 vorgesehen ist, wurde das in Figur 22 dargestellte Getriebe hinsichtlich der kinematischen Ankoppelung der Kupplung E in der Art modifiziert, dass die Kupplung E im Kraftfluss nunmehr zwischen der Welle 5 und der Welle 8 angeordnet ist, im Kraftfluss also zwischen Hohlrad und Steg des zweiten Planetenradsatzes RS2.

Wie in Figur 26 ersichtlich, sind die Lamellenpakete 300, 500 und 400 der drei Kupplungen C, E und D in axialer Richtung gesehen zumindest weitgehend in einer Ebene angeordnet, wobei das Lamellenpaket 300 der Kupplung C das radial innere der drei Lamellenpakete bildet, das Lamellenpaket 500 der Kupplung E das in radialer Richtung gesehen mittlere der drei Lamellenpakete bildet und das Lamellenpaket 400 der Kupplung D das radial äußere der drei Lamellenpakete bildet. Die Kupplungen D und E nutzen die achte Welle 8 des Getriebes gemeinsam. Hierzu ist für die beiden Kupplungen D und E ein gemeinsamer Lamellenträger vorgesehen, der der einen Abschnitt dieser Welle 8 bildet, für die radial äußere Kupplung D beispielhaft als Innenlamellenträger 420 und für die Kupplung E beispielhaft als Außenlamellenträger 510 ausgebildet ist. Die Kupplungen C und E nutzen die fünften Welle 5 des Getriebes gemeinsam. Hierzu ist für die beiden Kupplungen C und E ein gemeinsamer Lamellenträger vorgesehen, der einen Abschnitt dieser Welle 5 bildet, für die radial innere Kupplung C beispielhaft als Außenlamellenträger 310 und für die Kupplung E beispielhaft als Innenlamellenträger 520 ausgebildet ist. Die Servoeinrichtung 330 der Kupplung C ist beispielhaft an dem Außenlamellenträger 310 der Kupplung C axial verschiebbar gelagert, auf der der Radsatz-Baugruppe RS2/RS4 abgewandten Seite des Lamellenpaketes 300 angeordnet und betätigt dieses ihr zugeordnete Lamellenpaket 300 beim Schließen der Kupplung C axial in Richtung der Radsatz-Baugruppe RS2/RS4. Die Servoeinrichtung 530 der Kupplung E ist beispielhaft an dem Innenlamellenträger 510 der Kupplung E axial verschiebbar gelagert, auf der der Radsatz-Baugruppe RS2/RS4 zugewandten Seite des Lamellenpaketes 500 angeordnet und betätigt dieses ihr zugeordnete Lamellenpaket 500 beim Schließen der Kupplung E axial in zur Radsatz-Baugruppe RS2/RS4 entgegen gesetzter Richtung. Die Servoeinrichtung 430 der Kupplung D ist, beispielhaft an dem Innenlamellenträger 420 der Kupplung D axial verschiebbar gelagert, auf der der Radsatz-Baugruppe RS2/RS4 abgewandten Seite des Lamellenpaketes 400 angeordnet und betätigt dieses ihr zugeordnete Lamellenpaket 400 beim Schließen der Kupplung D axial in Richtung der Radsatz-Baugruppe RS2/RS4. Selbstverständlich kann in einer anderen konstruktiven Ausgestaltung des Getriebes vorgesehen sein, dass eine oder mehrerer der genannten Servoeinrichtungen 330, 430, 530 auf der anderen Seite des jeweils zugeordneten Lamellenpaketes 300 bzw. 400 bzw. 500 angeordnet ist als in Figur 26 dargestellt.

Wie in Figur 26 weiterhin ersichtlich, sind Sonnenrad des zweiten Planetenradsatzes RS2 und Hohlrad des vierten Planetenradsatzes RS4 miteinander als Welle 7 des Getriebes verbunden, nunmehr mit keinem Schaltelement des Getriebes verbunden oder verbindbar, aber ähnlich wie in Figur 22 an der Antriebswelle AN bzw. der Welle 1 verdrehbar gelagert. Die übrigen konstruktiven Ausgestaltungen des Getriebes gemäß Figur 26 sind von dem Getriebe gemäß Figur 22 übernommen, insofern kann auf deren nochmalige Beschreibung an dieser Stelle verzichtet werden. Auch entspricht die räumlichen Verschachtelung der einzelnen Wellen des Getriebes gemäß Figur 26 der Wellen-Verschachtelung des Getriebes gemäß Figur 22.

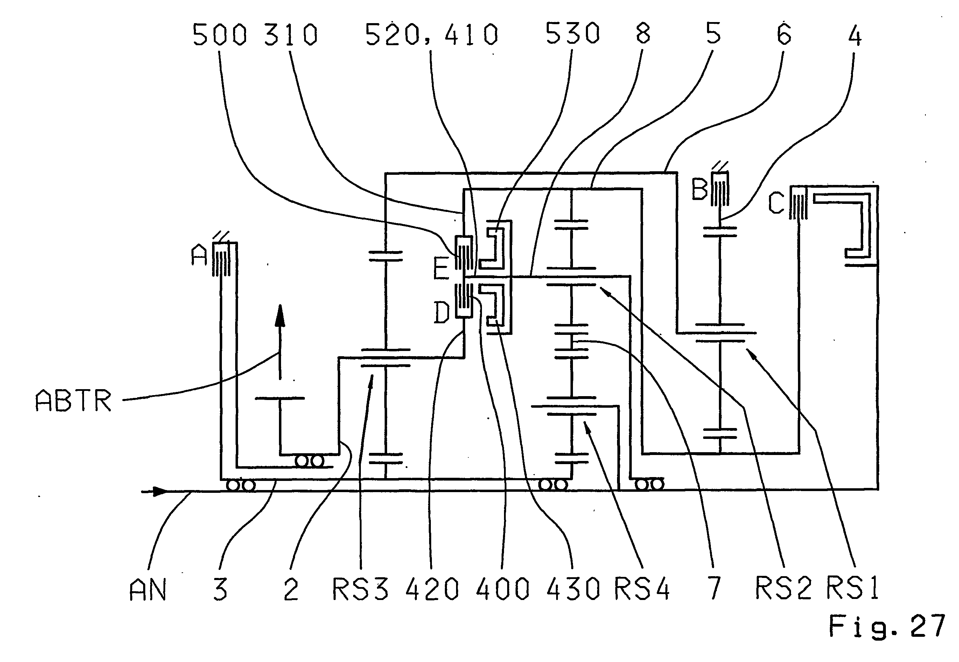

Figur 27 zeigt eine beispielhafte dritte Bauteilanordnungs-Variante für das Mehrstufengetriebe gemäß Figur 12 bzw. 13. Ausgehend von der räumlichen Anordnung der Radsätze und Schaltelemente gemäß Figur 15 und ausgehend von der Überlegung, dass die Kupplung E nur zum Blockieren des zweiten Planetenradsatzes RS2 vorgesehen ist, wurde das in Figur 22 dargestellte Getriebe hinsichtlich der kinematischen Ankoppelung der Kupplung E in der Art modifiziert, dass die Kupplung E im Kraftfluss nunmehr zwischen der Welle 5 und der Welle 8 angeordnet ist, im Kraftfluss also zwischen Hohlrad und Steg des zweiten Planetenradsatzes RS2. Diese gegenüber Figur 15 geänderte kinematische Ankopplung der Kupplung E führt auch zu einer gegenüber Figur 15 geänderten konstruktiven Ausbildung der Kupplungs-Baugruppe D/E, die räumlich gesehen wie in Figur 15 axial zwischen dem dritten Planetenradsatze RS3 und der Radsatz-Baugruppe RS2/RS4 angeordnet ist, dabei axial unmittelbar angrenzend an diesen Einzel-Radsatz RS3 und diese Radsatz-Baugruppe RS2/RS4.

Wie in Figur 27 ersichtlich, weist diese Kupplungs-Baugruppe D/E einen für beide Kupplungen D und E gemeinsamen Lamellenträger, das Lamellenpaket 400 der Kupplung D, die diesem Lamellenpaket 400 zugeordnete Servoeinrichtung 430 der Kupplung D, das Lamellenpaket 500 der Kupplung E sowie die diesem Lamellenpaket 500 zugeordnete Servoeinrichtung 530 der Kupplung E. Räumlich gesehen ist die Kupplung E nunmehr zumindest weitgehend radial über der Kupplung D angeordnet, wobei das Lamellenpaket 500 zumindest weitgehend radial über dem Lamellenpaket 400 angeordnet ist, und wobei die Servoeinrichtung 530 zumindest weitgehend radial über der Servoeinrichtung 430 angeordnet ist. Der genannte gemeinsame Lamellenträger bildet einen Abschnitt der achten Welle 8 des Getriebes, ist - entsprechend dem Radsatzschema - ständig mit dem Steg des zweiten Planetenradsatzes RS2 und ständig mit dem Sonnenrad des ersten Planetenradsatzes RS1 verbunden. Im dargestellten Konstruktionsbeispiel ist der genannte gemeinsame Lamellenträger dabei für die radial innere Kupplung D als Außenlamellenträger 410 und für die radial äußere Kupplung E als Innenlamellenträger 520 ausgebildet. Entsprechend bildet der Innenlamellenträger 420 der Kupplung D einen Abschnitt der zweiten Welle 2 des Getriebes und ist - entsprechend dem Radsatzschema - ständig mit dem Steh des dritten Planetenradsatzes RS3 und ständig mit der Abtriebsstufe ABTR des Getriebes verbunden. Der Außenlamellenträger 510 bildet entsprechend einen Abschnitt der fünften Welle 5 des Getriebes und ist - entsprechend dem Radsatzschema - ständig mit dem Hohlrad des zweiten Planetenradsatzes RS2 und ständig mit dem Steg des ersten Planetenradsatzes verbunden.

Beide Servoeinrichtungen 430, 530 sind an dem für beide Kupplungen D, E gemeinsamen Lamellenträger axial verschiebbar gelagert, die Servoeinrichtung 430 im Bereich des Außenlamellenträgers 410, die Servoeinrichtung 530 im Bereich des Innenlamellenträgers 520. Beispielhaft sind beide Servoeinrichtungen 430, 530 auf der Seite des jeweils zugeordneten Lamellenpaketes 400 bzw. 500 angeordnet, die der Radsatz-Baugruppe RS2/RS4 zugewandt ist. Entsprechend werden beide Lamellenpakete 400, 500 beim Schießen axial in Richtung des dritten Planetenradsatzes RS3 hin betätigt.

Als ein beispielhaftes konstruktives Detail sei noch auf den Entfall einer separaten Lagerung der siebten Welle 7 des Getriebes hingewiesen, die nunmehr auch mit keinem Schaltelement des Getriebes verbunden oder verbindbar ist. Die übrigen konstruktiven Ausgestaltungen des Getriebes gemäß Figur 27 sind von zudem Getriebe gemäß Figur 15 übernommen, insofern kann auf deren nochmalige Beschreibung an dieser Stelle verzichtet werden.

Die räumliche Verschachtelung der einzelnen Wellen des Getriebes gemäß Figur 27 stellt sich ähnlich dar wie die Wellen-Verschachtelung des Getriebes gemäß Figur 15: Die erste Welle 1 verläuft abschnittsweise zentrisch innerhalb der dritten Welle 3 und abschnittsweise zentrisch innerhalb der fünften Welle 5, die dritte Welle 3 verläuft abschnittsweise zentrisch innerhalb der achten Welle 8 und abschnittsweise zentrisch innerhalb der zweiten Welle 2, die fünfte Welle 5 verläuft zentrisch innerhalb der sechsten Welle 6, wobei die sechste Welle 6 das vierte und fünfte Schaltelement (D, E) sowie den zweiten Planetenradsatz RS2 in axialer und radialer Richtung zumindest teilweise umgreift. Im Unterschied zu Figur 15 ist gemäß Figur 27 zusätzlich vorgesehen, das ein Abschnitt der fünften Welle 5 den zweiten Planetenradsatz RS2 in axialer Richtung vollständig übergreift und in radialer Richtung zumindest teilweise umgreift.

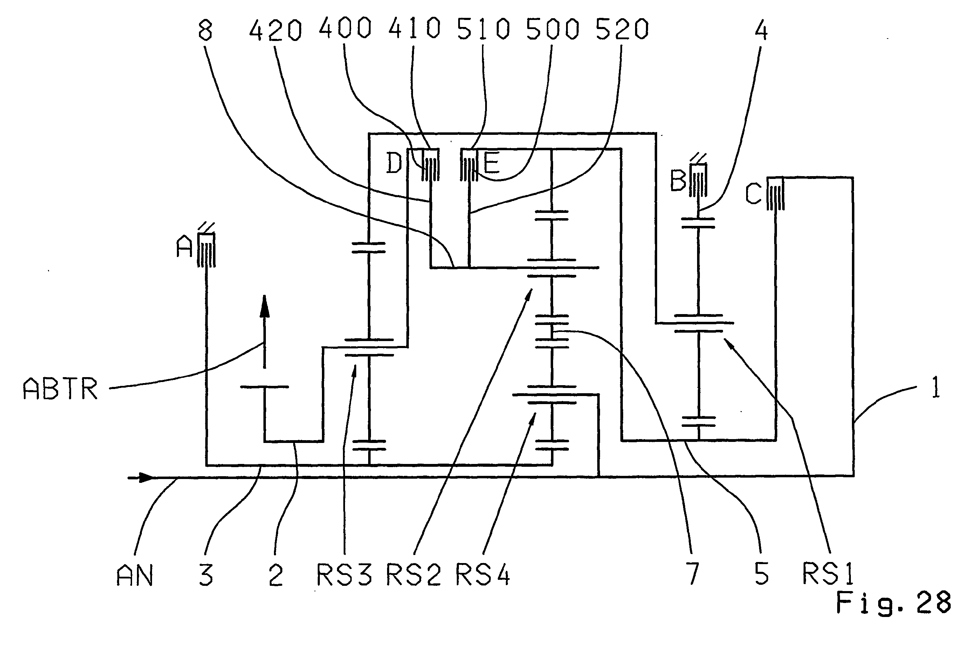

Figur 28 schließlich zeigt eine beispielhafte vierte Bauteilanordnungs-Variante für das Mehrstufengetriebe gemäß Figur 12 bzw. 13, basierend auf dem zuvor erläuterten Getriebe gemäß Figur 27, wobei sich der Unterschied zu Figur 27 auf die konstruktive Ausgestaltung der die vierte und fünfte Kupplung D, E umfassende Kupplungs-Baugruppe beschränkt. Zumindest die Lamellenpakete 400, 500 dieser beiden Kupplungen D, E sind räumlich gesehen in einem Bereich axial zwischen dem dritten Planetenradsatz RS3 und der Radsatz-Baugruppe RS2/RS4 angeordnet. Dabei sind die beiden Lamellenpakete 400, 500 axial nebeneinander angeordnet, vorzugsweise auf gleichem oder zumindest ähnlichem Durchmesser, beispielsweise im Bereich des Hohlrades des Planetenradsatzes RS2, wobei das Lamellenpaket 500 der Kupplung E näher am zweiten Planetenradsatz RS2 angeordnet ist als das Lamellenpaket 400 der Kupplung D und das Lamellenpaket 400 der Kupplung D entsprechend näher am dritten Planetenradsatz RS3 angeordnet ist als das Lamellenpaket 500 der Kupplung E. In dem in Figur 28 dargestellten Ausführungsbeispiel ist für beide Kupplung D, E ein gemeinsamer Lamellenträger vorgesehen, der für beide Kupplungen D, E als Innenlamellenträger 420, 520 ausgebildet ist, einen Abschnitt der achten Welle 8 des Getriebes bildet und entsprechend dem Radsatzschema ständig mit dem Steg des zweiten Planetenradsatzes RS2 verbunden ist. Entsprechend bildet der Außenlamellenträger 410 der Kupplung D einen Abschnitt der zweiten Welle 2 des Getriebes und ist ständig mit dem Steg des dritten Planetenradsatzes RS3 und ständig mit der Abtriebsstufe ABTR des Getriebes verbunden; und entsprechend bildet der Außenlamellenträger 510 der Kupplung E einen Abschnitt der fünften Welle 5 des Getriebes und ist ständig mit dem Hohlrad des zweiten Planetenradsatzes und ständig mit dem Sonnenrad des ersten Planetenradsatzes RS1 verbunden.

Die Servoeinrichtungen zum Betätigen der Lamellenpakete 400, 500 der beiden Kupplungen D, E sind in Figur 28 der Einfachheit halber nicht näher dargestellt und können räumlich gesehen ebenfalls im Bereich axial zwischen dem dritten Planetenradsatz RS3 und der Radsatz-Baugruppe RS2/RS4 angeordnet sein, beispielsweise am jeweiligen Außenlamellenträger 410, 510 der jeweiligen Kupplung D, E oder beispielsweise am dem für die beiden Kupplungen D, E gemeinsamen Lamellenträger axial verschiebbar gelagert. In einer anderen konstruktiven Ausgestaltung kann beispielsweise aber auch vorgesehen sein, dass der Druckraum - und soweit vorhanden auch ein Druckausgleichsraum zum Ausgleich des rotatorischen Drucks dieses rotierenden Druckraums - einer der beiden oder beider genannten Servoeinrichtungen der Kupplungen D, E räumlich gesehen in einem Bereich axial zwischen der Radsatz-Baugruppe RS2/RS4 und dem ersten Planetenradsatz RS1 angeordnet ist und dabei mittels eines Kolbens auf das ihm zugeordnete Lamellenpaket wirkt, welcher den zweiten Planetenradsatz RS2 und das Lamellenpaket 500 der Kupplung E in axialer Richtung vollständig übergreift und in axialer und radialer Richtung zumindest teilweise umgreift.

Zum Abschluss der Beschreibung der in den Figuren dargestellten Ausführungsbeispiele für ein Mehrstufengetriebe gemäß der Erfindung sei noch besonders darauf hingewiesen, dass sich die Erfindung nicht auf nur diese speziellen Ausführungsbeispiele beschränkt.

Für alle zuvor dargestellten bzw. beschriebenen Ausführungsbeispiele der Getriebefamilie gemäß der Erfindung gilt zudem folgendes:

Gemäß der Erfindung können sich auch bei gleichem Getriebeschema, je nach Standgetriebeübersetzung der einzelnen Planetensätze, unterschiedliche Gangsprünge ergeben, so dass eine anwendungs- bzw. fahrzeugspezifische Variation ermöglicht wird.

Es ist zudem möglich, an jeder geeigneten Stelle des Mehrstufengetriebes zusätzliche Freiläufe vorzusehen, beispielsweise zwischen einer Welle und dem Gehäuse oder um zwei Wellen gegebenenfalls zu verbinden.

Im Rahmen einer vorteilhaften Weiterbildung kann die Antriebswelle AN durch ein Kupplungselement von einem Antriebsmotor nach Bedarf getrennt werden, wobei als Kupplungselement ein hydrodynamischer Wandler, eine hydraulische Kupplung, eine trockene Anfahrkupplung, eine nasse Anfahrkupplung, eine Magnetpulverkupplung oder eine Fliehkraftkupplung einsetzbar sind. Es ist auch möglich, ein derartiges Anfahrelement in Kraftflussrichtung hinter dem Getriebe anzuordnen, wobei in diesem Fall die Antriebswelle AN ständig mit der Kurbelwelle des Antriebsmotors verbunden ist. Das erfindungsgemäße Mehrstufengetriebe ermöglicht außerdem die Anordnung eines Torsionsschwingungsdämpfers zwischen Antriebsmotor und Getriebe.

Im Rahmen einer weiteren, nicht dargestellten Ausführungsform der Erfindung kann auf jeder Welle, bevorzugt auf der Antriebswelle AN oder der Abtriebswelle AB, eine verschleißfreie Bremse, wie z.B. ein hydraulischer oder elektrischer Retarder oder dergleichen, angeordnet sein, welche insbesondere für den Einsatz in Nutzkraftfahrzeugen von besonderer Bedeutung ist. Des weiteren kann zum Antrieb von zusätzlichen Aggregaten auf jeder Welle, bevorzugt auf der Antriebswelle AN oder der Abtriebswelle AB, ein Nebenabtrieb vorgesehen sein.

Die eingesetzten Schaltelemente können als lastschaltbare Kupplungen oder Bremsen ausgebildet sein. Insbesondere können kraftschlüssige Kupplungen oder Bremsen, wie z.B. Lamellenkupplungen, Bandbremsen und/oder Konuskupplungen, verwendet werden. Des weiteren können als Schaltelemente auch formschlüssige Bremsen und/oder Kupplungen, wie z.B. Synchronisierungen oder Klauenkupplungen eingesetzt werden. Insbesondere für die Bremse B bietet sich zur Einsparung von Getriebebaulänge die Verwendung einer Bandbremse an, da diese Bremse B entsprechend der Schaltlogik des Getriebes nur beim Einlegen des Rückwärtsgangs aus Neutralstellung heraus und nur bei der Rückschaltung in den fünften Vorwärtsgang zugeschaltet werden muss.

Ein weiterer Vorteil des hier vorgestellten Mehrstufengetriebes besteht darin, dass an jeder Welle zusätzlich eine elektrische Maschine als Generator und/oder als zusätzliche Antriebsmaschine anbringbar ist.

Selbstverständlich fällt auch jede konstruktive Ausbildung, insbesondere jede räumliche Anordnung der Planetensätze und der Schaltelemente an sich sowie zueinander und soweit technisch sinnvoll, unter den Schutzumfang der vorliegenden Ansprüche, ohne die Funktion des Getriebes, wie sie in den Ansprüchen angegeben ist, zu beeinflussen, auch wenn diese Ausbildungen nicht explizit in den Figuren oder in der Beschreibung dargestellt sind.

### Bezugszeichen

- A: erstes Schaltelement, erste Bremse
- B: zweites Schaltelement, zweite Bremse
- C: drittes Schaltelement, erste Kupplung
- D: viertes Schaltelement, zweite Kupplung
- E: fünftes Schaltelement, dritte Kupplung

- AN: Antriebswelle
- AB: Abtriebswelle
- GG: Gehäuse
- GN: gehäusefeste Nabe
- GW: Gehäusewand
- ABTR: Abtriebstufe, Stimtrieb, Kettentrieb
- DIFF: Differential

- RS1: erster Planetenradsatz
- HO1: Hohlrad des ersten Planetenradsatzes
- SO1: Sonnenrad des ersten Planetenradsatzes
- ST1: Steg des ersten Planetenradsatzes
- PL1: Planetenräder des ersten Planetenradsatzes

- RS2: zweiter Planetenradsatz
- HO2: Hohlrad des zweiten Planetenradsatzes
- S02: Sonnenrad des zweiten Planetenradsatzes
- ST2: Steg des zweiten Planetenradsatzes
- PL2: Planetenräder des zweiten Planetenradsatzes

- RS3: dritter Planetenradsatz
- HO3: Hohlrad des dritten Planetenradsatzes
- SO3: Sonnenrad des dritten Planetenradsatzes
- ST3: Steg des dritten Planetenradsatzes
- PL3: Planetenräder des dritten Planetenradsatzes

- RS4: vierter Planetenradsatz
- HO4: Hohlrad des vierten Planetenradsatzes
- S04: Sonnenrad des vierten Planetenradsatzes
- ST4: Steg des vierten Planetenradsatzes
- PL4: Planetenräder des vierten Planetenradsatzes

- i: Übersetzung
- φ: Stufensprung

- 1: erste Welle
- 2: zweite Welle
- 3: dritte Welle
- 4: vierte Welle
- 5: fünfte Welle
- 6: sechste Welle
- 7: siebte Welle
- 8: achte Welle

- 100: Lamellenpaket des ersten Schaltelementes
- 110: Außenlamellenträger des ersten Schaltelementes
- 120: Innenlamellenträger des ersten Schaltelementes
- 130: Servoeinrichtung des ersten Schaltelementes

- 200: Lamellenpaket des zweiten Schaltelementes
- 201: Bremsband des zweiten Schaltelementes
- 210: Außenlamellenträger des zweiten Schaltelementes
- 220: Innenlamellenträger des zweiten Schaltelementes
- 221: Bremsbandzylinder des zweiten Schaltelementes
- 230: Servoeinrichtung des zweiten Schaltelementes

- 300: Lamellenpaket des dritten Schaltelementes
- 310: Außenlamellenträger des dritten Schaltelementes
- 320: Innenlamellenträger des dritten Schaftetementes
- 330: Servoeinrichtung des dritten Schaltelementes
- 331: Kolben der Servoeinrichtung des dritten Schaltelementes
- 332: Rückstellelement der Servoeiririchtung des dritten Schaltelementes
- 333: Druckraum der Servoeinrichtung des dritten Schaltelementes
- 334: Druckmittelzuführung zur Servoeinrichtung des dritten Schalt- elements
- 335: Stauscheibe der Servoeinrichtung des dritten Schaltelementes
- 336: Druckausgleichsraum der Servoeinrichtung des dritten Schalt- elementes
- 337: Schmiermittelzufiührung zur Servoeinrichtung des dritten Schalt- elementes
- 338: Stützscheibe

- 400: Lamellenpaket des vierten Schaltelementes
- 410: Außenlamellenträger des vierten Schaltelementes
- 420: Innenlamellenträger des vierten Schaltelementes
- 430: Servoeinrichtung des vierten Schaltelementes
- 431: Kolben der Servoeinrichtung des vierten Schaltelementes
- 432: Rückstellelement der Servoeinrichtung des vierten Schaltelementes
- 433: Druckraum der Servoeinrichtung des vierten Schaltelementes
- 434: Druckmittelzuführung zur Servoeinrichtung des vierten Schalt- elementes
- 435: Stauscheibe der Servoeinrichtung des vierten Schaltelementes
- 436: Druckausgleichsraum der Servoeinrichtung des vierten Schalt- elementes
- 437: Schmiermittelzuführung zur Servoeinrichtung des vierten Schalt- elementes

- 500: Lamellenpaket des fünften Schaltelementes
- 510: Auf3enlamellenträger des fünften Schaltelementes
- 520: Innenlamellenträger des fünften Schaltelementes
- 530: Servoeinrichtung des fünften Schaltelementes
- 531: Kolben der Servoeinrichtung des fünften Schaltelementes
- 532: Rückstellelement der Servoeinrichtung des fünften Schaltelementes
- 533: Druckraum der Servoeinrichtung des fünften Schaltelementes
- 534: Druckmittelzuführung zur Servoeinrichtung des fünften Schalt- elementes
- 535: Stauscheibe der Servoeinrichtung des fünften Schaltelementes
- 536: Druckausgleichsraum der Servoeinrichtung des fünften Schalt- elementes
- 537: Schmiermittelzuführung zur Servoeinrichtung des fünften Schalt- elementes

## Patentansprüche

1. Mehrstufengetriebe in Planetenbauweise, insbesondere Automatgetriebe für ein Kraftfahrzeug, umfassend eine Antriebswelle (AN) und eine Abtriebswelle (AB), vier Planetenradsätze (RS1, RS2, RS3, RS4), mindestens acht drehbare Wellen (1, 2, 3, 4, 5, 6, 7, 8) sowie fünf Schaltelemente (A, B, C, D, E), deren selektives Eingreifen verschiedene Übersetzungsverhältnisse zwischen der Antriebswelle (AN) und der Abtriebswelle (AB) bewirkt, so dass acht Vorwärtsgänge und zumindest ein Rückwärtsgang realisierbar sind, wobei
■ ein Steg (ST4) des vierten Planetenradsatzes (RS4) und die Antriebswelle (AN) verdrehfest miteinander verbunden sind und die erste Welle (1) bilden,
■ ein Steg (ST3) des dritten Planetenradsatzes (RS3) und die Abtriebswelle (AB) miteinander verbunden sind und die zweite Welle (2) bilden,
■ ein Sonnenrad (SO3) des dritten Planetenradsatzes (RS3) und ein Sonnenrad (S04) des vierten Planetenradsatzes (RS4) verdrehfest miteinander verbunden sind und die dritte Welle (3) bilden,
■ ein Hohlrad (HO1) des ersten Planetenradsatzes (RS1) die vierte Welle (4) bildet,
■ ein Hohlrad (HO2) des zweiten Planetenradsatzes (RS2) und ein Sonnenrad (SO1) des ersten Planetenradsatzes (RS1) verdrehfest miteinander verbunden sind und die fünfte Welle (5) bilden,
■ ein Steg (ST1) des ersten Planetenradsatzes (RS1) und ein Hohlrad (HO3) des dritten Planetenradsatzes (RS3) verdrehfest miteinander verbunden sind und die sechste Welle (6) bilden,
■ ein Sonnenrad (SO2) des zweiten Planetenradsatzes (RS2) und ein Hohlrad (HO4) des vierten Planetenradsatzes (RS4) verdrehfest miteinander verbunden sind und die siebte Welle (7) bilden,
■ ein Steg (ST2) des zweiten Planetenradsatzes (RS2) die achte Welle (8) bildet,
■ das erste Schaltelement (A) im Kraftfluss zwischen der dritten Welle (3) und einem Gehäuse (GG) des Getriebes angeordnet ist,
■ das zweite Schaltelement (B) im Kraftfluss zwischen der vierten Welle (4) und dem Gehäuse (GG) des Getriebes angeordnet ist,
■ das dritte Schaltelement (C) im Kraftfluss zwischen der fünften Welle (5) und der ersten Welle (1) angeordnet ist,
■ das vierte Schaltelement (D) im Kraftfluss entweder zwischen der achten Welle (8) und der zweiten Welle (2) oder zwischen der achten Welle (8) und der sechsten Welle (6) angeordnet ist, und
■ das fünfte Schaltelement (E) im Kraftfluss entweder zwischen der siebten Welle (7) und der fünften Welle (5), zwischen der siebten Welle (7) und der achten Welle (8) oder zwischen der fünften Welle (5) und der achten Welle (8) angeordnet ist.

2. Mehrstufengetriebe nach Anspruch 1, **dadurch gekennzeichnet , dass**
■ der zweite und vierte Planetenradsatz (RS2, RS4) in axialer Richtung gesehen in einer Ebene radial übereinander angeordnet sind,
■ der vierte Planetenradsatz (RS4) zentrisch innerhalb des zweiten Planetenradsatzes (RS2) angeordnet ist, und
■ der zweite und vierte Planetenradsatz (RS2, RS4) räumlich gesehen in einem Bereich axial zwischen dem ersten und dritten Planetenradsatz (RS1, RS3) angeordnet sind *[Fig. 1 + 4 - 15 + 17 - 22 + 25 - 28*].

3. Mehrstufengetriebe nach Anspruch 1, **dadurch gekennzeichnet, dass**
■ der zweite und vierte Planetenradsatz (RS2, RS4) in axialer Richtung gesehen in einer Ebene radial übereinander angeordnet sind,
■ der vierte Planetenradsatz (RS4) zentrisch innerhalb des zweiten Planetenradsatzes (RS2) angeordnet ist, und
■ der dritte Planetenradsatz (RS3) räumlich gesehen in einem Bereich axial zwischen dem ersten Planetenradsatz (RS1) und den beiden radial übereinander angeordneten Planetenradsätzen (RS2, RS4) angeordnet ist *[Fig. 23].*

4. Mehrstufengetriebe nach Anspruch 1, **dadurch gekennzeichnet, dass**
■ der zweite und vierte Planetenradsatz (RS2, RS4) in axialer Richtung gesehen in einer Ebene radial übereinander angeordnet sind,
■ der vierte Planetenradsatz (RS4) zentrisch innerhalb des zweiten Planetenradsatzes (RS2) angeordnet ist, und
■ der erste Planetenradsatz (RS1) räumlich gesehen in einem Bereich axial zwischen dem dritten Planetenradsatz (RS3) und den beiden radial übereinander angeordneten Planetenradsätzen (RS2, RS4) angeordnet ist *[Fig. 24].*

5. Mehrstufengetriebe nach einem der Ansprüche 1 bis 4, **dadurch gekennzeichnet, dass** das Hohlrad (HO4) des vierten Planetenradsatzes (RS4) und das Sonnenrad (S02) des zweiten Planetenradsatzes (RS2) zu einem gemeinsamen einstückigen Bauteil zusammengefasst sind.

6. Mehrstufengetriebe nach einem der Ansprüche 1 bis 4, **dadurch gekennzeichnet, dass** das Hohlrad (HO4) des vierten Planetenradsatzes (RS4) und das Sonnenrad (SO2) des zweiten. Planetenradsatzes (RS2) jeweils als separates Bauteil ausgeführt und miteinander verbunden sind.

7. Mehrstufengetriebe nach Anspruch 6, **dadurch gekennzeichnet, dass** das Hohlrad (H04) des vierten Planetenradsatzes (RS4) und das Sonnenrad (SO2) des zweiten Planetenradsatzes (RS2) verdrehfest miteinander verbunden sind.

8. Mehrstufengetriebe nach Anspruch 6, **dadurch gekennzeichnet, dass** das Hohlrad (HO4) des vierten Planetenradsatzes (RS4) und das Sonnenrad (SO2) des zweiten Planetenradsatzes (RS2) verdrehelastisch miteinander verbunden sind.

9. Mehrstufengetriebe nach einem der vorstehenden Ansprüche, **dadurch gekennzeichnet, dass** alle vier Planetenradsätze (RS1, RS2, RS3, RS4) als Minus-Planetenradsätze ausgebildet sind.

10. Mehrstufengetriebe nach einem der Ansprüche 1 bis 9, **dadurch gekennzeichnet, dass** der Steg (ST2) des zweiten Planetenradsatzes (RS2) über die Antriebswelle (AN) bzw. die erste Welle (1) des Getriebes radial an dem Getriebegehäuse (GG) bzw. einer getriebegehäusefesten Nabe gelagert ist.

11. Mehrstufengetriebe nach einem der Ansprüche 1 bis 9, **dadurch gekennzeichnet, dass** der Steg (ST2) des zweiten Planetenradsatzes (RS2) radial auf der dritten Welle (3) des Getriebes gelagert ist.

12. Mehrstufengetriebe nach einem der vorstehenden Ansprüche, **dadurch gekennzeichnet, dass** sich
■ der erste Vorwärtsgang durch Schließen des ersten, zweiten und dritten Schaltelementes (A, B, C),
■ der zweite Vorwärtsgang durch Schließen des ersten, zweiten und fünften Schaltelementes (A, B, E),
■ der dritte Vorwärtsgang durch Schließen des zweiten, dritten und fünften Schaltelementes (B, C, E),
■ der vierte Vorwärtsgang durch Schließen des zweiten, vierten und fünften Schaltelementes (B, D, E),
■ der fünfte Vorwärtsgang durch Schließen des zweiten, dritten und vierten Schaltelementes (B, C, D),
■ der sechste Vorwärtsgang durch Schließen des dritten, vierten und fünften Schaltelementes (C, D, E),
■ der siebte Vorwärtsgang durch Schließen des ersten, dritten und vierten Schaltelementes (A, C, D) und
■ der achte Vorwärtsgang durch Schließen des ersten, vierten und fünften Schaltelementes (A, D, E)
ergibt.

13. Mehrstufengetriebe nach einem der vorstehenden Ansprüche, **dadurch gekennzeichnet, dass** sich ein Rückwärtsgang durch Schließen des ersten, zweiten und vierten Schaltelementes (A, B, D) ergibt.

14. Mehrstufengetriebe nach einem der vorstehenden Ansprüche, **dadurch gekennzeichnet, dass** der vierte Planetenradsatz (RS4) höchstens von einer Welle des Getriebes in axialer Richtung zentrisch durchgriffen wird, insbesondere nur von der Antriebswelle (AN) bzw. nur von ersten Welle (1) des Getriebes *[Fig. 1+3-15+17-28]*.

15. Mehrstufengetriebe nach einem der vorstehenden Ansprüche, **dadurch gekennzeichnet, dass** der dritte Planetenradsatz (RS3) höchstens von einer Welle des Getriebes in axialer Richtung zentrisch durchgriffen wird, insbesondere nur von der Antriebswelle (AN) bzw. nur von der ersten Welle (1) des Getriebes *[Fig. 1+4-15+17- 28].*

16. Mehrstufengetriebe nach einem der Ansprüche 1 bis 15, **dadurch gekennzeichnet, dass** der erste Planetenradsatz (RS1) höchstens von einer Welle des Getriebes in axialer Richtung zentrisch durchgriffen wird, insbesondere nur von der Antriebswelle (AN) bzw. nur von der ersten Welle (1) des Getriebes *[Fig. 1 +4+15+17 22+25-28*].

17. Mehrstufengetriebe nach einem der Ansprüche 1 bis 15, **dadurch gekennzeichnet, dass** der erste Planetenradsatz (RS1) von zwei Wellen des Getriebes in axialer Richtung zentrisch durchgriffen wird, insbesondere von der siebten Welle (7) und der abschnittsweise zentrisch innerhalb der siebten Welle (7) verlaufenden Antriebswelle (AN) bzw. ersten Welle (1) *[Fig. 5-11 +14+23+24].*

18. Mehrstufengetriebe nach einem der vorstehenden Ansprüche, **dadurch gekennzeichnet, dass** Antriebswelle (AN) und Abtriebswelle (AB) nicht koaxial zueinander, insbesondere achsparallel oder winklig zueinander angeordnet sind.

19. Mehrstufengetriebe nach einem der vorstehenden Ansprüche, **dadurch gekennzeichnet, dass** ein im Kraftfluss zwischen dem Steg (ST3) des dritten Planetenradsatzes (RS3) und der Abtriebswelle (AB) vorgesehener Stirn- oder Kettentrieb räumlich gesehen zumindest teilweise auf der Seite des dritten Planetenradsatzes (RS3) angeordnet ist, die der aus dem zweiten und vierten Planetenradsatz (RS2, RS4) gebildeten Radsatzgruppe gegenüber liegt, und dass das erste Schaltelement (A) räumlich gesehen auf der Seite des Stirn- oder Kettentriebs angeordnet ist, die dem dritten Planetenradsatz (RS3) gegenüber liegt *[Fig. 1+4-15+17-28].*

20. Mehrstufengetriebe nach einem der vorstehenden Ansprüche, **dadurch gekennzeichnet, dass** ein mit dem Steg (ST3) des dritten Planetenradsatzes (RS3) verbundenes Stirn- oder Kettenrad des Stirn- bzw. Kettentriebs axial zwischen dem dritten Planetenradsatz (RS3) und dem ersten Schaltelement (A) angeordnet ist *[Fig. 1+4-15+17-22+24-28].*

21. Mehrstufengetriebe nach einem der vorstehenden Ansprüche, **dadurch gekennzeichnet, dass** ein mit dem Steg (ST3) des dritten Planetenradsatzes (RS3) verbundenes Stirn- oder Kettenrad des Stirn- bzw. Kettentriebs axial zwischen dem ersten Planetenradsatz (RS1) und dem ersten Schaltelement (A) angeordnet ist *[Fig. 23].*

22. Mehrstufengetriebe nach einem der vorstehenden Ansprüche, **dadurch gekennzeichnet, dass** das zweite Schaltelement (B) räumlich gesehen in einem Bereich radial über dem ersten Planetenradsatz (RS1) angeordnet ist *[Fig. 1+4-9+15+17 28].*

23. Mehrstufengetriebe nach einem der vorstehenden Ansprüche, **dadurch gekennzeichnet, dass** das zweite Schaltelement (B) räumlich gesehen in einem Bereich radial über dem dritten Schaltelement (C) angeordnet ist *[Fig. 8].*

24. Mehrstufengetriebe nach einem der vorstehenden Ansprüche, **dadurch gekennzeichnet, dass** das dritte Schaltelement (C) räumlich gesehen benachbart zum ersten Planetenradsatz (RS1) angeordnet ist *[Fig. 1+4-7+9-15+17+19+26-28].*

25. Mehrstufengetriebe nach einem der Ansprüche 1 bis 24, **dadurch gekennzeichnet, dass** das dritte Schaltelement (C) räumlich gesehen in einem Bereich axial zwischen dem ersten Planetenradsatz (RS1) und dem vierten Planetenradsatz (RS4) angeordnet ist *[Fig. 9+12+17 22+25+26].*

26. Mehrstufengetriebe nach einem der Ansprüche 1 bis 24, **dadurch gekennzeichnet, dass** das dritte Schaltelement (C) räumlich gesehen auf der Seite des ersten Planetenradsatzes (RS1) angeordnet ist, die dem vierten Planetenradsatz (RS4) gegenüber liegt *[Fig. 4+ 7-11+14+15+27+28].*

27. Mehrstufengetriebe nach einem der Ansprüche 1 bis 24, **dadurch gekennzeichnet, dass** das dritte Schaltelement (C) räumlich gesehen auf der Seite des vierten Planetenradsatzes (RS4) angeordnet ist, die dem ersten Planetenradsatz (RS1) gegenüber liegt *[Fig. 23+24].*

28. Mehrstufengetriebe nach einem der Ansprüche 1 bis 24, **dadurch gekennzeichnet, dass** das dritte Schaltelement (C) räumlich gesehen in einem Bereich radial über dem ersten Planetenradsatz (RS1) angeordnet ist *[Fig. 8].*

29. Mehrstufengetriebe nach einem der Ansprüche 1 bis 28, **dadurch gekennzeichnet, dass** das vierte Schaltelement (D) räumlich gesehen in einem Bereich axial zwischen dem dritten Planetenradsatz (RS3) und der aus dem zweiten und vierten Planetenradsatz (RS2, RS4) gebildeten Radsatzgruppe angeordnet ist *[Fig. 1+4-15+17-19+23+27+28].*

30. Mehrstufengetriebe nach einem der Ansprüche 1 bis 28, **dadurch gekennzeichnet, dass** das vierte Schaltelement (D) räumlich gesehen in einem Bereich axial zwischen dem ersten Planetenradsatz (RS1) und der aus dem zweiten und vierten Planetenradsatz (RS2, RS4) gebildeten Radsatzgruppe angeordnet ist *[Fig.21+22+24+26].*

31. Mehrstufengetriebe nach einem der Ansprüche 1 bis 28, **dadurch gekennzeichnet, dass** ein Lamellenpaket des vierten Schaltelementes (D) räumlich gesehen in einem Bereich radial über dem zweiten Planetenradsatz (RS2) angeordnet ist, und dass eine Servoeinrichtung zum Betätigen des Lamellenpaketes des vierten Schaltelementes (D) räumlich gesehen zumindest überwiegend axial zwischen dem dritten Planetenradsatz (RS3) und der aus dem zweiten und vierten Planetenradsatz (RS2, RS4) gebildeten Radsatzgruppe angeordnet ist *[Fig. 6].*

32. Mehrstufengetriebe nach einem der Ansprüche 1 bis 28, **dadurch gekennzeichnet, dass** ein Lamellenpaket des vierten Schaltelementes (D) räumlich gesehen in einem Bereich axial zwischen dem dritten Planetenradsatz (RS3) und der aus dem zweiten und vierten Planetenradsatz (RS2, RS4) gebildeten Radsatzgruppe angeordnet ist, und dass eine Servoeinrichtung zum Betätigen des Lamellenpaketes des vierten Schaltelementes (D) räumlich gesehen zumindest überwiegend radial über dem zweiten Planetenradsatz (RS2) angeordnet ist *[Fig. 7-11].*

33. Mehrstufengetriebe nach einem der Ansprüche 1 bis 28, **dadurch gekennzeichnet, dass** ein Lamellenpaket (400) des vierten Schaltelementes (D) räumlich gesehen in einem Bereich axial zwischen dem dritten Planetenradsatz (RS3) und der aus dem zweiten und vierten Planetenradsatz (RS2, RS4) gebildeten Radsatzgruppe angeordnet ist, und dass eine Servoeinrichtung (430) zum Betätigen des Lamellenpaketes (400) des vierten Schaltelementes (D) räumlich gesehen zumindest überwiegend in einem Bereich axial zwischen dem ersten Planetenradsatz (RS1) und der aus dem zweiten und vierten Planetenradsatz (RS2, RS4) gebildeten Radsatzgruppe angeordnet ist, wobei ein auf das Lamellenpaket (400) des vierten Schaltelementes (D) wirkendes Betätigungselement der Servoeinrichtung (430) des vierten Schaltelementes (D) den zweiten Planetenradsatz (RS2) in axialer Richtung radial übergreift *[Fig. 12+13+20+25].*

34. Mehrstufengetriebe nach einem der Ansprüche 1 bis 33, **dadurch gekennzeichnet, dass** das fünfte Schaltelement (E) räumlich gesehen in einem Bereich axial zwischen dem ersten Planetenradsatz (RS1) und der aus dem zweiten und vierten Planetenradsatz (RS2, RS4) gebildeten Radsatz-Baugruppe angeordnet ist *[Fig.* 1+4+12+13+17-22+26].

35. Mehrstufengetriebe nach einem der Ansprüche 1 bis 33, **dadurch gekennzeichnet, dass** das fünfte Schaltelement (E) oder zumindest ein Lamellenpaket (500) des fünften Schaltelementes (E) räumlich gesehen auf der Seite des ersten Planetenradsatzes (RS1) angeordnet ist, die der aus dem zweiten und vierten Planetenradsatz (RS2, RS4) gebildeten Radsatzgruppe gegenüber liegt *[Fig.* 5-11+14].

36. Mehrstufengetriebe nach einem der Ansprüche 1 bis 33, **dadurch gekennzeichnet, dass** das dritte und fünfte Schaltelement (C, E) eine Baugruppe mit einem gemeinsamen Lamellenträger bilden, wobei das Lamellenpaket (300) des dritten Schaltelementes (C) räumlich gesehen im wesentlichen radial über dem Lamellenpaket (500) des fünften Schaltelementes (E) angeordnet ist *[Fig. 5-7+9+10+14+19].*

37. Mehrstufengetriebe nach einem der Ansprüche 1 bis 35, **dadurch gekennzeichnet, dass** das dritte und fünfte Schaltelement (C, E) eine Baugruppe mit einem gemeinsamen Lamellenträger bilden, wobei das Lamellenpaket (500) des fünften Schaltelementes (E) räumlich gesehen im wesentlichen radial über dem Lamellenpaket (300) des dritten Schaltelementes (C) angeordnet ist *[Fig. 18+20-24+26].*

38. Mehrstufengetriebe nach einem der Ansprüche 1 bis 35, **dadurch gekennzeichnet, dass** das dritte und fünfte Schaltelement (C, E) eine Baugruppe mit einem gemeinsamen Lamellenträger bilden, wobei die Lamellenpakete (300, 500) des dritten und fünften Schaltelementes (C, D) räumlich gesehen axial nebeneinander angeordnet sind *[Fig. 11].*

39. Mehrstufengetriebe nach Anspruch 36, 37 oder 38, **dadurch gekennzeichnet, dass** die aus dem dritten und fünften Schaltelement (C, E) gebildete Baugruppe axial benachbart zu der aus dem zweiten und vierten Planetenradsatz (RS2, RS4) gebildeten Radsatzgruppe und/oder axial benachbart zu dem ersten Planetenradsatz (RS1) angeordnet ist *[Fig. 18-24+26].*

40. Mehrstufengetriebe nach Anspruch 36, 37 oder 38, **dadurch gekennzeichnet, dass** die aus dem dritten und fünften Schaltelement (C, E) gebildete Baugruppe axial benachbart zum ersten Planetenradsatz (RS1) angeordnet ist *[Fig. 5-7+9-11+14].*

41. Mehrstufengetriebe nach einem der Ansprüche 1 bis 35, **dadurch gekennzeichnet, dass** das vierte und fünfte Schaltelement (D, E) eine Baugruppe mit einem gemeinsamen Lamellenträger bilden, wobei das Lamellenpaket (400) des vierten Schaltelementes (D) räumlich gesehen im wesentlichen radial über einem Lamellenpaket (500) des fünften Schaltelementes (E) angeordnet ist *[Fig. 15+26].*

42. Mehrstufengetriebe nach einem der Ansprüche 1 bis 35, **dadurch gekennzeichnet, dass** das vierte und fünfte Schaltelement (D, E) eine Baugruppe mit einem gemeinsamen Lamellenträger bilden, wobei das Lamellenpaket (500) des fünften Schaltelementes (E) räumlich gesehen im wesentlichen radial über dem Lamellenpaket (400) des vierten Schaltelementes (D) angeordnet ist *[Fig. 27].*

43. Mehrstufengetriebe nach einem der Ansprüche 1 bis 35, **dadurch gekennzeichnet, dass** das vierte und fünfte Schaltelement (D, E) eine Baugruppe mit einem gemeinsamen Lamellenträger bilden, wobei die Lamellenpakete (400, 500) des vierten und fünften Schaltelementes (D, E) räumlich gesehen axial nebeneinander angeordnet sind *[Fig. 28].*

44. Mehrstufengetriebe nach Anspruch 41, 42 oder 43, **dadurch gekennzeichnet, dass** die aus dem vierten und fünften Schaltelement (D, E) gebildete Baugruppe axial benachbart zu der aus dem zweiten und vierten Planetenradsatz (RS2, RS4) gebildeten Radsatzgruppe und/oder axial benachbart zu dem dritten Planetenradsatz (RS3) angeordnet ist *[Fig.* 15+26-28].

45. Mehrstufengetriebe nach einem der Ansprüche 1 bis 44, **dadurch gekennzeichnet, dass**
■ die erste Welle (1) abschnittsweise zentrisch innerhalb der dritten Welle (3) und abschnittsweise zentrisch innerhalb der fünften Welle (5) verläuft,
■ die dritte Welle (3) abschnittsweise zentrisch innerhalb der achten Welle (8) und abschnittsweise zentrisch innerhalb der zweiten Welle (2) verläuft,
■ die fünfte Welle (5) zentrisch innerhalb der sechsten Welle (6) verläuft, und
■ die sechste Welle (6) das vierte Schaltelement (D) und den zweiten Planetenradsatz (RS2) in axialer und radialer Richtung zumindest teilweise umgreift
*[Fig. 1+4+5+15+17-19+27+28]*

46. Mehrstufengetriebe nach einem der Ansprüche 1 bis 44, **dadurch gekennzeichnet, dass**
■ die erste Welle (1) abschnittsweise zentrisch innerhalb der dritten Welle (3) und abschnittsweise zentrisch innerhalb der fünften Welle (5) verläuft,
■ die dritte Welle (3) abschnittsweise zentrisch innerhalb der achten Welle (8) und abschnittsweise zentrisch innerhalb der zweiten Welle (2) verläuft,
■ die fünfte Welle (5) abschnittsweise zentrisch innerhalb der achten Welle (8) verläuft,
■ die achte Welle (8) zentrisch innerhalb des sechsten Welle (6) verläuft, und
■ die sechste Welle (6) das vierte Schaltelement (D) und den zweiten Planetenradsatz (RS2) in axialer und radialer Richtung zumindest teilweise umgreift
*[Fig. 12+13+20].*

47. Mehrstufengetriebe nach einem der Ansprüche 1 bis 44, **dadurch gekennzeichnet, dass**
■ die erste Welle (1) abschnittsweise zentrisch innerhalb der dritten Welle (3) und abschnittsweise zentrisch innerhalb der fünften Welle (5) verläuft,
■ die dritte Welle (3) abschnittsweise zentrisch innerhalb der achten Welle (8) und abschnittsweise zentrisch innerhalb der zweiten Welle (2) verläuft,
■ die fünfte Welle (5) abschnittsweise zentrisch innerhalb der achten Welle (8) verläuft,
■ die achte Welle (8) zentrisch innerhalb der zweiten Welle (2) verläuft,
■ die zweite Welle (2) abschnittsweise zentrisch innerhalb der sechsten Welle (6) verläuft, und
■ die sechste Welle (6) das vierte Schaltelement (D) und den zweiten Planetenradsatz (RS2) in axialer und radialer Richtung zumindest teilweise umgreift
*[Fig. 26].*

48. Mehrstufengetriebe nach einem der Ansprüche 1 bis 44, **dadurch gekennzeichnet, dass**
■ die erste Welle (1) abschnittsweise zentrisch innerhalb der dritten Welle (3) und abschnittsweise zentrisch innerhalb der siebten Welle (7) verläuft,
■ die dritte Welle (3) abschnittsweise zentrisch innerhalb der achten Welle (8) ■ und abschnittsweise zentrisch innerhalb der zweiten Welle (2) verläuft,
■ die siebte Welle (7) abschnittsweise zentrisch innerhalb der fünften Welle (5) verläuft,
■ die fünfte Welle (5) zentrisch innerhalb der sechsten Welle (6) verläuft, und
■ die sechste Welle (6) das vierte Schaltelement (D) und den zweiten Planetenradsatz (RS2) in axialer und radialer Richtung zumindest teilweise umgreift
*[Fig. 6+7+8+9+10+11+14+17+18+19]*

49. Mehrstufengetriebe nach einem der Ansprüche 1 bis 44, **dadurch gekennzeichnet, dass**
■ die erste Welle (1) abschnittsweise zentrisch innerhalb der dritten Welle (3) und abschnittsweise zentrisch innerhalb der siebten Welle (7) verläuft,
■ die dritte Welle (3) abschnittsweise zentrisch innerhalb der achten Welle (8) und abschnittsweise zentrisch innerhalb der zweiten Welle (2) verläuft,
■ die siebte Welle (7) abschnittsweise zentrisch innerhalb der fünften Welle (5) verläuft,
■ die fünfte Welle (5) abschnittsweise zentrisch innerhalb der achten Welle (8) verläuft,
■ die achte Welle (8) zentrisch innerhalb der sechsten Welle (6) verläuft, und
■ die sechste Welle (6) das vierte Schaltelement (D) und den zweiten Planetenradsatz (RS2) in axialer und radialer Richtung zumindest teilweise umgreift
*[Fig. 25].*

50. Mehrstufengetriebe nach einem der Ansprüche 1 bis 44, **dadurch gekennzeichnet, dass**
■ die erste Welle (1) abschnittsweise zentrisch innerhalb der dritten Welle (3) und abschnittsweise zentrisch innerhalb der siebten Welle (7) verläuft,
■ die dritte Welle (3) abschnittsweise zentrisch innerhalb der achten Welle (8) und abschnittsweise zentrisch innerhalb der zweiten Welle (2) verläuft,
■ die siebte Welle (7) abschnittsweise zentrisch innerhalb der fünften Welle (5) verläuft,
■ die fünfte Welle (5) abschnittsweise zentrisch innerhalb der achten Welle (8) verläuft,
■ die achte Welle (8) zentrisch innerhalb der zweiten Welle (2) verläuft,
■ die zweite Welle (2) abschnittsweise zentrisch innerhalb der sechsten Welle (6) verläuft, und
■ die sechste Welle (6) das vierte Schaltelement (D) und den zweiten Planetenradsatz (RS2) in axialer und radialer Richtung zumindest teilweise umgreift
*[Fig. 21+22+26].*

51. Mehrstufengetriebe nach einem der vorherigen Ansprüche, **dadurch gekennzeichnet, dass** die sechste Welle (6) das vierte und fünfte Schaltelement (D, E) sowie den zweiten Planetenradsatz (RS2) in axialer und radialer Richtung zumindest teilweise umgreift
*[Fig. 1+4+12+13+15+17+18+19+20+21+22+25+26+27+28].*

52. Mehrstufengetriebe nach einem der vorherigen Ansprüche, **dadurch gekennzeichnet, dass** die sechste Welle (6) das dritte, vierte und fünfte Schaltelement (C, D, E) sowie den zweiten Planetenradsatz (RS2) in axialer und radialer Richtung zumindest teilweise umgreift
*[Fig. 1+12+13+17+18+19+20+21+22+25+26].*

53. Mehrstufengetriebe nach einem der vorherigen Ansprüche, **dadurch gekennzeichnet, dass** ein Abschnitt der ersten Welle (1) das fünfte Schaltelement (E) in axialer und radialer Richtung zumindest teilweise umgreift
*[Fig. 5+6+7+8+9+90+14+17+19].*

54. Mehrstufengetriebe nach einem der Ansprüche 1 bis 44, **dadurch gekennzeichnet, dass**
■ die erste Welle (1) abschnittsweise zentrisch innerhalb der fünften Welle (5) und abschnittsweise zentrisch innerhalb der siebten Welle (7) verläuft,
■ die siebte Welle (7) zentrisch innerhalb der fünften Welle (5) verläuft,
■ die achte Welle (8) zentrisch innerhalb der fünften Welle (5) verläuft,
■ die dritte Welle (3) abschnittsweise zentrisch innerhalb der achten Welle (8) und abschnittsweise zentrisch innerhalb der zweiten Welle (2) verläuft,
■ die zweite Welle (2) abschnittsweise zentrisch innerhalb der fünften Welle (5) und abschnittsweise zentrisch innerhalb der sechsten Welle (6) verläuft, und
■ die fünfte Welle (5) das dritte, vierte und fünfte Schaltelement (C, D, E) sowie den zweiten Planetenradsatz (RS2) in axialer und radialer Richtung zumindest teilweise umgreift
*[Fig. 23+24].*

55. Mehrstufengetriebe nach einem der Ansprüche 1 bis 44 oder 54, **dadurch gekennzeichnet, dass** die sechste Welle (6) zentrisch innerhalb der fünften Welle (5) verläuft, und dass die fünfte Welle (5) den dritten Planetenradsatz (RS3) in axialer Richtung übergreift *[Fig. 23].*

56. Mehrstufengetriebe nach einem der Ansprüche 1 bis 44 oder 54, **dadurch gekennzeichnet, dass** ein Abschnitt der fünften Welle (5) zentrisch innerhalb der sechsten Welle (6) verläuft *[Fig. 24+27+28].*

57. Mehrstufengetriebe nach einem der Ansprüche 1 bis 56, **dadurch gekennzeichnet, dass** ein Abschnitt der fünften Welle (5) den zweiten Planetenradsatz (RS2) in axialer Richtung vollständig übergreift
*[Fig. 23+24+25+27+28].*

58. Mehrstufengetriebe nach einem der Ansprüche 1 bis 57, **dadurch gekennzeichnet, dass** ein Antrieb des Getriebes auf der dem ersten Planetenradsatz (RS1) gegenüberliegenden Seite des Getriebegehäuses (GG) angeordnet ist.

59. Mehrstufengetriebe nach einem der Ansprüche 1 bis 57, **dadurch gekennzeichnet, dass** ein Antrieb des Getriebes auf der dem dritten Planetenradsatz (RS3) gegenüberliegenden Seite des Getriebegehäuses (GG) angeordnet ist.

60. Mehrstufengetriebe nach einem der vorstehenden Ansprüche, **dadurch gekennzeichnet, dass** die Antriebswelle (AN) durch ein Kupplungselement von einem Antriebs-Motor des Kraftfahrzeugs trennbar ist.

61. Mehrstufengetriebe nach einem der vorstehenden Ansprüche, **dadurch gekennzeichnet, dass** in Kraftflussrichtung hinter dem Getriebe ein externes Anfahrelement angeordnet ist, wobei die Antriebswelle (AN) verdrehfest oder drehelastisch mit einer Kurbelwelle des Antriebs-Motors verbunden ist.

62. Mehrstufengetriebe nach Anspruch 60 oder 61, **dadurch gekennzeichnet, dass** das Kupplungselement bzw. das Anfahrelement als hydrodynamischer Wandler oder hydraulische Kupplung oder trockene Anfahrkupplung oder nasse Anfahrkupplung oder Magnetpulverkupplung oder Fliehkraftkupplung ausgebildet ist.

63. Mehrstufengetriebe nach einem der vorstehenden Ansprüche, **dadurch gekennzeichnet, dass** ein Anfahren des Kraftfahrzeugs mittels eines getriebeintemen Schaltelementes erfolgt, wobei die Antriebswelle (AN) ständig verdrehfest oder drehelastisch mit der Kurbelwelle des Antriebs-Motors verbunden ist.

64. Mehrstufengetriebe nach Anspruch 63, **dadurch gekennzeichnet, dass** das Anfahren des Kraftfahrzeugs in Vorwärts- und Rückwärtsfahrtrichtung mittels des gleichen getriebeintemen Schaltelementes erfolgt, insbesondere mittels des ersten oder des zweiten Schaltelementes (A, B).

65. Mehrstufengetriebe nach einem der vorstehenden Ansprüche, **dadurch gekennzeichnet, dass** zwischen Antriebs-Motor und Getriebe ein Torsionsschwingungsdämpfer angeordnet ist.

66. Mehrstufengetriebe nach einem der vorstehenden Ansprüche, **dadurch gekennzeichnet, dass** an jeder Welle (AN, AB, 1, 2, 3, 4, 5, 6, 7, 8) des Getriebes eine verschleißfreie Bremse oder ein Nebenabtrieb zum Antrieb von zusätzlichen Aggregaten oder eine elektrische Maschine als Generator und/oder als zusätzliche Antriebsmaschine anbringbar ist.

67. Mehrstufengetriebe nach einem der vorstehenden Ansprüche, **dadurch gekennzeichnet, dass** als Schaltelemente (A, B, C, D, E) reibschlüssige Kupplungen bzw. reibschlüssige Bremsen - insbesondere Lamellenkupplungen, Bandbremsen und/oder Konuskupplungen - und/oder formschlüssige Kupplungen bzw, formschlüssige Bremsen - insbesondere Konuskupplungen und/oder Klauenkupplungen - vorgesehen sind.

## Claims

1. Multi-step transmission of epicyclic type of construction, in particular automatic transmission for a motor vehicle, comprising a drive shaft (AN) and an output shaft (AB), four planet-wheel sets (RS1, RS2, RS3, RS4), at least eight rotatable shafts (1, 2, 3, 4, 5, 6, 7, 8) and five shift elements (A, B, C, D, E), the selective engagement of which gives rise to different step-up ratios between the drive shaft (AN) and the output shaft (AB), so that eight forward gears and at least one reverse gear can be implemented,
• a web (ST4) of the fourth planet-wheel set (RS4) and the drive shaft (AN) being connected fixedly in terms of rotation to one another and forming the first shaft (1),
• a web (ST3) of the third planet-wheel set (RS3) and the output shaft (AB) being connected to one another and forming the second shaft (2),
• a sun wheel (S03) of the third planet-wheel set (RS3) and a sun wheel (SO4) of the fourth planet-wheel set (RS4) being connected fixedly in terms of rotation to one another and forming the third shaft (3),
• a ring wheel (HO1) of the first planet-wheel set (RS1) forming the fourth shaft (4),
• a ring wheel (HO2) of the second planet-wheel set (RS2) and a sun wheel (SO1) of the first planet-wheel set (RS1) being connected fixedly in terms of rotation to one another and forming the fifth shaft (5),
• a web (ST1) of the first planet-wheel set (RS1) and a ring wheel (H03) of the third planet-wheel set (RS3) being connected fixedly in terms of rotation to one another and forming the sixth shaft (6),
• a sun wheel (SO2) of the second planet-wheel set (RS2) and a ring wheel (HO4) of the fourth planet-wheel set (RS4) being connected fixedly in terms of rotation to one another and forming the seventh shaft (7),
• a web (ST2) of the second planet-wheel set (RS2) forming the eighth shaft (8),
• the first shift element (A) being arranged in the force flux between the third shaft (3) and a case (GG) of the transmission,
• the second shift element (B) being arranged in the force flux between the fourth shaft (4) and the case (GG) of the transmission,
• the third shift element (C) being arranged in the force flux between the fifth shaft (5) and the first shaft (1),
• the fourth shift element (D) being arranged in the force flux either between the eighth shaft (8) and the second shaft (2) or between the eighth shaft (8) and the sixth shaft (6), and
• the fifth shift element (E) being arranged in the force flux either between the seventh shaft (7) and the fifth shaft (5) or between the seventh shaft (7) and the eighth shaft (8) or between the fifth shaft (5) and the eighth shaft (8).

2. Multi-step transmission according to Claim 1, **characterized in that**
• the second and the fourth planet-wheel set (RS2, RS4) are arranged radially one above the other in one plane, as seen in the axial direction,
• the fourth planet-wheel set (RS4) is arranged centrically within the second planet-wheel set (RS2), and
• the second and the fourth planet-wheel set (RS2, RS4) are arranged, as seen spatially, in a region axially between the first and the third planet-wheel set (RS1, RS3) *[Fig. 1+4-15+17-22+25-28].*

3. Multi-step transmission according to Claim 1, **characterized in that**
• the second and the fourth planet-wheel set (RS2, RS4) are arranged radially one above the other in one plane, as seen in the axial direction,
• the fourth planet-wheel set (RS4) is arranged centrically within the second planet-wheel set (RS2), and
• the third planet-wheel set (RS3) is arranged, as seen spatially, in a region axially between the first planet-wheel set (RS1) and the two planet-wheel sets (RS2, RS4) arranged radially one above the other *[Fig. 23].*

4. Multi-step transmission according to Claim 1, **characterized in that**
• the second and the fourth planet-wheel set (RS2, RS4) are arranged radially one above the other in one plane, as seen in the axial direction,
• the fourth planet-wheel set (RS4) is arranged centrically within the second planet-wheel set (RS2), and
• the first planet-wheel set (RS1) is arranged, as seen spatially, in a region axially between the third planet-wheel set (RS3) and the two planet-wheel sets (RS2, RS4) arranged radially one above the other *[Fig. 24].*

5. Multi-step transmission according to one of Claims 1 to 4, **characterized in that** the ring wheel (HO4) of the fourth planet-wheel set (RS4) and the sun wheel (S02) of the second planet-wheel set (RS2) are combined into one common one-piece component.

6. Multi-step transmission according to one of Claims 1 to 4, **characterized in that** the ring wheel (HO4) of the fourth planet-wheel set (RS4) and the sun wheel (S02) of the second planet-wheel set (RS2) are in each case produced as a separate component and connected to one another.

7. Multi-step transmission according to Claim 6, **characterized in that** the ring wheel (HO4) of the fourth planet-wheel set (RS4) and the sun wheel (SO2) of the second planet-wheel set (RS2) are connected fixedly in terms of the rotation to one another.

8. Multi-step transmission according to Claim 6, **characterized in that** the ring wheel (HO4) of the fourth planet-wheel set (RS4) and the sun wheel (SO2) of the second planet-wheel set (RS2) are connected elastically in terms of rotation to one another.

9. Multi-step transmission according to one of the preceding claims, **characterized in that** all four planet-wheel sets (RS1, RS2, RS3, RS4) are designed as minus planet-wheel sets.

10. Multi-step transmission according to one of Claims 1 to 9, **characterized in that** the web (ST2) of the second planet-wheel set (RS2) is mounted radially, via the drive shaft (AN) or the first shaft (1) of the transmission, on the transmission case (GG) or a hub fixed to the transmission case.

11. Multi-step transmission according to one of Claims 1 to 9, **characterized in that** the web (ST2) of the second planet-wheel set (RS2) is mounted radially on the third shaft (3) of the transmission.

12. Multi-step transmission according to one of the preceding claims, **characterized in that**
• the first forward gear is obtained by the closing of the first, second and third shift element (A, B, C),
• the second forward gear is obtained by the closing of the first, second and fifth shift element (A, B, E),
• the third forward gear is obtained by the closing of the second, third and fifth shift element (B, C, E),
• the fourth forward gear is obtained by the closing of the second, fourth and fifth shift element (B, D, E),
• the fifth forward gear is obtained by the closing of the second, third and fourth shift element (B, C, D),
• the sixth forward gear is obtained by the closing of the third, fourth and fifth shift element (C, D, E),
• the seventh forward gear is obtained by the closing of the first, third and fourth shift element (A, C, D), and
• the eighth forward gear is obtained by the closing of the first, fourth and fifth shift element (A, D, E).

13. Multi-step transmission according to one of the preceding claims, **characterized in that** a reverse gear is obtained by the closing of the first, second and fourth shift element (A, B, D).

14. Multi-step transmission according to one of the preceding claims, **characterized in that** the fourth planet-wheel set (RS4) is pierced centrically in the axial direction at most by one shaft of the transmission, in particular only by the drive shaft (AN) or only by the first shaft (1) of the transmission *[Fig. 1+3-15+17-28].*

15. Multi-step transmission according to one of the preceding claims, **characterized in that** the third planet-wheel set (RS3) is pierced centrically in the axial direction at most by one shaft of the transmission in particular only by the drive shaft (AN) or only by the first shaft (1) and the transmission *[Fig. 1+4-15+17-28].*

16. Multi-step transmission according to one of Claims 1 to 15, **characterized in that** the first planet-wheel set (RS1) is pierced centrically in the axial direction at most by one shaft of the transmission, in particular only by the drive shaft (AN) or only by the first shaft (1) of the transmission *[Fig. 1+4+15+17-22+25-28].*

17. Multi-step transmission according to one of Claims 1 to 15, **characterized in that** the first planet-wheel set (RS1) is pierced centrically in the axial direction by two shafts of the transmission, in particular by the seventh shaft (7) and the drive shaft (AN) or first shaft (1) running partially centrically within the seventh shaft (7) *[Fig. 5-11+14+23+24].*

18. Multi-step transmission according to one of the preceding claims, **characterized in that** the drive shaft (AN) and the output shaft (AB) are not arranged coaxially with respect to one another, in particular are arranged axially parallel or angularly with respect to one another.

19. Multi-step transmission according to one of the preceding claims, **characterized in that** a spur or chain drive provided in the force flux between the web (ST3) of the third planet-wheel set (RS3) and the output shaft (AB) is arranged, as seen spatially, at least partially on that side of the third planet-wheel set (RS3) which lies opposite the wheel-set group formed from the second and the fourth planet-wheel set (RS2, RS4), and **in that** the first shift element (A) is arranged, as seen spatially, on that side of the spur or chain drive which lies opposite the third planet-wheel set (RS3) *[Fig. 1+4-15+17-28].*

20. Multi-step transmission according to one of the preceding claims, **characterized in that** a spur or chain wheel, connected to the web (ST3) of the third planet-wheel set (RS3), of the spur or chain drive is arranged axially between the third planet-wheel set (RS3) and the first shift element (A) *[Fig. 1+4-15+17-22+24-28].*

21. Multi-step transmission according to one of the preceding claims, **characterized in that** a spur or chain wheel, connected to the web (ST3) of the third planet-wheel set (RS3), of the spur or chain drive is arranged axially between the first planet-wheel set (RS1) and the first shift element (A) *[Fig. 23].*

22. Multi-step transmission according to one of the preceding claims, **characterized in that** the second shift element (B) is arranged, as seen spatially, in a region radially above the first planet-wheel set (RS1) *[Fig. 1+4-9+15+17-28].*

23. Multi-step transmission according to one of the preceding claims, **characterized in that** the second shift element (B) is arranged, as seen spatially, in a region radially above the third shift element (C) *[Fig. 8].*

24. Multi-step transmission according to one of the preceding claims, **characterized in that** the third shift element (C) is arranged, as seen spatially, adjacently to the first planet-wheel set (RS1) *[Fig. 1+4-7+9-15+17+19+26-28].*

25. Multi-step transmission according to one of Claims 1 to 24, **characterized in that** the third shift element (C) is arranged, as seen spatially, in a region axially between the first planet-wheel set (RS1) and the fourth planet-wheel set (RS4) *[Fig. 1+12+17-22+25+26].*

26. Multi-step transmission according to one of Claims 1 to 24, **characterized in that** the third shift element (C) is arranged, as seen spatially, on that side of the first planet-wheel set (RS1) which lies opposite the fourth planet-wheel set (RS4) *[Fig. 4+7-11+14+15+27+28].*

27. Multi-step transmission according to one of Claims 1 to 24, **characterized in that** the third shift element (C) is arranged, as seen spatially, on that side of the fourth planet-wheel set (RS4) which lies opposite the first planet-wheel set (RS1) *[Fig. 23+24].*

28. Multi-step transmission according to one of Claims 1 to 24, **characterized in that** the third shift element (C) is arranged, as seen spatially, in a region radially above the first planet-wheel set (RS1) *[Fig. 8].*

29. Multi-step transmission according to one of Claims 1 to 28, **characterized in that** the fourth shift element (D) is arranged, as seen spatially, in a region axially between the third planet-wheel set (RS3) and the wheel-set group formed from the second and the fourth planet-wheel set (RS2, RS4) *[Fig. 1+4-15+17-19+23+27+28].*

30. Multi-step transmission according to one of Claims 1 to 28, **characterized in that** the fourth shift element (D) is arranged, as seen spatially, in a region axially between the first planet-wheel set (RS1) and the wheel-set group formed from the second and the fourth planet-wheel set (RS2, RS4) *[Fig. 21+22+24+26].*

31. Multi-step transmission according to one of Claims 1 to 28, **characterized in that** a disc stack of the fourth shift element (D) is arranged, as seen spatially, in a region radially above the second planet-wheel set (RS2), and **in that** a servo device for actuating the disc stack of the fourth shift element (D) is arranged, as seen spatially, at least predominantly axially between the third planet-wheel set (RS3) and the wheel-set group formed from the second and the fourth planet-wheel set (RS2, RS4) *[Fig. 6].*

32. Multi-step transmission according to one of Claims 1 to 28, **characterized in that** a disc stack of the fourth shift element (D) is arranged, as seen spatially, in a region axially between the third planet-wheel set (RS3) and the wheel-set group formed from the second and the fourth planet-wheel set (RS2, RS4), and **in that** a servo device for actuating the disc stack of the fourth shift element (D) is arranged, as seen spatially, at least predominantly radially above the second planet-wheel set (RS2) *[Fig. 7-11].*

33. Multi-step transmission according to one of Claims 1 to 28, **characterized in that** a disc stack (400) of the fourth shift element (D) is arranged, as seen spatially, in a region axially between the third planet-wheel set (RS3) and the wheel-set group formed from the second and the fourth planet-wheel set (RS2, RS4), and **in that** a servo device (430) for actuating the disc stack (400) of the fourth shift element (D) is arranged, as seen spatially, at least predominantly in a region axially between the first planet-wheel set (RS1) and the wheel-set group formed from the second and fourth planet-wheel set (RS2, RS4), an actuating element, acting on the disc stack (400) of the fourth shift element (D), of the servo device (430) of the fourth shift element (D) engaging radially over the second planet-wheel set (RS2) in the axial direction *[Fig. 12+13+20+25].*

34. Multi-step transmission according to one of Claims 1 to 33, **characterized in that** the fifth shift element (E) is arranged, as seen spatially, in a region axially between the first planet-wheel set (RS1) and the wheel-set subassembly formed from the second and the fourth planet-wheel set (RS2, RS4) *[Fig. 1+4+12+13+17-22+26].*

35. Multi-step transmission according to one of Claims 1 to 33, **characterized in that** the fifth shift element (E) or at least a disc stack (500) of the fifth shift element (E) is arranged, as seen spatially, on that side of the first planet-wheel set (RS1) which lies opposite the wheel-set group formed from the second and the fourth planet-wheel set (RS2, RS4) [Fig. *5-11+14].*

36. Multi-step transmission according to one of Claims 1 to 33, **characterized in that** the third and the fifth shift element (C, E) form a subassembly with a common disc carrier, the disc stack (300) of the third shift element (C) being arranged, as seen spatially, essentially radially above the disc stack (500) of the fifth shift element (E) *[Fig. 5-7+9+10+14+19].*

37. Multi-step transmission according to one of Claims 1 to 35, **characterized in that** the third and the fifth shift element (C, E) form a subassembly with a common disc carrier, the disc stack (500) of the fifth shift element (E) being arranged, as seen spatially, essentially radially above the disc stack (300) of the third shift element (C) *[Fig. 18+20-24+28].*

38. Multi-step transmission according to one of Claims 1 to 35, **characterized in that** the third and the fifth shift element (C, E) form a subassembly with a common disc carrier, the disc stacks (300, 500) of the third and the fifth shift element (C, D) being arranged, as seen spatially, axially next to one another [*Fig. 11].*

39. Multi-step transmission according to Claim 36, 37 or 38, **characterized in that** the subassembly formed from the third and the fifth shift element (C, E) is arranged axially adjacently to the wheel-set group formed from the second and the fourth planet-wheel set (RS2, RS4) and/or axially adjacently to the first planet-wheel set (RS1) *[Fig. 18-24+26].*

40. Multi-step transmission according to Claim 36, 37 or 38, **characterized in that** the subassembly formed from the third and the fifth shift element (C, E) is arranged axially adjacently to the first planet-wheel set (RS1) *[Fig. 5-7+9-11+14].*

41. Multi-step transmission according to one of Claims 1 to 35, **characterized in that** the fourth and the fifth shift element (D, E) form a subassembly with a common disc carrier, the disc stack (400) of the fourth shift element (D) being arranged, as seen spatially, essentially radially above a disc stack (500) of the fifth shift element (E) *[Fig. 15+26].*

42. Multi-step transmission according to one of Claims 1 to 35, **characterized in that** the fourth and the fifth shift element (D, E) form a subassembly with a common disc carrier, the disc stack (500) of the fifth shift element (E) being arranged, as seen spatially, essentially radially above the disc stack (400) of the fourth shift element (D) [*Fig. 27].*

43. Multi-step transmission according to one of Claims 1 to 35, **characterized in that** the fourth and the fifth shift element (D, E) form a subassembly with a common disc carrier, the disc stacks (400, 500) of the fourth and fifth shift element (D, E) being arranged, as seen spatially, axially next to one another *[Fig. 28].*

44. Multi-step transmission according to Claim 41, 42 or 43, **characterized in that** the subassembly formed form the fourth and the fifth shift element (D, E) is arranged axially adjacently to the wheel-set group formed from the second and the fourth planet-wheel set (RS2, RS4) and/or axially adjacently to the third planet-wheel set (RS3) *[Fig. 15+26-28].*

45. Multi-step transmission according to one of Claims 1 to 44, **characterized in that**
• the first shaft (1) runs partially centrically within the third shaft (3) and partially centrically within the fifth shaft (5),
• the third shaft (3) runs partially centrically within the eighth shaft (8) and partially centrically within the second shaft (2),
• the fifth shaft (5) runs centrically within the sixth shaft (6), and
• the sixth shaft (6) at least partially surrounds the fourth shift element (D) and the second planet-wheel set (RS2) in the axial and the radial direction *[Fig. 1+4+5+15+17-19+27+28].*

46. Multi-step transmission according to one of Claims 1 to 44, **characterized in that**
• the first shaft (1) runs partially centrically within the third shaft (3) and partially centrically within the fifth shaft (5),
• the third shaft (3) runs partially centrically within the eighth shaft (8) and partially centrically within the second shaft (2),
• the fifth shaft (5) runs partially centrically within the eighth shaft (8),
• the eighth shaft (8) runs centrically within the sixth shaft (6), and
• the sixth shaft (6) at least partially surrounds the fourth shift element (D) and the second planet-wheel set (RS2) in the axial and the radial direction *[Fig. 12+13+20].*

47. Multi-step transmission according to one of Claims 1 to 44, **characterized in that**
• the first shaft (1) runs partially centrically within the third shaft (3) and partially centrically within the fifth shaft (5),
• the third shaft (3) runs partially centrically within the eighth shaft (8) and partially centrically within the second shaft (2),
• the fifth shaft (5) runs partially centrically within the eighth shaft (8),
• the eighth shaft (8) runs centrically within the second shaft (2),
• the second shaft (2) runs partially centrically within the sixth shaft (6), and
• the sixth shaft (6) at least partially surrounds the fourth shift element (D) and the second planet-wheel set (RS2) in the axial and the radial direction *[Fig. 26].*

48. Multi-step transmission according to one of Claims 1 to 44, **characterized in that**
• the first shaft (1) runs partially centrically within the third shaft (3) and partially centrically within the seventh shaft (7),
• the third shaft (3) runs partially centrically within the eighth shaft (8) and partially centrically within the second shaft (2),
• the seventh shaft (7) runs partially centrically within the fifth shaft (5),
• the fifth shaft (5) runs centrically within the sixth shaft (6), and
• the sixth shaft (6) at least partially surrounds the fourth shift element (D) and the second planet-wheel set (RS2) in the axial and the radial direction *[Fig. 6+7+8+9+10+11+14+17+18+19].*

49. Multi-step transmission according to one of Claims 1 to 44, **characterized in that**
• the first shaft (1) runs partially centrically within the third shaft (3) and partially centrically within the seventh shaft (7),
• the third shaft (3) runs partially centrically within the eighth shaft (8) and partially centrically within the second shaft (2),
• the seventh shaft (7) runs partially centrically within the fifth shaft (5),
• the fifth shaft (5) runs partially centrically within the eighth shaft (8),
• the eighth shaft (8) runs centrically within the sixth shaft (6), and
• the sixth shaft (6) at least partially surrounds the fourth shift element (D) and the second planet-wheel set (RS2) in the axial and the radial direction *[Fig. 25].*

50. Multi-step transmission according to one of Claims 1 to 44, **characterized in that**
• the first shaft (1) runs partially centrically within the third shaft (3) and partially centrically within the seventh shaft (7),
• the third shaft (3) runs partially centrically within the eighth shaft (8) and partially centrically within the second shaft (2),
• the seventh shaft (7) runs partially centrically within the fifth shaft (5),
• the fifth shaft (5) runs partially centrically within the eighth shaft (8),
• the eighth shaft (8) runs centrically within the second shaft (2),
• the second shaft (2) runs partially centrically within the sixth shaft (6), and
• the sixth shaft (6) at least partially surrounds the fourth shift element (D) and the second planet-wheel set (RS2) in the axial and the radial direction *[Fig. 21+22+26].*

51. Multi-step transmission according to one of the preceding claims, **characterized in that** the sixth shaft (6) at least partially surrounds the fourth and the fifth shift element (D, E) and also the second planet-wheel set (RS2) in the axial and the radial direction *[Fig. 1+4+12+13+15+17+18+19+20+21+22+25+26+27+28].*

52. Multi-step transmission according to one of the preceding claims, **characterized in that** the sixth shaft (6) at least partially surrounds the third, the fourth and the fifth shift element (C, D, E) and also the second planet-wheel set (RS2) in the axial and the radial direction
*[Fig. 1+12+13+17+IS+19+20+21+22+25+26].*

53. Multi-step transmission according to one of the preceding claims, **characterized in that** a portion of the first shaft (1) at least partially surrounds the fifth shift element (E) in the axial and the radial direction *[Fig. 5+6+7+8+9+10+14+1 7+19] .*

54. Multi-step transmission according to one of Claims 1 to 44, **characterized in that**
• the first shaft (1) runs partially centrically within the fifth shaft (5) and partially centrically within the seventh shaft (7),
• the seventh shaft (7) runs centrically within the fifth shaft (5),
• the eighth shaft (8) runs centrically within the fifth shaft (5),
• the third shaft (3) runs partially centrically within the eighth shaft (8) and partially centrically within the second shaft (2),
• the second shaft (2) runs partially centrically within the fifth shaft (5) and partially centrically within the sixth shaft (6), and
• the fifth shaft (5) at least partially surrounds the third, the fourth and the fifth shift element (C, D, E) and also the second planet-wheel set (RS2) in the axial and the radial direction [Fig. *23+24].*

55. Multi-step transmission according to one of Claims 1 to 44 or 54, **characterized in that** the sixth shaft (6) runs centrically within the fifth shaft (5), and **in that** the fifth shaft (5) engages over the third planet-wheel set (RS3) in the axial direction [Fig. *23] .*

56. Multi-step transmission according to one of Claims 1 to 44 or 54, **characterized in that** a portion of the fifth shaft (5) runs centrically within the sixth shaft (6) *[Fig. 24+27+28].*

57. Multi-step transmission according to one of Claims 1 to 56, **characterized in that** a portion of the fifth shaft (5) engages completely over the second planet-wheel set (RS2) in the axial direction [Fig. *23+24+25+27+28] .*

58. Multi-step transmission according to one of Claims 1 to 57, **characterized in that** a drive of the transmission is arranged on that side of the transmission case (GG) which lies opposite the first planet-wheel set (RS1).

59. Multi-step transmission according to one of Claims 1 to 57, **characterized in that** a drive of the transmission is arranged on that side of the transmission case (GG) which lies opposite the third planet-wheel set (RS3).

60. Multi-step transmission according to one of the preceding claims, **characterized in that** the drive shaft (AN) is separable from an engine of the motor vehicle by means of a clutch element.

61. Multi-step transmission according to one of the preceding claims, **characterized in that** an external starting element is arranged downstream of the transmission in the force-flux direction, the drive shaft (AN) being connected fixedly in terms of rotation or elastically in terms of rotation to a crankshaft of the drive engine.

62. Multi-step transmission according to Claim 60 or 61, **characterized in that** the clutch element or the starting element is designed as a hydrodynamic converter or hydraulic clutch or dry starting clutch or wet starting clutch or magnetic-powder clutch or centrifugal clutch.

63. Multi-step transmission according to one of the preceding claims, **characterized in that** a starting of the motor vehicle takes place by means of an internal-to-transmission shift element, the drive shaft (AN) being constantly connected fixedly in terms of rotation or elastically in terms of rotation to the crankshaft of the engine.

64. Multi-step transmission according to Claim 63, **characterized in that** the starting of the motor vehicle in the forward and the reverse direction of travel takes place by means of the same internal-to-transmission shift element, in particular by means of the first or the second shift element (A, B).

65. Multi-step transmission according to one of the preceding claims, **characterized in that** a torsional vibration damper is arranged between the engine and transmission.

66. Multi-step transmission according to one of the preceding claims, **characterized in that** a wear-free brake or a secondary output for the drive of additional assemblies or an electric machine as a generator and/or as an additional driving machine can be mounted on each shaft (AN, AB, 1, 2, 3, 4, 5, 6, 7, 8) of the transmission.

67. Multi-step transmission according to one of the preceding claims, **characterized in that** the shift elements (A, B, C, D, E) provided are frictional clutches or frictional brakes - in particular, multiple-disc clutches, band brakes and/or cone clutches - and/or positive clutches or positive brakes - in particular, cone clutches and/or dog clutches.

## Revendications

1. Boîte de vitesses à plusieurs vitesses à construction planétaire, notamment boîte de vitesses automatique pour un véhicule automobile, comprenant un arbre d'entraînement (AN) et un arbre de sortie (AB), quatre trains planétaires (RS1, RS2, RS3, RS4), au moins huit arbres rotatifs (1, 2, 3, 4, 5, 6, 7, 8) ainsi que cinq éléments de changement de vitesse (A, B, C, D, E) dont l'engagement sélectif provoque différents rapports de multiplication entre l'arbre d'entraînement (AN) et l'arbre de sortie (AB), de sorte que huit vitesses avant et au moins une vitesse arrière puissent être réalisées,
- une tige (ST4) du quatrième train planétaire (RS4) et l'arbre d'entraînement (AN) étant connectés l'un à l'autre de manière solidaire en rotation et formant le premier arbre (1),
- une tige (ST3) du troisième train planétaire (RS3) et l'arbre de sortie (AB) étant connectés l'un à l'autre et formant le deuxième arbre (2),
- une roue solaire (SO3) du troisième train planétaire (RS3) et une roue solaire (SO4) du quatrième train planétaire (RS4) étant connectées l'une à l'autre de manière solidaire en rotation et formant le troisième arbre (3),
- une couronne (HO1) du premier train planétaire (RS1) formant le quatrième arbre (4),
- une couronne (HO2) du deuxième train planétaire (RS2) et une roue solaire (SO1) du premier train planétaire (RS1) étant connectées l'une à l'autre de manière solidaire en rotation et formant le cinquième arbre (5),
- une tige (ST1) du premier train planétaire (RS1) et une couronne (HO3) du troisième train planétaire (RS3) étant connectées l'une à l'autre de manière solidaire en rotation et formant le sixième arbre (6),
- une roue solaire (SO2) du deuxième train planétaire (RS2) et une couronne (HO4) du quatrième train planétaire (RS4) étant connectées l'une à l'autre de manière solidaire en rotation et formant le septième arbre (7),
- une tige (ST2) du deuxième train planétaire (RS2) formant le huitième arbre (8),
- le premier élément de changement de vitesse (A) étant disposé dans le flux de forces entre le troisième arbre (3) et un boîtier (GG) de la boîte de vitesses,
- le deuxième élément de changement de vitesse (B) étant disposé dans le flux de forces entre le quatrième arbre (4) et le boîtier (GG) de la boîte de vitesses,
- le troisième élément de changement de vitesse (C) étant disposé dans le flux de forces entre le cinquième arbre (5) et le premier arbre (1),
- le quatrième élément de changement de vitesse (D) étant disposé dans le flux de forces entre le huitième arbre (8) et le deuxième arbre (2) ou entre le huitième arbre (8) et le sixième arbre (6), et
- le cinquième élément de changement de vitesse (E) étant disposé dans le flux de forces entre le septième arbre (7) et le cinquième arbre (5), entre le septième arbre (7) et le huitième arbre (8) ou entre le cinquième arbre (5) et le huitième arbre (8).

2. Boîte de vitesses à plusieurs vitesses selon la revendication 1, **caractérisée en ce que**
- le deuxième et le quatrième train planétaire (RS2, RS4), vus dans la direction axiale, sont disposés dans un plan radialement l'un au-dessus de l'autre,
- le quatrième train planétaire (RS4) est disposé centralement à l'intérieur du deuxième train planétaire (RS2), et
- le deuxième et le quatrième train planétaire (RS2, RS4), vus spatialement, sont disposés dans une région axialement entre le premier et le troisième train planétaire (RS1, RS3) *[Fig. 1 + 4 - 15 + 17 - 22 + 25 - 28*] .

3. Boîte de vitesses à plusieurs vitesses selon la revendication 1, **caractérisée en ce que**
- le deuxième et le quatrième train planétaire (RS2, RS4), vus dans la direction axiale, sont disposés dans un plan radialement l'un au-dessus de l'autre,
- le quatrième train planétaire (RS4) est disposé centralement à l'intérieur du deuxième train planétaire (RS2) et
- le troisième train planétaire (RS3), vu spatialement, est disposé dans une région axialement entre le premier train planétaire (RS1) et les deux trains planétaires disposés radialement l'un au-dessus de l'autre (RS2, µRS4 ) *[ Fig. 23*].

4. Boîte de vitesses à plusieurs vitesses selon la revendication 1, **caractérisée en ce que**
- le deuxième et le quatrième train planétaire (RS2, RS4), vus dans la direction axiale, sont disposés dans un plan radialement l'un au-dessus de l'autre,
- le quatrième train planétaire (RS4) est disposé centralement à l'intérieur du deuxième train planétaire (RS2), et
- le premier train planétaire (RS1), vu spatialement, est disposé dans une région axialement entre le troisième train planétaire (RS3) et les deux trains planétaires disposés radialement l'un au-dessus de l'autre (RS2, RS4) *[Fig. 24]*.

5. Boîte de vitesses à plusieurs vitesses selon l'une quelconque des revendications 1 à 4, **caractérisée en ce que** la couronne (HO4) du quatrième train planétaire (RS4) et la roue solaire (SO2) du deuxième train planétaire (RS2) sont réunies pour former un composant commun d'une seule pièce.

6. Boîte de vitesses à plusieurs vitesses selon l'une quelconque des revendications 1 à 4, **caractérisée en ce que** la couronne (HO4) du quatrième train planétaire (RS4) et la roue solaire (SO2) du deuxième train planétaire (RS2) sont réalisées chacune sous forme de composant séparé et sont connectées l'une à l'autre.

7. Boîte de vitesses à plusieurs vitesses selon la revendication 6, **caractérisée en ce que** la couronne (HO4) du quatrième train planétaire (RS4) et la roue solaire (S02) du deuxième train planétaire (RS2) sont connectées l'une à l'autre de manière solidaire en rotation.

8. Boîte de vitesses à plusieurs vitesses selon la revendication 6, **caractérisée en ce que** la couronne (HO4) du quatrième train planétaire (RS4) et la roue solaire (SO2) du deuxième train planétaire (RS2) sont connectées l'une à l'autre de manière élastique en rotation.

9. Boîte de vitesses à plusieurs vitesses selon l'une quelconque des revendications précédentes, **caractérisée en ce que** les quatre trains planétaires (RS1, RS2, RS3, RS4) sont réalisés sous forme de trains planétaires à réduction.

10. Boîte de vitesses à plusieurs vitesses selon l'une quelconque des revendications 1 à 9, **caractérisée en ce que** la tige (ST2) du deuxième train planétaire (RS2) est montée radialement sur le boîtier de la boîte de vitesses (GG) ou sur un moyeu fixé au boîtier de la boîte de vitesses, par le biais de l'arbre d'entraînement (AN) ou du premier arbre (1) de la boîte de vitesses.

11. Boîte de vitesses à plusieurs vitesses selon l'une quelconque des revendications 1 à 9, **caractérisée en ce que** la tige (ST2) du deuxième train planétaire (RS2) est montée radialement sur le troisième arbre (3) de la boîte de vitesses.

12. Boîte de vitesses à plusieurs vitesses selon l'une quelconque des revendications précédentes, **caractérisée en ce que**
- la première vitesse de marche avant est obtenue par fermeture du premier, deuxième et troisième élément de changement de vitesse (A, B, C),
- la deuxième vitesse de marche avant est obtenue par fermeture du premier, deuxième et cinquième élément de changement de vitesse (A, B, E),
- la troisième vitesse de marche avant est obtenue par fermeture du deuxième, troisième et cinquième élément de changement de vitesse (B, C, E),
- la quatrième vitesse de marche avant est obtenue par fermeture du deuxième, quatrième et cinquième élément de changement de vitesse (B, D, E) ,
- la cinquième vitesse de marche avant est obtenue par fermeture du deuxième, troisième et quatrième élément de changement de vitesse (B, C, D) ,
- la sixième vitesse de marche avant est obtenue par fermeture du troisième, quatrième et cinquième élément de changement de vitesse (C, D, E),
- la septième vitesse de marche avant est obtenue par fermeture du premier, deuxième et quatrième élément de changement de vitesse (A, C, D) et
- la huitième vitesse de marche avant est obtenue par fermeture du premier, quatrième et cinquième élément de changement de vitesse (A, D, E).

13. Boîte de vitesses à plusieurs vitesses selon l'une quelconque des revendications précédentes, **caractérisée en ce qu'**une vitesse de marche arrière est obtenue par fermeture du premier, deuxième et quatrième élément de changement de vitesse (A, B, D).

14. Boîte de vitesses à plusieurs vitesses selon l'une quelconque des revendications précédentes, **caractérisée en ce que** le quatrième train planétaire (RS4) est engagé centralement dans la direction axiale au maximum par un arbre de la boîte de vitesses, notamment uniquement par l'arbre d'entraînement (AN) ou uniquement par le premier arbre (1) de la boîte de vitesses [Fig. *1+3 - 15+17-28] .*

15. Boîte de vitesses à plusieurs vitesses selon l'une quelconque des revendications précédentes, **caractérisée en ce que** le troisième train planétaire (RS3) est engagé centralement dans la direction axiale au maximum par un arbre de la boîte de vitesses, notamment uniquement par l'arbre d'entraînement (AN) ou uniquement par le premier arbre (1) de la boîte de vitesses [*Fig*. *1+4 - 15+27-28*].

16. Boîte de vitesses à plusieurs vitesses selon l'une quelconque des revendications 1 à 15, **caractérisée en ce que** le premier train planétaire (RS1) est engagé centralement dans la direction axiale au maximum par un arbre de la boîte de vitesses, notamment uniquement par l'arbre d'entraînement (AN) ou uniquement par le premier arbre (1) de la boîte de vitesses [*Fig. 1+4+15+17-22+25-28*]*.*

17. Boîte de vitesses à plusieurs vitesses selon l'une quelconque des revendications 1 à 15, **caractérisée en ce que** le premier train planétaire (RS1) est engagé centralement dans la direction axiale par deux arbres de la boîte de vitesses, notamment par le septième arbre (7) et l'arbre d'entraînement (AN) ou le premier arbre (1) s'étendant en partie centralement à l'intérieur du septième arbre (7) [*Fig. 5-11+14+23+24*]*.*

18. Boîte de vitesses à plusieurs vitesses selon l'une quelconque des revendications précédentes, **caractérisée en ce que** l'arbre d'entraînement (AN) et l'arbre de sortie (AB) ne sont pas disposés coaxialement l'un par rapport à l'autre, en particulier sont disposés parallèlement l'un à l'autre ou suivant un certain angle l'un par rapport à l'autre.

19. Boîte de vitesses à plusieurs vitesses selon l'une quelconque des revendications précédentes, **caractérisée en ce qu'**un entraînement à pignon ou à chaîne prévu dans le flux de forces entre la tige (ST3) du troisième train planétaire (RS3) et l'arbre de sortie (AB), vu spatialement, est disposé au moins en partie du côté du troisième train planétaire (RS3) qui est opposé au groupe de trains planétaires formé par le deuxième et le quatrième train planétaire (RS2, RS4), et **en ce que** le premier élément de changement de vitesse (A), vu spatialement, est disposé du côté de l'entraînement à pignon ou à chaîne qui est opposé au troisième train planétaire (RS3) [*Fig. 1+4-15+17-28*]*.*

20. Boîte de vitesses à plusieurs vitesses selon l'une quelconque des revendications précédentes, **caractérisée en ce qu'**un pignon ou un plateau de l'entraînement à pignon ou à chaîne, connecté à la tige (ST3) du troisième train planétaire (RS3), est disposé axialement entre le troisième train planétaire (RS3) et le premier élément de changement de vitesse (A) [*Fig. 1+4-15+17-22+24-28*].

21. Boîte de vitesses à plusieurs vitesses selon l'une quelconque des revendications précédentes, **caractérisée en ce qu'**un pignon ou un plateau de l'entraînement à pignon ou à chaîne, connecté à la tige (ST3) du troisième train planétaire (RS3), est disposé axialement entre le premier train planétaire (RS1) et le premier élément de changement de vitesse (A) [*Fig. 23*]*.*

22. Boîte de vitesses à plusieurs vitesses selon l'une quelconque des revendications précédentes, **caractérisée en ce que** le deuxième élément de changement de vitesse (B), vu spatialement, est disposé dans une région radialement au-dessus du premier train planétaire (RS1) [*Fig. 1+4-9+15+17-28*].

23. Boîte de vitesses à plusieurs vitesses selon l'une quelconque des revendications précédentes, **caractérisée en ce que** le deuxième élément de changement de vitesse (B), vu spatialement, est disposé dans une région radialement au-dessus du troisième élément de changement de vitesse (C) *[Fig. 8].*

24. Boîte de vitesses à plusieurs vitesses selon l'une quelconque des revendications précédentes, **caractérisée en ce que** le troisième élément de changement de vitesse (C), vu spatialement, est disposé à côté du premier train planétaire (RS1) *[Fig. 1+4-7+9-15+17+19+26-28] .*

25. Boîte de vitesses à plusieurs vitesses selon l'une quelconque des revendications 1 à 24, **caractérisée en ce que** le troisième élément de changement de vitesse (C), vu spatialement, est disposé dans une région axialement entre le premier train planétaire (RS1) et le quatrième train planétaire (RS4) *[Fig. 1+12+17-22+25+26] .*

26. Boîte de vitesses à plusieurs vitesses selon l'une quelconque des revendications 1 à 24, **caractérisée en ce que** le troisième élément de changement de vitesse (C), vu spatialement, est disposé du côté du premier train planétaire (RS1) qui est opposé au quatrième train planétaire (RS4) *[Fig. 4+7-11+14+15+27+28].*

27. Boîte de vitesses à plusieurs vitesses selon l'une quelconque des revendications 1 à 24, **caractérisée en ce que** le troisième élément de changement de vitesse (C), vu spatialement, est disposé du côté du quatrième train planétaire (RS4) qui est opposé au premier train planétaire (RS1) *[Fig. 23+24].*

28. Boîte de vitesses à plusieurs vitesses selon l'une quelconque des revendications 1 à 24, **caractérisée en ce que** le troisième élément de changement de vitesse (C), vu spatialement, est disposé dans une région radialement au-dessus du premier train planétaire (RS1) *[ Fig. 8]*.

29. Boîte de vitesses à plusieurs vitesses selon l'une quelconque des revendications 1 à 28, **caractérisée en ce que** le quatrième élément de changement de vitesse (D), vu spatialement, est disposé dans une région axialement entre le troisième train planétaire (RS3) et le groupe de trains planétaires formé par le deuxième et le quatrième train planétaire (RS2, RS4) *[Fig. 1+4-15+17-19+23+27+28] .*

30. Boîte de vitesses à plusieurs vitesses selon l'une quelconque des revendications 1 à 28, **caractérisée en ce que** le quatrième élément de changement de vitesse (D), vu spatialement, est disposé dans une région axialement entre le premier train planétaire (RS1) et le groupe de trains planétaires formé par le deuxième et le quatrième train planétaire (RS2, RS4) *[Fig. 21+22+24+26].*

31. Boîte de vitesses à plusieurs vitesses selon l'une quelconque des revendications 1 à 28, **caractérisée en ce qu'**un paquet de lamelles du quatrième élément de changement de vitesse (D), vu spatialement, est disposé dans une région radialement au-dessus du deuxième train planétaire (RS2), et **en ce qu'**un dispositif à servocommande pour l'actionnement du paquet de lamelles du quatrième élément de changement de vitesse (D) est disposé, vu spatialement, au moins essentiellement axialement entre le troisième train planétaire (RS3) et le groupe de trains planétaires formé par le deuxième et le quatrième train planétaire (RS2, RS4) *[Fig. 6].*

32. Boîte de vitesses à plusieurs vitesses selon l'une quelconque des revendications 1 à 28, **caractérisée en ce qu'**un paquet de lamelles du quatrième élément de changement de vitesse (D), vu spatialement, est disposé dans une région axialement entre le troisième train planétaire (RS3) et le groupe de trains planétaires formé par le deuxième et le quatrième train planétaire (RS2, RS4), et **en ce qu'**un dispositif à servocommande pour l'actionnement du paquet de lamelles du quatrième élément de changement de vitesse (D) est disposé, vu spatialement, au moins essentiellement radialement au-dessus du deuxième train planétaire (RS2) *[Fig. 7-11].*

33. Boîte de vitesses à plusieurs vitesses selon l'une quelconque des revendications 1 à 28, **caractérisée en ce qu'**un paquet de lamelles (400) du quatrième élément de changement de vitesse (D), vu spatialement, est disposé dans une région axialement entre le troisième train planétaire (RS3) et le groupe de trains planétaires formé par le deuxième et le quatrième train planétaire (RS2, RS4), et **en ce qu'**un dispositif à servocommande (430) pour l'actionnement du paquet de lamelles (400) du quatrième élément de changement de vitesse (D) est disposé, vu spatialement, au moins essentiellement dans une région axialement entre le premier train planétaire (RS1) et le groupe de trains planétaires formé par le deuxième et le quatrième train planétaire (RS2, RS4), un élément d'actionnement du dispositif à servocommande (430) du quatrième élément de changement de vitesse (D) agissant sur le paquet de lamelles (400) du quatrième élément de changement de vitesse (D) venant en prise radialement par le dessus dans la direction axiale avec le deuxième train planétaire (RS2) *[Fig. 12+13+20+25] .*

34. Boîte de vitesses à plusieurs vitesses selon l'une quelconque des revendications 1 à 33, **caractérisée en ce que** le cinquième élément de changement de vitesse (E), vu spatialement, est disposé dans une région axialement entre le premier train planétaire (RS1) et le groupe de trains planétaires formé par le deuxième et le quatrième train planétaire (RS2, RS4) *[Fig. 1+4+12+13+17-22+26]*.

35. Boîte de vitesses à plusieurs vitesses selon l'une quelconque des revendications 1 à 33, **caractérisée en ce que** le cinquième élément de changement de vitesse (E) ou au moins un paquet de lamelles (500) du cinquième élément de changement de vitesse (E), vu spatialement, est disposé du côté du premier train planétaire (RS1) qui est opposé au groupe de trains planétaires formé par le deuxième et le quatrième train planétaire (RS2, RS4) *[Fig. 5-11+14] .*

36. Boîte de vitesses à plusieurs vitesses selon l'une quelconque des revendications 1 à 33, **caractérisée en ce que** le troisième et le cinquième élément de changement de vitesse (C, E) forment un module avec un support de lamelles commun, le paquet de lamelles (300) du troisième élément de changement de vitesse (C), vu spatialement, étant disposé essentiellement radialement au-dessus du paquet de lamelles (500) du cinquième élément de changement de vitesse (E) *[Fig. 5-7+9+10+14+19].*

37. Boîte de vitesses à plusieurs vitesses selon l'une quelconque des revendications 1 à 35, **caractérisée en ce que** le troisième et le cinquième élément de changement de vitesse (C, E) forment un module ayant un support de lamelles commun, le paquet de lamelles (500) du cinquième élément de changement de vitesse (E), vu spatialement, étant disposé essentiellement radialement au-dessus du paquet de lamelles (300) du troisième élément de changement de vitesse (C) *[Fig. 18+20-24+26] .*

38. Boîte de vitesses à plusieurs vitesses selon l'une quelconque des revendications 1 à 35, **caractérisée en ce que** le troisième et le cinquième élément de changement de vitesse (C, E) forment un module ayant un support de lamelles commun, les paquets de lamelles (300, 500) du troisième et du cinquième élément de changement de vitesse (C, D) étant disposés, vus spatialement, axialement les uns à côté des autres *[Fig. 11].*

39. Boîte de vitesses à plusieurs vitesses selon les revendications 36, 37 ou 38, **caractérisée en ce que** le module formé du troisième et du cinquième élément de changement de vitesse (C, E) est disposé axialement à côté du groupe de trains planétaires formé du deuxième et du quatrième train planétaire (RS2, RS4) et/ou axialement à côté du premier train planétaire (RS1) *[Fig. 18-24+26]*.

40. Boîte de vitesses à plusieurs vitesses selon les revendications 36, 37 ou 38, **caractérisée en ce que** le module formé du troisième et du cinquième élément de changement de vitesse (C, E) est disposé axialement à côté du premier train planétaire (RS1) *[Fig. 5-7+9-11+14].*

41. Boîte de vitesses à plusieurs vitesses selon l'une quelconque des revendications 1 à 35, **caractérisée en ce que** le quatrième et le cinquième élément de changement de vitesse (D, E) forment un module avec un support de lamelles commun, le paquet de lamelles (400) du quatrième élément de changement de vitesse (D), vu spatialement, étant disposé essentiellement radialement au-dessus d'un paquet de lamelles (500) du cinquième élément de changement de vitesse (E) *[Fig. 15+26].*

42. Boîte de vitesses à plusieurs vitesses selon l'une quelconque des revendications 1 à 35, **caractérisée en ce que** le quatrième et le cinquième élément de changement de vitesse (D, E) forment un module avec un support de lamelles commun, le paquet de lamelles (500) du cinquième élément de changement de vitesse (E), vu spatialement, étant disposé essentiellement radialement au-dessus du paquet de lamelles (400) du quatrième élément de changement de vitesse (D) *[Fig. 27].*

43. Boîte de vitesses à plusieurs vitesses selon l'une quelconque des revendications 1 à 35, **caractérisée en ce que** le quatrième et le cinquième élément de changement de vitesse (D, E) forment un module avec un support de lamelles commun, les paquets de lamelles (400, 500) du quatrième et du cinquième élément de changement de vitesse (D, E), vus spatialement, étant disposés axialement l'un à côté de l'autre *[Fig. 28].*

44. Boîte de vitesses à plusieurs vitesses selon les revendications 41, 42 ou 43, **caractérisée en ce que** le module formé du quatrième et du cinquième élément de changement de vitesse (D, E) est disposé axialement à côté du groupe de trains planétaires formé par le deuxième et le quatrième train planétaire (RS2, RS4) et/ou axialement à côté du troisième train planétaire (RS3) *[Fig. 15+26-28] .*

45. Boîte de vitesses à plusieurs vitesses selon l'une quelconque des revendications 1 à 44, **caractérisée en ce que**
- le premier arbre (1) s'étend en partie centralement à l'intérieur du troisième arbre (3) et en partie centralement à l'intérieur du cinquième arbre (5),
- le troisième arbre (3) s'étend en partie centralement à l'intérieur du huitième arbre (8) et en partie centralement à l'intérieur du deuxième arbre (2),
- le cinquième arbre (5) s'étend centralement à l'intérieur du sixième arbre (6) et
- le sixième arbre (6) vient en prise au moins en partie autour du quatrième élément de changement de vitesse (D) et du deuxième train planétaire (RS2) dans la direction axiale et la direction radiale *[Fig. 1+9+5+15+17-19+27+28].*

46. Boîte de vitesses à plusieurs vitesses selon l'une quelconque des revendications 1 à 44, **caractérisée en ce que**
- le premier arbre (1) s'étend en partie centralement à l'intérieur du troisième arbre (3) et en partie centralement à l'intérieur du cinquième arbre (5),
- le troisième arbre (3) s'étend en partie centralement à l'intérieur du huitième arbre (8) et en partie centralement à l'intérieur du deuxième arbre (2),
- le cinquième arbre (5) s'étend centralement à l'intérieur du huitième arbre (8),
- le huitième arbre (8) s'étend centralement à l'intérieur du sixième arbre (6), et
- le sixième arbre (6) vient en prise au moins en partie autour du quatrième élément de changement de vitesse (D) et du deuxième train planétaire (RS2) dans la direction axiale et radiale *[Fig. 12+13+20].*

47. Boîte de vitesses à plusieurs vitesses selon l'une quelconque des revendications 1 à 44, **caractérisée en ce que**
- le premier arbre (1) s'étend en partie centralement à l'intérieur du troisième arbre (3) et en partie centralement à l'intérieur du cinquième arbre (5),
- le troisième arbre (3) s'étend en partie centralement à l'intérieur du huitième arbre (8) et en partie centralement à l'intérieur du deuxième arbre (2),
- le cinquième arbre (5) s'étend centralement à l'intérieur du huitième arbre (8),
- le huitième arbre (8) s'étend centralement à l'intérieur du deuxième arbre (2),
- le deuxième arbre (2) s'étend en partie centralement à l'intérieur du sixième arbre (6), et
- le sixième arbre (6) vient en prise au moins en partie autour du quatrième élément de changement de vitesse (D) et du deuxième train planétaire (RS2) dans la direction axiale et la direction radiale *[Fig. 26]*.

48. Boîte de vitesses à plusieurs vitesses selon l'une quelconque des revendications 1 à 44, **caractérisée en ce que**
- le premier arbre (1) s'étend en partie centralement à l'intérieur du troisième arbre (3) et en partie centralement à l'intérieur du septième arbre (7),
- le troisième arbre (3) s'étend en partie centralement à l'intérieur du huitième arbre (8) et en partie centralement à l'intérieur du deuxième arbre (2),
- le septième arbre (7) s'étend en partie centralement à l'intérieur du cinquième arbre (5),
- le cinquième arbre (5) s'étend centralement à l'intérieur du sixième arbre (6), et
- le sixième arbre (6) vient en prise au moins en partie autour du quatrième élément de changement de vitesse (D) et du deuxième train planétaire (RS2) dans la direction axiale et la direction radiale *[Fig. 6+7+8+9+10+11+14+17+18+19] .*

49. Boîte de vitesses à plusieurs vitesses selon l'une quelconque des revendications 1 à 44, **caractérisée en ce que**
- le premier arbre (1) s'étend en partie centralement à l'intérieur du troisième arbre (3) et en partie centralement à l'intérieur du septième arbre (7),
- le troisième arbre (3) s'étend en partie centralement à l'intérieur du huitième arbre (8) et en partie centralement à l'intérieur du deuxième arbre (2),
- le septième arbre (7) s'étend en partie centralement à l'intérieur du cinquième arbre (5),
- le cinquième arbre (5) s'étend en partie centralement à l'intérieur du huitième arbre (8).
- le huitième arbre (8) s'étend centralement à l'intérieur du sixième arbre (6), et
- le sixième arbre (6) vient en prise au moins en partie autour du quatrième élément de changement de vitesse (D) et du deuxième train planétaire (RS2) dans la direction axiale et la direction radiale *[Fig. 25]*.

50. Boîte de vitesses à plusieurs vitesses selon l'une quelconque des revendications 1 à 44, **caractérisée en ce que**
- le premier arbre (1) s'étend en partie centralement à l'intérieur du troisième arbre (3) et en partie centralement à l'intérieur du septième arbre (7),
- le troisième arbre (3) s'étend en partie centralement à l'intérieur du huitième arbre (8) et en partie centralement à l'intérieur du deuxième arbre (2),
- le septième arbre (7) s'étend en partie centralement à l'intérieur du cinquième arbre (5),
- le cinquième arbre (5) s'étend en partie centralement à l'intérieur du huitième arbre (8),
- le huitième arbre (8) s'étend centralement à l'intérieur du deuxième arbre (2),
- le deuxième arbre (2) s'étend en partie centralement à l'intérieur du sixième arbre (6), et
- le sixième arbre (6) vient en prise au moins en partie autour du quatrième élément de changement de vitesse (D) et du deuxième train planétaire (RS2) dans la direction axiale et la direction radiale *[Fig. 21+22+26] .*

51. Boîte de vitesses à plusieurs vitesses selon l'une quelconque des revendications précédentes, **caractérisée en ce que** le sixième arbre (6) vient en prise au moins en partie autour du quatrième et du cinquième élément de changement de vitesse (D, E) ainsi que du deuxième train planétaire (RS2) dans la direction axiale et la direction radiale *[Fig. 1+4+12+13+15+17+18+19+20+21+22+25+26+27+28].*

52. Boîte de vitesses à plusieurs vitesses selon l'une quelconque des revendications précédentes, **caractérisée en ce que** le sixième arbre (6) vient en prise au moins en partie autour du troisième, quatrième et cinquième élément de changement de vitesse (C, D, E) ainsi que du deuxième train planétaire (RS2) dans la direction axiale et la direction radiale *[Fig. 1+12+13+17+1.8+19+20+21+22+ 25+26] .*

53. Boîte de vitesses à plusieurs vitesses selon l'une quelconque des revendications précédentes, **caractérisée en ce qu'**une portion du premier arbre (1) vient en prise au moins en partie autour du cinquième élément de changement de vitesse (E), dans la direction axiale et la direction radiale *[Fig. 5+6+7+8+9+10+14+17+19].*

54. Boîte de vitesses à plusieurs vitesses selon l'une quelconque des revendications 1 à 44, **caractérisée en ce que**
- le premier arbre (1) s'étend en partie centralement à l'intérieur du cinquième arbre (5) et en partie centralement à l'intérieur du septième arbre (7),
- le septième arbre (7) s'étend centralement à l'intérieur du cinquième arbre (5),
- le huitième arbre (8) s'étend centralement à l'intérieur du cinquième arbre (5),
- le troisième arbre (3) s'étend en partie centralement à l'intérieur du huitième arbre (8) et en partie centralement à l'intérieur du deuxième arbre (2),
- le deuxième arbre (2) s'étend en partie centralement à l'intérieur du cinquième arbre (5) et en partie centralement à l'intérieur du sixième arbre (6), et
- le cinquième arbre (5) vient en prise au moins en partie autour du troisième, quatrième et cinquième élément de changement de vitesse (C, D, E) et du deuxième train planétaire (RS2) dans la direction axiale et radiale *[Fig*. *23+24]*.

55. Boîte de vitesses à plusieurs vitesses selon l'une quelconque des revendications 1 à 44 ou 54, **caractérisée en ce que** le sixième arbre (6) s'étend centralement à l'intérieur du cinquième arbre (5), et **en ce que** le cinquième arbre (5) vient en prise dans la direction axiale par-dessus le troisième train planétaire (RS3) *[Fig. 23].*

56. Boîte de vitesses à plusieurs vitesses selon l'une quelconque des revendications 1 à 44 ou 54, **caractérisée en ce qu'**une portion du cinquième arbre (5) s'étend centralement à l'intérieur du sixième arbre (6) *[Fig. 24+27+28] .*

57. Boîte de vitesses à plusieurs vitesses selon l'une quelconque des revendications 1 à 56, **caractérisée en ce qu'**une portion du cinquième arbre (5) vient en prise complètement dans la direction axiale par-dessus le deuxième train planétaire (RS2) *[Fig. 23+24+25+27+28].*

58. Boîte de vitesses à plusieurs vitesses selon l'une quelconque des revendications 1 à 57, **caractérisée en ce qu'**un entraînement de la boîte de vitesses est disposé du côté du boîtier de la boîte de vitesses (GG) opposé au premier train planétaire (RS1).

59. Boîte de vitesses à plusieurs vitesses selon l'une quelconque des revendications 1 à 57, **caractérisée en ce qu'**un entraînement de la boîte de vitesses est disposé du côté du boîtier de la boîte de vitesses (GG) opposé au troisième train planétaire (RS3).

60. Boîte de vitesses à plusieurs vitesses selon l'une quelconque des revendications précédentes, **caractérisée en ce que** l'arbre d'entraînement (AN) peut être séparé d'un moteur d'entraînement du véhicule automobile par un élément d'embrayage.

61. Boîte de vitesses à plusieurs vitesses selon l'une quelconque des revendications précédentes, **caractérisée en ce qu'**un élément de démarrage externe est disposé dans la direction du flux de forces derrière la boîte de vitesses, l'arbre d'entraînement (AN) étant connecté de manière solidaire en rotation ou élastique en rotation à un vilebrequin du moteur d'entraînement.

62. Boîte de vitesses à plusieurs vitesses selon la revendication 60 ou 61, **caractérisée en ce que** l'élément d'embrayage ou l'élément de démarrage est réalisé sous forme de convertisseur hydrodynamique ou d'embrayage hydraulique ou d'embrayage de démarrage à sec ou d'embrayage de démarrage humide ou d'embrayage à poudre magnétique ou d'embrayage à force centrifuge.

63. Boîte de vitesses à plusieurs vitesses selon l'une quelconque des revendications précédentes, **caractérisée en ce qu'**un démarrage du véhicule automobile a lieu au moyen d'un élément de changement de vitesse interne à la boîte de vitesses, l'arbre d'entraînement (AN) étant connecté constamment de manière solidaire en rotation ou élastique en rotation au vilebrequin du moteur d'entraînement.

64. Boîte de vitesses à plusieurs vitesses selon la revendication 63, **caractérisée en ce que** le démarrage du véhicule automobile s'effectue dans la direction de marche avant et de marche arrière, au moyen d'un même élément de changement de vitesse interne à la boîte de vitesses, en particulier au moyen du premier ou du deuxième élément de changement de vitesse (A, B).

65. Boîte de vitesses à plusieurs vitesses selon l'une quelconque des revendications précédentes, **caractérisée en ce que** qu'on dispose entre le moteur d'entraînement et la boîte de vitesses un amortisseur d'oscillations de torsion.

66. Boîte de vitesses à plusieurs vitesses selon l'une quelconque des revendications précédentes, **caractérisée en ce que** l'on peut monter sur chaque arbre (AN, AB, 1, 2, 3, 4, 5, 6, 7, 8) de la boîte de vitesses, un frein sans frottement ou une sortie auxiliaire pour l'entraînement d'unités supplémentaires ou une machine électrique servant de générateur et/ou de machine d'entraînement supplémentaire.

67. Boîte de vitesses à plusieurs vitesses selon l'une quelconque des revendications précédentes, **caractérisée en ce que** l'on prévoit comme éléments de changement de vitesse (A, B, C, D, E) des embrayages à engagement par friction ou des freins à engagement par friction - notamment des embrayages à lamelles, des freins à bande et/ou des embrayages coniques - et/ou des embrayages à engagement par correspondance géométrique ou des freins à engagement par correspondance géométrique - en particulier des embrayages coniques et/ou des embrayages à griffes.
